(19) Europäisches Patentamt
European Patent Office
Office européen des brevets

(11) **EP 3 707 839 B1**

(12) **EUROPÄISCHE PATENTSCHRIFT**

(45) Veröffentlichungstag und Bekanntmachung des Hinweises auf die Patenterteilung:
**24.09.2025   Patentblatt 2025/39**

(21) Anmeldenummer: **18808237.4**

(22) Anmeldetag: **09.11.2018**

(51) Internationale Patentklassifikation (IPC):
*H04B 1/713* (2011.01)   *H04L 1/00* (2006.01)
*H04L 1/04* (2006.01)   *H04L 12/28* (2006.01)
*H04L 12/46* (2006.01)   *H04L 47/38* (2022.01)
*H04W 28/02* (2009.01)   *H04L 1/08* (2006.01)
*H04L 1/1829* (2023.01)   *H04L 67/12* (2022.01)
*H04W 4/38* (2018.01)

(52) Gemeinsame Patentklassifikation (CPC):
**H04B 1/713; H04L 1/0041; H04L 1/0045;
H04L 1/04; H04L 12/2803; H04L 12/2816;
H04L 12/282; H04L 12/4625; H04L 47/38;
H04W 28/0268;** H04L 1/0084; H04L 1/08;
H04L 1/1854; H04L 67/12; H04W 4/38

(86) Internationale Anmeldenummer:
**PCT/EP2018/080775**

(87) Internationale Veröffentlichungsnummer:
**WO 2019/092184 (16.05.2019 Gazette 2019/20)**

(54) **DATENSENDER UND DATENEMPFÄNGER MIT GERINGER LATENZ FÜR DAS TELEGRAM-SPLITTING-ÜBERTRAGUNGSVERFAHREN**

DATA TRANSMITTER AND DATA RECEIVER HAVING LOW LATENCY FOR THE TELEGRAM-SPLITTING TRANSMISSION METHOD

ÉMETTEUR DE DONNÉES ET RÉCEPTEUR DE DONNÉES À FAIBLE LATENCE POUR LE PROCÉDÉ DE TRANSMISSION PAR DIVISION DE TÉLÉGRAMME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **10.11.2017   DE 102017220061**

(43) Veröffentlichungstag der Anmeldung:
**16.09.2020   Patentblatt 2020/38**

(73) Patentinhaber: **Fraunhofer-Gesellschaft zur Förderung
der angewandten Forschung e.V.
80686 München (DE)**

(72) Erfinder:
• **KILIAN, Gerd**
  **91058 Erlangen (DE)**
• **BERNHARD, Josef**
  **91058 Erlangen (DE)**

• **ROHMER, Günter**
  **91058 Erlangen (DE)**
• **ROTH, Maximilian**
  **91058 Erlangen (DE)**
• **NACHTRAB, Frank**
  **91058 Erlangen (DE)**
• **KNEISSL, Jakob**
  **91058 Erlangen (DE)**
• **WECHSLER, Johannes**
  **91058 Erlangen (DE)**
• **SCHLICHT, Michael**
  **91058 Erlangen (DE)**
• **MEYER, Raimund**
  **91058 Erlangen (DE)**
• **OBERNOSTERER, Frank**
  **91058 Erlangen (DE)**

(74) Vertreter: **Schlenker, Julian et al**
**Schoppe, Zimmermann, Stöckeler**
**Zinkler, Schenk & Partner mbB**
**Patentanwälte**
**Radlkoferstraße 2**
**81373 München (DE)**

(56) Entgegenhaltungen:
**DE-A1- 10 164 665**

- **KILIAN G ET AL: "Increasing Transmission**
**Reliability for Telemetry Systems Using**
**Telegram Splitting", IEEE TRANSACTIONS ON**
**COMMUNICATIONS,, vol. 63, no. 3, 1 March 2015**
**(2015-03-01), pages 949 - 961, XP002763749**

## Beschreibung

Ausführungsbeispiele beziehen sich auf einen Datensender und einen Datenempfänger für das Telegram-Splitting-Übertragungsverfahren, und im speziellen, auf einen Datensender und Datenempfänger mit geringer Latenz für das Telegram-Splitting-Übertragungsverfahren. Manche Ausführungsbeispiele beziehen sich auf einen Übertragungsmodus mit geringer Latenz für Telegram-Splitting.

Es sind Systeme zur Übertragung von Daten von vielen Sensorknoten zu einer Basisstation/mehreren Basisstationen oder zur Übertragung von Daten von einer Basisstation/mehreren Basisstationen zu vielen Sensorknoten bekannt. Dies findet zum Beispiel im IoT (IoT = Internet of Things; dt. Internet der Dinge) Anwendung. Dort werden beispielsweise Sensordaten (z. B. von Straßenlaternen oder Parksensoren) zu einer Basisstation gesendet, welche die Daten im Anschluss verarbeitet und dem Nutzer einen Mehrwert zur Verfügung stellt (z. B. Routenführung zu einem freien Parkplatz).

Typischerweise umfassen solche Sensornetze sehr viele Sensorknoten, welche mit sehr kleinen Batterien ausgestattet sind. Um jedoch eine hohe Lebensdauer zu erreichen erfolgt der Kanalzugriff in der Regel nicht koordiniert, d. h. jeder Sensorknoten greift zu zufälligen Zeitpunkten auf den Kanal zu. Dieses Konzept wird auch ALOHA Zugriffsverfahren oder in einer Unterform auch Slotted-ALOHA Zugriffsverfahren genannt.

Durch die hohe Anzahl an Teilnehmern und dem nicht koordinierten Kanalzugriff kommt es bei der Übertragung zu Überlagerungen (Störungen) zwischen den Aussendungen der verschiedenen Sensorknoten. Zusätzlich findet die Übertragung häufig in den sog. ISM- oder SRD-Bändern statt (ISM = Industrial, Scientific and Medical; Industrie, Wissenschaft und Medizin; SRD = Short Range Devices; dt. Kurzstreckenfunk), welche auch von weiteren Systemen (z. B. WLAN, Bluetooth, Funkschlüssel) genutzt werden. Diese Systeme versuchen zusätzliche Störungen in der Übertragung.

Es ist das Telegram-Splitting-Übertragungsverfahren bekannt, welches unter den oben genannten Vorrausetzungen die Übertragungssicherheit bei der Übermittlung von Telegrammen in diesen Kanälen deutlich erhöht. Im Detail nutzt das Telegram-Splitting-Übertragungsverfahren, welches in der EP 2 751 526 B1 beschrieben ist, bestimmte Zeit-Frequenz-Sprungmuster zur Übertragung von Daten über den Funkkanal. Um ein Paket erfolgreich decodieren zu können, ist es notwendig, dass das Sprungmuster das zum Versenden verwendet wurde am Empfänger bekannt ist. Um dies zu gewährleisten sind für Telegram-Splitting-Netzwerke Zeit-Frequenz-Sprungmuster definiert die allen Teilnehmern bekannt sind.

Das Telegram-Splitting-Übertragungsverfahren wird ferner in der WO 2015/128385 A1, WO 2017/017257 A1 und WO 2017/167366 A1 sowie in den Veröffentlichungen [G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013] und [G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015] beschrieben.

Nachteil des Telegram-Splitting-Übertragungsverfahrens ist jedoch die hohe Latenzzeit, welche durch die Pausen zwischen den einzelnen Teilpaketen der Übertragung entsteht.

Im Internet der Dinge (IoT) gibt es eine Vielzahl an Anwendungsmöglichkeiten; bei einigen Anwendungen ist die Latenzzeit des Systems eher zweitrangig (z. B. Auslesen von Wasserzählern), jedoch gibt es auch Systeme, bei denen die Latenz eine wichtige Rolle spielt (z. B. Rohrbruch oder Sicherheitsüberwachung von Einsatzkräften in Krisengebieten).

Für diese zweite Klasse von Systemen, bei denen die Latzenzzeit eine wichtige Rolle spielt, gibt es bisher noch keine passende Lösung für stromsparende Sensornetzwerke.

Die DE 101 64 665 A1 beschreibt eine digitale Zeitteilungs-Radio-Rahmenstruktur mit Zeit- und Frequenz-Diversity. Jedes Paket von Daten wird in aufeinanderfolgenden Frequenzsprüngen zweimal übertragen, so dass sich die redundante Übertragung sowohl hinsichtlich der Zeit als auch der Frequenz von der primären Übertragung unterscheidet. Ein Kommunikationssystem, das die Rahmenstruktur verwendet, kann so konfiguriert werden, dass es dynamisch zwischen einem vollständigen Diversmodus, einem asynchronen und einem nicht-diversen Betriebsmodus umgeschaltet wird. Der Betriebsmodus kann basierend auf einem oder mehreren Betriebsparametern gewählt werden, wie Batterieleistung oder detektierte Interferenz. Wenn eine Fehlerkorrektur implementiert ist und eine primäre Übertragung ohne Fehler empfangen wird, können Systemvorrichtungen den Schaltungsaufbau abschalten, um den Leistungsverbrauch zu reduzieren.

Der vorliegenden Erfindung liegt somit die Aufgabe zugrunde, die Latenzzeit in Telegram-Splitting basierten Kommunikationsnetzwerken zu verbessern.

Diese Aufgabe wird durch die unabhängigen Patentansprüche gelöst.

Ausführungsbeispiele der vorliegenden Erfindung werden bezugnehmend auf die beiliegenden Figuren näher beschrieben. Es zeigen:

Fig. 1     ein schematisches Blockschaltbild eines Systems mit einem Datensender und einem Datenempfänger;

Fig. 2 in einem Diagramm eine beispielhafte Belegung des Übertragungskanals bei der Übertragung einer Mehrzahl von Sub-Datenpaketen entsprechend einem Zeit- und Frequenzsprungmuster;

Fig. 3a in einem Diagramm eine beispielhafte Belegung des Übertragungskanals bei der Übertragung der ersten Mehrzahl von Sub-Datenpaketen entsprechend des ersten Sprungmusters in der Zeit und Frequenz verteilt;

Fig. 3b in einem Diagramm eine beispielhafte Belegung des Übertragungskanals bei der Übertragung der zweiten Mehrzahl von Sub-Datenpaketen entsprechend des zweiten Sprungmusters in der Zeit und Frequenz verteilt;

Fig. 4a in einem Diagramm eine beispielhafte Belegung des Übertragungskanals bei der Übertragung der ersten Mehrzahl von Sub-Datenpaketen entsprechend des ersten Sprungmusters in der Zeit und Frequenz verteilt;

Fig. 4b in einem Diagramm eine beispielhafte Belegung des Übertragungskanals bei der Übertragung der zweiten Mehrzahl von Sub-Datenpaketen entsprechend des zweiten Sprungmusters in der Zeit und Frequenz verteilt;

Fig. 5 in einem Diagramm eine beispielhafte Belegung des Übertragungskanals bei der Übertragung von kanalcodierten Daten mittels der Mehrzahl von Sub-Datenpaketen, wobei Sendpausen zwischen den Sub-Datenpaketen einer ersten Gruppe von Sub-Datenpaketen kleiner sein als Sendepausen zwischen Sub-Datenpaketen einer zweiten Gruppe von Sub-Datenpaketen;

Fig. 6 in einem Diagramm eine beispielhafte Belegung des Übertragungskanals bei der Übertragung von kanalcodierten Daten mittels der Mehrzahl von Sub-Datenpaketen, wobei Sendpausen zwischen den Sub-Datenpaketen einer ersten Gruppe von Sub-Datenpaketen kleiner sind als Sendepausen zwischen Sub-Datenpaketen einer zweiten Gruppe von Sub-Datenpaketen, und wobei Sendpausen zwischen den Sub-Datenpaketen der zweiten Gruppe von Sub-Datenpaketen mit zunehmender Anzahl an gesendeten Sub-Datenpaketen ansteigen;

Fig. 7 in einem Diagramm eine beispielhafte Belegung des Übertragungskanals bei der Übertragung von kanalcodierten Daten mittels einer Mehrzahl von Sub-Datenpaketen unter Verwendung eines ersten Sprungmusters und wiederholt unter Verwendung eines zweiten Sprungmusters;

Fig. 8 in einem Diagramm eine beispielhafte Belegung des Übertragungskanals bei der Übertragung der Mehrzahl von Sub-Datenpaketen unter Verwendung eines Sprungmusters, das sich über zwei separate Frequenzbänder erstreckt;

Fig. 9 in einem Diagramm eine beispielhafte Belegung des Übertragungskanals bei der Übertragung der Mehrzahl von Sub-Datenpaketen unter Verwendung des ersten Sprungmusters zweifach in zwei separaten Frequenzbändern und wiederholt unter Verwendung des zweiten Sprungmusters zweifach in zwei separaten Frequenzbändern;

Fig. 10 in einem Diagramm eine beispielhafte Belegung des Übertragungskanals bei der Übertragung der Mehrzahl von Sub-Datenpaketen unter Verwendung des ersten Sprungmusters und wiederholt unter Verwendung des zweiten Sprungmusters, wobei Sub-Datenpaket, die entsprechend des ersten Sprungmusters übertragen werden zwischen Sub-Datenpaketen, die entsprechend des zweiten Sprungmusters übertragen werden, angeordnet sind;

Fig. 11 in einem Diagramm eine beispielhafte Belegung des Übertragungskanals bei einer Übertragung der ersten Downlink-Nachricht zeitlich synchronisiert zu einer Übertragung der ersten Mehrzahl von Sub-Datenpaketen entsprechend des ersten Sprungmusters Vergleich zu einer Belegung des Übertragungskanals bei einer Übertragung der zweiten Downlink-Nachricht zeitlich synchronisiert zu einer Übertragung der zweiten Mehrzahl von Sub-Datenpaketen entsprechend des zweiten Sprungmusters;

Fig. 12 in einem Diagramm eine beispielhafte Belegung des Übertragungskanals bei einer Übertragung einer Empfangsbestätigung aufgeteilt auf eine Mehrzahl von Sub-Datenpaketen zeitlich verschachtelt zu der Übertragung der ersten Mehrzahl von Sub-Datenpaketen entsprechend des zweiten Sprungmusters im Vergleich zu einer Belegung des Übertragungskanals bei einer Übertragung einer Empfangsbestätigung aufgeteilt auf eine Mehrzahl von Sub-Datenpaketen zeitlich nach der Übertragung der ersten Mehrzahl von Sub-Datenpaketen entsprechend des zweiten Sprungmusters;

Fig. 13    in einem Diagramm eine beispielhafte Belegung des Übertragungskanals bei der Übertragung der ersten Mehrzahl von Sub-Datenpaketen entsprechend des ersten Sprungmusters, der Übertragung der zweiten Mehrzahl von Sub-Datenpaketen entsprechend des zweiten Sprungmusters und der Übertragung einer Empfangsbestätigung aufgeteilt auf eine Mehrzahl von Sub-Datenpaketen zeitlich verschachtelt zu der Übertragung der zweiten Mehrzahl von Sub-Datenpaketen entsprechend des zweiten Sprungmusters;

Fig. 14    in einem Diagramm eine beispielhafte Belegung des Übertragungskanals bei der Übertragung der ersten Mehrzahl von Sub-Datenpaketen entsprechend des ersten Sprungmusters derart in der Zeit und der Frequenz verteilt, dass sich Sub-Datenpakete auf unterschiedlichen Frequenzen vollständig zeitlich überlappen;

Fig. 15    in einem Diagramm eine beispielhafte Belegung des Übertragungskanals bei der Übertragung der ersten Mehrzahl von Sub-Datenpaketen entsprechend des ersten Sprungmusters derart in der Zeit und der Frequenz verteilt, dass sich Sub-Datenpakete 162 auf unterschiedlichen Frequenzen teilweise überlappen;

Fig. 16    in einem Diagramm eine beispielhafte Belegung des Übertagungskanals bei der Übertragung von Daten einer ersten Klasse unter Verwendung eines Datenpakets und wiederholt unter Verwendung einer Mehrzahl von Sub-Datenpaketen entsprechend eines ersten Sprungmusters in der Zeit und der Frequenz verteilt;

Fig. 17    in einem Diagramm eine Belegung des Übertragungskanals bei der Übertragung von Daten einer ersten Klasse unter Verwendung eines Datenpakets und wiederholt unter Verwendung eines weiteren Datenpakets und wiederholt unter Verwendung einer Mehrzahl von Sub-Datenpaketen, die entsprechend eines Sprungmusters in der Zeit und Frequenz verteilt sind, wobei das weitere Datenpaket und die Mehrzahl von Sub-Datenpaketen derart verschachtelt sind, dass das weitere Datenpaket zeitlich zwischen zwei der Mehrzahl von Sub-Datenpaketen angeordnet ist;

Fig. 18    in einem Diagramm eine beispielhafte Belegung des Übertagungskanals bei der Übertragung von Daten einer ersten Klasse unter Verwendung eines Datenpakets und wiederholt unter Verwendung einer Mehrzahl von Sub-Datenpaketen entsprechend eines ersten Sprungmusters in der Zeit und Frequenz verteilt, und einer Übertragung einer Empfangsbestätigung in einem zeitlichen Abstand zwischen dem Datenpaket und der Mehrzahl von Sub-Datenpaketen;

Fig. 19a    in einem Diagramm eine beispielhafte Belegung des Übertragungskanals bei der Übertragung der ersten Mehrzahl von Sub-Datenpaketen entsprechend des ersten Sprungmusters in der Zeit und Frequenz verteilt zeitlich synchronisiert zu einem Synchronisationssignal;

Fig. 19b    in einem Diagramm eine beispielhafte Belegung des Übertragungskanals bei der Übertragung der ersten Mehrzahl von Sub-Datenpaketen entsprechend eines Sprungmusters mit einer ersten Gruppe von Sprüngen und einer zweiten Gruppe von Sprüngen, wobei die erste Gruppe von Sprüngen fest vorgegeben ist, und wobei die zweite Gruppe von Sprüngen aus den Daten der ersten Klasse oder einer kanalcodierten Version der Daten der ersten Klasse berechnet ist;

Fig. 20    in einem Diagramm eine beispielhafte Belegung des Übertragungskanals bei der Übertragung der ersten Mehrzahl von Sub-Datenpaketen entsprechend des ersten Sprungmusters in der Zeit und Frequenz verteilt, wobei jedes Sub-Datenpaket für sich selbst bei einer fehlerfreien Übertragung empfängerseitig decodierbar ist;

Fig. 21    in einem Diagramm eine beispielhafte Belegung des Übertragungskanals bei der Übertragung der ersten Mehrzahl von Sub-Datenpaketen entsprechend des ersten Sprungmusters in der Zeit und Frequenz verteilt, wobei die kanalcodierten Daten der ersten Klasse derart auf die erste Mehrzahl von Sub-Datenpaketen verteilt sind, dass jede Gruppe von Sub-Datenpaketen bei einer fehlerfreien Übertragung derselben für sich genommen decodiert werden kann, um die Daten der ersten Klasse zu erhalten;

Fig. 22     in einem Diagramm eine beispielhafte Belegung des Übertragungskanals bei der Übertragung der ersten Mehrzahl von Sub-Datenpaketen entsprechend des ersten Sprungmusters in der Zeit und Frequenz verteilt, wobei die kanalcodierten Daten der ersten Klasse derart auf die erste Mehrzahl von Sub-Datenpaketen verteilt sind, dass eine erste Gruppe von Sub-Datenpaketen kanalcodierte Daten gemäß eines ersten Codierpolynoms (Polynom 0) aufweisen, und dass eine zweite Gruppe von Sub-Datenpaketen kanalcodierte Daten gemäß mehrere Codierpolynome (Polynom 1 und Polynom 2) aufweisen;

Fig. 23     in einem Diagramm eine beispielhafte Belegung eines Übertragungskanals bei der Übertragung der ersten Mehrzahl von Sub-Datenpaketen entsprechend des ersten Sprungmusters in der Zeit und Frequenz verteilt, wobei eine erste Gruppe von Sub-Datenpaketen eine Kerninformation aufweisen und eine zweite Gruppe von Sub-Datenpaketen eine Erweiterungsinformation, wobei die erste Gruppe von Sub-Datenpaketen zeitlich vor der zweiten Gruppe von Sub-Datenpaketen übertagen wird;

Fig. 24     in einem Diagramm eine beispielhafte Belegung des Übertragungskanals bei der Übertragung der ersten Mehrzahl von Sub-Datenpaketen entsprechend des ersten Sprungmusters in der Zeit und Frequenz verteilt, wobei eine erste Gruppe von Sprüngen des Sprungmusters den Datensender identifiziert;

Fig. 25     in einem Diagramm eine beispielhafte Belegung des Übertragungskanals bei der Übertragung der ersten Mehrzahl von Sub-Datenpaketen entsprechend des ersten Sprungmusters derart in der Zeit und Frequenz verteilt, dass Sub-Datenpakete, die entsprechend des ersten Sprungmusters gesendet werden, den gleichen Zeitabstand und Frequenzabstand zueinander aufweisen;

Fig. 26     in einem Diagramm eine beispielhafte Belegung des Übertragungskanals bei der Übertragung der ersten Mehrzahl von Sub-Datenpaketen entsprechend des ersten Sprungmusters in der Zeit und Frequenz verteilt;

Fig. 27     in einem Diagramm eine beispielhafte Belegung des Übertragungskanals bei der Übertragung der ersten Mehrzahl von Sub-Datenpaketen entsprechend des ersten Sprungmusters in der Zeit und Frequenz verteilt;

Fig. 28     in einem Diagramm eine beispielhafte Belegung des Übertragungskanals bei der Übertragung der ersten Mehrzahl von Sub-Datenpaketenentsprechend des ersten Sprungmusters in der Zeit und Frequenz verteilt, wobei eine Länge der Sub-Datenpakete mit zunehmender Anzahl an versendeten Sub-Datenpaketen abnimmt;

Fig. 29     ein Flussdiagramm eines Verfahrens zum Erzeugen eines Satzes von Sprungmustern, gemäß einem Ausführungsbeispiel;

Fig. 30     ein Flussdiagramm eines Verfahrens zum Erzeugen von zwei Sätzen von Sprungmustern, gemäß einem Ausführungsbeispiel;

Fig. 31a     in einem Diagramm einen Aufbau eines Frames mit einem TSMA Sprungmuster;

Fig. 31b     in einem Diagramm eine Belegung von zwei Frequenzkanälen und bei der wiederholten Übertragung von Daten mittels eines ersten Sprungmusters und eines zweiten Sprungmusters;

Fig. 32     in einem Diagramm eine schematische Ansicht eines Aufbaus eines TSMA-Sprungmusters;

Fig. 33a     in einem Diagramm Haupt- und Nebenmaxima einer Autokorrelationsfunktion eines Sprungmusters, welches vorgegebene Autokorrelationseigenschaften aufweist, aufgetragen über die Frequenz und die Zeit;

Fig. 33b     in einem Diagramm Haupt- und Nebenmaxima einer Autokorrelationsfunktion eines Sprungmusters, welches vorgegebene Autokorrelationseigenschaften nicht aufweist, aufgetragen über die Frequenz und die Zeit;

Fig. 34a     in einem Diagramm Haupt- und Nebenmaxima einer Kreuzkorrelationsfunktion zweier Sprungmuster, welche vorgegebene Kreuzkorrelationseigenschaften aufweisen, aufgetragen über die Frequenz und die Zeit;

Fig. 34b   in einem Diagramm Haupt- und Nebenmaxima einer Kreuzkorrelationsfunktion zweier Sprungmuster, welche vorgegebene Kreuzkorrelationseigenschaften nicht aufweisen, aufgetragen über die Frequenz und die Zeit;

Fig. 35   ein Flussdiagramm eines Verfahrens zur Erzeugung von Sprungmustern, gemäß einem Ausführungsbeispiel;

Fig. 36   in einem Diagramm eine beispielhafte Belegung eines Übertragungskanals bei der Übertragung der ersten Mehrzahl von Sub-Datenpaketen entsprechend des ersten Sprungmusters verteilt in der Frequenz und der Zeit;

Fig. 37   zeigt in einer Tabelle eine Definition eines Low-Delay Frequenzsprungmusters, gemäß einem Ausführungsbeispiel; und

Fig. 38   zeigt in einer Tabelle eine Definition eines Low-Delay Zeitsprungmusters, gemäß einem Ausführungsbeispiel.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

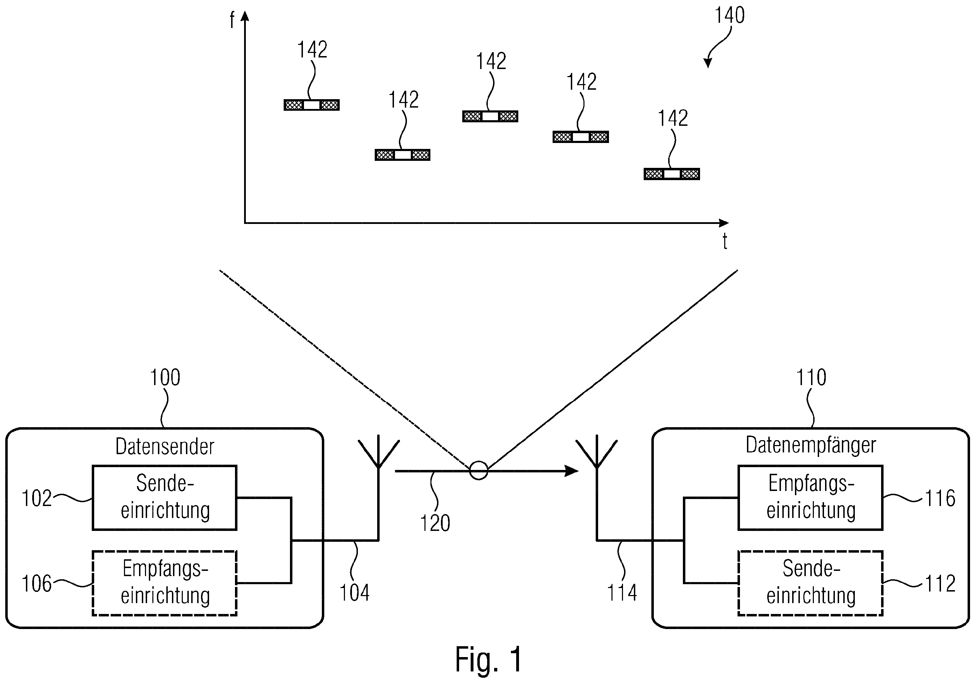

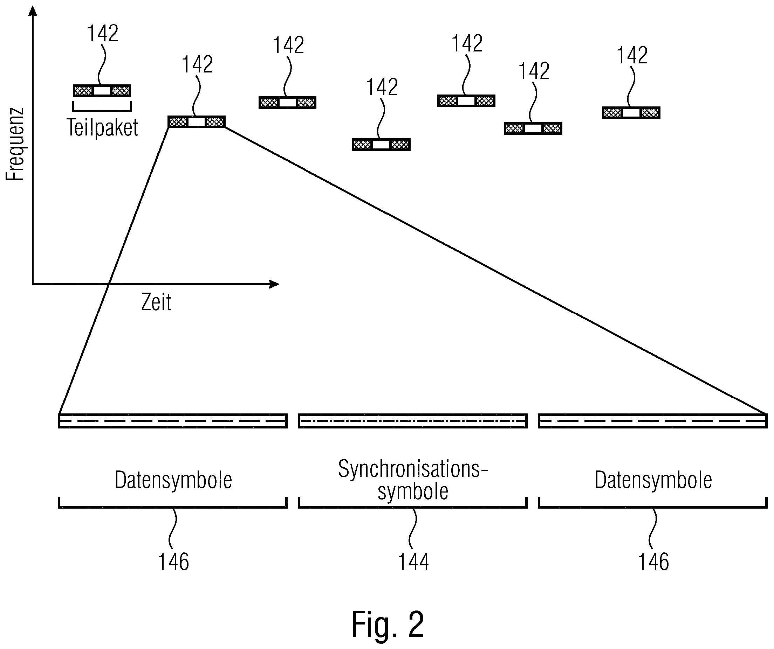

Bevor Ausführungsbeispiele der vorliegenden Erfindung im Detail beschrieben werden, wird zunächst beispielhaft anhand der Fig. 1 und 2 auf das der Erfindung zugrundeliegende Kommunikationssystem näher eingegangen, dass um einen Modus für Daten höherer Priorität und/oder höheren Anforderungen an eine maximale Übertragungsdauer erweitert werden soll. Es sei jedoch darauf hingewiesen, dass das anhand der Fig. 1 und 2 erläuterte Kommunikationssystem lediglich beispielhaft dargestellt bzw. beschrieben ist und keinesfalls einschränkend auszulegen ist. Vielmehr ist das Kommunikationssystem stark abstrahiert dargestellt, um die zugrundeliegenden Prinzipien einfach und verständlich zu erläutern.

Fig. 1 zeigt ein schematisches Blockschaltbild eines beispielhaften Kommunikationssystems mit einem Datensender 100 und einem Datenempfänger 110.

Der Datensender 100 kann ausgebildet sein, um Daten 120 (oder ein Datenpaket mit den Daten 120) auf eine Mehrzahl von Sub-Datenpaketen 142 aufzuteilen und um die Mehrzahl von Sub-Datenpaketen 142 unter Verwendung eines Sprungmusters 140 in der Zeit und/oder Frequenz verteilt zu senden.

Der Datenempfänger 110 kann ausgebildet sein, um die Mehrzahl von Sub-Datenpaketen 142 zu empfangen, um die Daten, die auf die Mehrzahl von Sub-Datenpaketen aufgeteilt und entsprechend des Sprungmusters 140 in der Zeit und/oder Frequenz verteilt übertragen werden, zu erhalten.

Wie in Fig. 1 beispielhaft gezeigt ist, kann der Datensender 100 eine Sendeeinrichtung (oder Sendemodul, oder Transmitter) 102 aufweisen, die ausgebildet ist, um die Daten 120 zu senden. Die Sendeeinrichtung 102 kann mit einer Antenne 104 des Datensenders 100 verbunden sein. Der Datensender 100 kann ferner eine Empfangseinrichtung (oder Empfangsmodul, oder Receiver) 106 aufweisen, die ausgebildet ist, um Daten zu empfangen. Die Empfangseinrichtung 106 kann mit der Antenne 104 oder einer weiteren (separaten) Antenne des Datensenders 100 verbunden sein. Der Datensender 100 kann auch eine kombinierte Sendeempfangseinrichtung (Transceiver) aufweisen.

Der Datenempfänger 110 kann eine Empfangseinrichtung (oder Empfangsmodul, oder Receiver) 116 aufweisen, die ausgebildet ist, um Daten 120 zu empfangen. Die Empfangseinrichtung 116 kann mit einer Antenne 114 des Datenempfängers 110 verbunden sein. Ferner kann der Datenempfänger 110 eine Sendeeinrichtung (oder Sendemodul, oder Transmitter) 112 aufweisen, die ausgebildet ist, um Daten zu senden. Die Sendeeinrichtung 112 kann mit der Antenne 114 oder einer weiteren (separaten) Antenne des Datenempfängers 110 verbunden sein. Der Datenempfänger 110 kann auch eine kombinierte Sendeempfangseinrichtung (Transceiver) aufweisen.

Bei Ausführungsbeispielen kann der Datensender 100 ein Sensorknoten sein, während der Datenempfänger 110 eine Basisstation sein kann. Typischerweise umfasst ein Kommunikationssystem zumindest einen Datenempfänger 110 (Basisstation) und eine Vielzahl von Datensendern (Sensorknoten, wie z.B. Heizungszähler). Natürlich ist es auch möglich, dass der Datensender 100 eine Basisstation ist, während der Datenempfänger 110 ein Sensorknoten ist. Ferner ist es möglich, dass sowohl der Datensender 100 als auch der Datenempfänger 110 Sensorknoten sind. Ferner ist es möglich, dass sowohl der Datensender 100 als auch der Datenempfänger 110 Basisstationen sind.

Der Datensender 100 und der Datenempfänger 110 können ausgebildet sein, um die Daten 120 unter Verwendung des Telegram-Splitting-Verfahrens (TS-Verfahren, dt. Telegrammaufteilungsverfahrens) zu senden bzw. zu empfangen. Hierbei wird ein Telegramm bzw. Datenpaket 120 in eine Mehrzahl von Sub-Datenpakete (oder Teildatenpakte, oder Teilpakete) 142 aufgeteilt und die Sub-Datenpakete 142 entsprechend des Sprungmusters 140 in der Zeit und/oder Frequenz verteilt von dem Datensender 100 zu dem Datenempfänger 110 übertragen, wobei der Datenempfänger 110 die Sub-Datenpakete wieder zusammenfügt (oder kombiniert), um das Datenpaket 120 zu erhalten. Die Sub-Datenpakete 142 können dabei jeweils nur einen Teil des Datenpakets 120 enthalten, so dass die Sub-Datenpakete 142 jeweils kürzer sind als das Datenpaket 120. Das Datenpaket 120 kann ferner kanalcodiert sein, so dass zum fehlerfreien Decodieren des Datenpakets 120 nicht alle Sub-Datenpakete 142, sondern nur ein Teil der Sub-Datenpakete 142 erforderlich sind.

Die zeitliche Verteilung der Mehrzahl von Sub-Datenpaketen 142 kann, wie bereits erwähnt, entsprechend eines Zeit- und/oder Frequenzsprungmusters erfolgen.

Ein Zeitsprungmuster kann eine Abfolge von Sendezeitpunkten oder Sendezeitabständen (Sprünge) angeben, mit denen die Sub-Datenpakete gesendet werden. Beispielsweise kann ein erstes Sub-Datenpaket zu einem ersten Sendezeitpunkt (oder in einem ersten Sendezeitschlitz) und ein zweites Sub-Datenpaket zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Sub-Datenpaketen können Sendepausen vorhanden sein in denen nicht gesendet wird. Die Sub-Datenpakete können sich auch zeitlich überlappen (überschneiden).

Ein Frequenzsprungmuster kann eine Abfolge von Sendefrequenzen oder Sendefrequenzsprüngen angeben, mit denen die Sub-Datenpakete gesendet werden. Beispielsweise kann ein erstes Sub-Datenpaket mit einer ersten Sendefrequenz (oder in einem ersten Frequenzkanal) und ein zweites Sub-Datenpaket mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Sub-Datenpakete 142 auch sowohl in der Zeit- als auch in der Frequenz verteilt von dem Datensender 100 zu dem Datenempfänger 110 übertragen werden. Die Verteilung der Mehrzahl von Sub-Datenpakete in der Zeit und in der Frequenz kann entsprechend einem Zeit- und Frequenzsprungmuster erfolgen. Ein Zeit- und Frequenzsprungmuster kann die Kombination aus einem Zeitsprungmuster und einem Frequenzsprungmuster sein, d.h. eine Abfolge von Sendezeitpunkten oder Sendezeitabständen mit denen die Sub-Datenpakete übertragen werden, wobei den Sendezeitpunkten (oder Sendezeitabständen) Sendefrequenzen (oder Sendefrequenzsprünge) zugeordnet sind.

Das Zeit- und/oder Frequenzsprungmuster kann eine Mehrzahl von Sprüngen aufweisen, wobei die Mehrzahl von Sprüngen jeweils ein Sendezeitpunkt und/oder eine Sendefrequenz (oder ein Sendezeitsprung oder Sendefrequenzsprung) angeben, entsprechend dem die Mehrzahl von Sub-Datenpaketen 142 übertragen werden können.

Fig. 2 zeigt in einem Diagramm eine beispielhafte Belegung des Übertragungskanals bei der Übertragung einer Mehrzahl von Sub-Datenpaketen 142 entsprechend einem Zeit- und Frequenzsprungmuster. Dabei beschreibt die Ordinate die Frequenz und die Abszisse die Zeit.

Wie in Fig. 2 zu erkennen ist, kann das Datenpaket 120 beispielhaft auf n = 7 Sub-Datenpakete 142 aufgeteilt werden und entsprechend eines Zeit- und Frequenzsprungmusters verteilt in der Zeit und der Frequenz von dem Datensender 100 zu dem Datenempfänger 110 übertragen werden.

Wie in Fig. 2 weiter zu erkennen ist, kann auch eine Synchronisationssequenz 144 auf die Mehrzahl von Sub-Datenpakete 142 aufgeteilt werden, so dass die Mehrzahl von Sub-Datenpakete 142 neben Daten (Datensymbole in Fig. 2) 146 jeweils einen Teil der Synchronisationssequenz (Synchronisationssymbole in Fig. 2) 144 enthalten.

Im Folgenden werden detaillierte Ausführungsbeispiele des Datensenders 100 und des Datenempfängers 110 näher beschrieben.

## 1. Verschiedene Klassen von Sprungmustern

Bisher wurden alle Sprungmuster eines Systems so entwickelt, dass sie in etwa die gleiche Latenzzeit besitzen. Somit ist es nicht möglich für bestimmte Anwendungsfälle eine kürzere Latenz zu erzielen, wodurch das System für diese Anwendungen nicht eingesetzt werden kann.

## 1.1. Reduktion der Pausen zwischen den Sub-Paketen

Bei Ausführungsbeispielen kann der Datensender 100 ausgebildet sein, um Daten einer ersten Klasse auf eine erste Mehrzahl von Sub-Datenpaketen 162 aufzuteilen und um die erste Mehrzahl von Sub-Datenpaketen 162 unter Verwendung eines ersten Sprungmusters 160 zu senden, wobei der Datensender 100 ausgebildet ist, um Daten einer zweiten Klasse auf eine zweite Mehrzahl von Sub-Datenpaketen 142 aufzuteilen und um die zweite Mehrzahl von Sub-Datenpaketen 142 unter Verwendung eines zweiten Sprungmusters 140 zu senden, wobei Sendepausen zwischen Sub-Datenpaketen 162, die entsprechend des ersten Sprungmusters 160 gesendet werden, kleiner sind als Sendepausen zwischen Sub-Datenpaketen 142, die entsprechend des zweiten Sprungmusters 140 gesendet werden.

Dementsprechend kann der Datenempfänger 110 ausgebildet sein, um Daten einer ersten Klasse, die aufgeteilt auf eine erste Mehrzahl von Sub-Datenpaketen 162 übertragen werden, unter Verwendung eines ersten Sprungmusters 160 zu empfangen, wobei der Datenempfänger 110 ausgebildet sein kann, um Daten einer zweiten Klasse, die aufgeteilt auf eine zweite Mehrzahl von Sub-Datenpaketen 142 übertragen werden, unter Verwendung eines zweiten Sprungmusters 140 zu empfangen, wobei Sendepausen zwischen Sub-Datenpaketen 162, die entsprechend des ersten Sprungmusters 160 empfangen werden, kleiner sind als Sendepausen zwischen Sub-Datenpaketen 142, die entsprechend des zweiten Sprungmusters 140 empfangen werden.

Bei Ausführungsbeispielen können die die Daten der ersten Klasse eine höhere Priorität und/oder höhere Anforderungen an eine maximale Übertragungsdauer aufweisen als die Daten der zweiten Klasse.

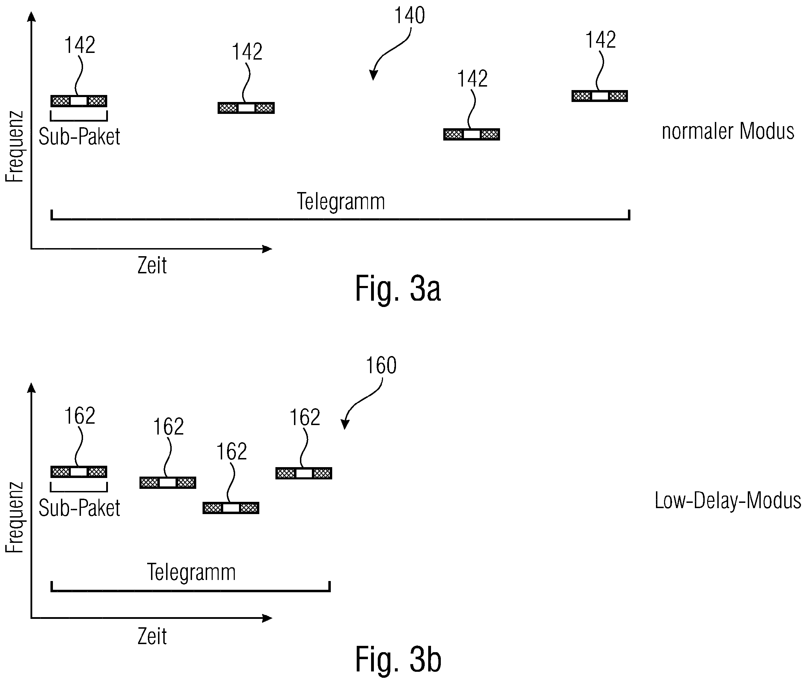

Fig. 3a zeigt dabei in einem Diagramm eine beispielhafte Belegung des Übertragungskanals bei der Übertragung der ersten Mehrzahl von Sub-Datenpaketen 142 entsprechend des ersten Sprungmusters 140, während Fig. 3b in einem Diagramm eine beispielhafte Belegung des Übertragungskanals bei der Übertragung der zweiten Mehrzahl von Sub-Datenpaketen 162 entsprechend des zweiten Sprungmusters 160 zeigt. Wie im Vergleich zwischen den Fig. 3a und 3b erkennbar ist, sind Sendepausen zwischen Sub-Datenpaketen 162, die entsprechend des ersten Sprungmusters 160 übertragen werden, kleiner als Sendepausen zwischen Sub-Datenpaketen 142, die entsprechend des zweiten Sprungmusters 140 übertragen werden. Mit anderen Worten, Fig. 3a und 3b zeigen einen Vergleich zwischen den verschiedenen Klassen der Sprungmuster bei Reduktion der Pausen.

Bei Ausführungsbeispiel können zur Lösung des Problems aus Abschnitt 1 somit verschiedene Klassen von Sprungmustern definiert werden, welche eine unterschiedliche Latenz haben. Hierbei besitzen die Muster mit geringerer Latenz (Low-Delay-Mode) im Mittel kürzere Pausen zwischen den Sub-Paketen als diejenigen mit höherer Latenz. Je nach Anwendungsfall oder Dringlichkeit der Nachricht wählt der Sender 100 ein Muster aus der entsprechenden Klasse.

Der Empfänger kann so konfiguriert werden, dass er (alle) verschiedenen Klassen von Sprungmustern detektieren und empfangen kann. Hierfür kann eine zumindest teilweise parallele Verarbeitung notwendig sein. Unter der Annahme, dass die Pilotsequenz in jedem Sub-Paket für alle Sprungmuster-Klassen gleich ist, ist der Rechenaufwand für die gleiche Gesamtanzahl an Sprungmustern der Detektion nicht höher, als wenn nur eine Klasse von Sprungmustern verwendet werden würde.

In diesem Fall kann der Empfänger 110 zunächst eine für alle Klassen (und Sprungmuster) gemeinsame Sub-Paket-Korrelation (oder Teil-Pilotsequenz-Korrelation) durchführen. Im Anschluss wird für jedes Sprungmuster 160 und 140 getrennt eine Korrelation (oder eine vergleichbare Methodik) über die Ergebnisse der Sub-Paket-Korrelation durchgeführt, um das Gesamtergebnis zu erhalten.

Fig. 3a und 3b zeigen beispielhaft einen Vergleich zwischen den Sprungmustern 160 und 140 aus den verschiedenen Klassen. Das Sprungmuster 140 aus Fig. 3a stellt die herkömmliche Klasse dar, welche auf hohe Übertragungssicherheit zu Gunsten der Latenz optimiert wurde. Das Muster 160 aus Fig. 3b besitzt eine deutlich geringere Latenz und kann dadurch für zeitkritische Anwendungen verwendet werden.

Werden mehr als zwei Klassen definiert, kann der Sender je nach Anwendungsfall entsprechend der notwendigen Latenz eine entsprechende Klasse wählen. Nachteil der Sprungmuster mit geringerer Latenz ist jedoch die geringere Störfestigkeit bei der Übertragung. Dadurch treten für Muster mit geringer Latenz häufiger Paketfehler bei der Übertragung auf als bei Mustern mit höherer Latenz (der Lösung dieses Problems widmen sich folgenden Ideen.

Bei Ausführungsbeispielen können Datensenderseitig verschiedene Klassen von Sprungmustern verwendet werden, welche entsprechend des Anwendungsfalles gewählt werden können.

Bei Ausführungsbeispielen kann Datenempfängerseitig eine zumindest teilweise parallele Detektion der verschiedenen Sprungmuster der Klassen durchgeführt werden.

1.2. Reduktion der Anzahl an Sub-Paketen

Das Ausführungsbeispiel aus Abschnitt 1.1 bringt unter gewissen Umständen den Nachteil mit sich, dass neue Sprungmuster designt werden müssen, welche zusätzlich vom Empfänger detektiert werden müssen. Dies stellt besonders dann ein Problem dar, falls am Empfänger nur begrenzte Rechenleistung zur Verfügung steht.

Bei Ausführungsbeispielen kann die erste Mehrzahl von Sub-Datenpaketen 162 daher weniger Sub-Datenpakete aufweisen als die zweite Mehrzahl von Sub-Datenpaketen 142, wobei Sub-Datenpakete 162, die entsprechend des ersten Sprungmusters 160 gesendet werden, optional länger sein können, als Sub-Datenpakete 142, die entsprechend des zweiten Sprungmusters 140 gesendet werden.

Bei Ausführungsbeispielen können dabei die Sub-Datenpakete, die entsprechend des ersten Sprungmusters 160 und/oder zweiten Sprungmusters 140 gesendet werden, derart mit Synchronisationssequenzen versehen sein, dass ein zeitlicher Abstand zwischen Synchronisationssequenzen der Sub-Datenpakte 162, die mit dem ersten Sprungmuster 160 gesendet werden, und Synchronisationssequenzen der Sub-Datenpakete 142, die mit dem zweiten Sprungmuster 140 gesendet werden, gleich sind.

Anstelle der Reduktion der Pausen zwischen den Sub-Paketen 162 können also auch weniger Sub-Pakete verwendet und deren Länge vergrößert werden. Dies bietet den Vorteil, dass die gleiche Detektion für beide (oder mehrere) Klassen von Sprungmustern eingesetzt werden kann (unter der Einschränkung, dass die Abstände der Synchronisationssequenzen zueinander gleichbleiben). Im Falle der Sprungmusterklasse mit geringer Latenz kann die Detektion optional nur über die ersten Hops ausgeführt werden.

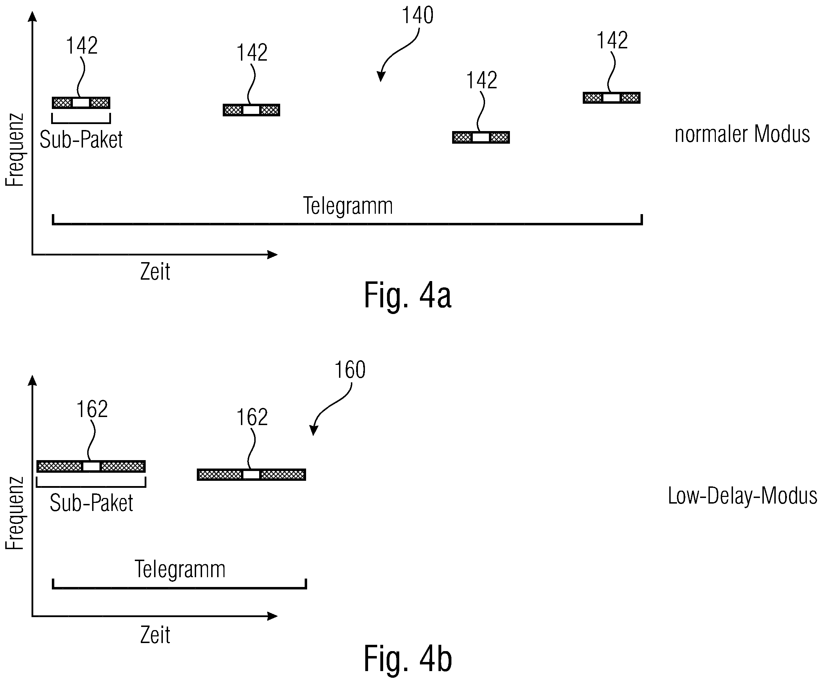

Fig. 4a zeigt dabei in einem Diagramm eine beispielhafte Belegung des Übertragungskanals bei der Übertragung der ersten Mehrzahl von Sub-Datenpaketen 142 entsprechend des ersten Sprungmusters 140, während Fig. 4b in einem Diagramm eine beispielhafte Belegung des Übertragungskanals bei der Übertragung der zweiten Mehrzahl von Sub-Datenpaketen 162 entsprechend des zweiten Sprungmusters 160 zeigt. Mit anderen Worten, Fig. 4a und 4b zeigen einen Vergleich eines Sprungmusters im normalen Modus (mit hoher Latenz) und einem Sprungmuster aus der Klasse der geringen Latenz. Um die gleiche Datenmenge mit weniger Sub-Paketen zu übertragen, wurde die Länge der Sub-Pakete erhöht.

Bei Ausführungsbeispiel kann Datensenderseitig die Länge der Sub-Pakete von der verwendeten Klasse des Sprungmusters abhängen. Entsprechend des Anwendungsfalles kann für eine kurze Latenz eine hohe Länge der Sub-Pakete gewählt werden.

Bei Ausführungsbeispielen kann Datenempfängerseitig die Detektion der verschiedenen Sprungmuster der Klassen gemeinsam mit einem Algorithmus durchgeführt werden.

### 1.3. Erhöhung der Bandbreite im Low-Delay-Modus

Die beiden vorhergehenden Ausführungsbeispiele aus Abschnitt 1.1 und 1.2 besitzen unter gewissen Umständen den Nachteil, dass die Störfestigkeit durch die Reduktion der Pausen bzw. der Anzahl an Sub-Paketen sinkt.

Um diesem Problem entgegenzuwirken, kann die Bandbreite des Signals erhöht werden. Hierdurch sinkt die Wahrscheinlichkeit, dass ein Fremd-Störer mehr als ein Sub-Paket zerstören kann, da die Störungen ebenfalls bandbegrenzt sind und durch die Erhöhung der Bandbreite die Wahrscheinlichkeit vergrößert wird, dass ein Störer nur partiell im gleichen Band wie das Telegramm liegt.

Durch die Verbreitung der Bandbreite der Übertragung erhöht sich zunächst auch die Bandbreite, in welcher die Störungen einfallen können. Bei gleichmäßiger Auslastung der Störungen über die gesamte genutzte Bandbreite ergibt sich somit in diesem Szenario kein Vorteil. In der Regel findet die Übertragung jedoch in den sog. ISM-Bändern statt, wo die maximale Kanalbelegung in den Bändern vorgeschrieben ist. Für die verschiedenen Bänder gibt es jedoch unterschiedliche maximal zugelassene Kanalbelegungen. Wird nun das Sprungmuster so breit gewählt, dass mehrere (zumindest zwei) Bänder mit unterschiedlichen Kanalbelegungen für die Übertragung eingesetzt werden, ergibt sich ein Vorteil in der Störfestigkeit, da die Kanalbelegung der Störer unterschiedlich hoch in den Bändern ist.

Wird nur die Bandbreite des Low-Delay-Modes erhöht, hat dies zwar unter gewissen Umständen den Nachteil, dass wie in Abschnitt 1.1 die Detektion für die verschiedenen Modi getrennt durchgeführt werden muss, jedoch steigt die Störfestigkeit gegen Fremd- und Eigenstörungen. Wird ebenfalls die Bandbreite des normalen Modus erhöht, kann unter Verwendung von Abschnitt 1.2 weiterhin eine gemeinsame Detektion durchgeführt werden. Die Eigenstörfestigkeit ist in diesem Fall gleich derjenigen als wenn alle Sender im normalen Modus übertragen.

Bei Ausführungsbeispielen kann Datensenderseitig die Bandbreite der verschiedenen Klassen von Sprungmustern variiert werden.

Bei Ausführungsbeispielen kann Datenempfängerseitig die Detektion der verschiedenen Sprungmuster der Klassen über unterschiedliche Bandbreiten erfolgen.

### 1.4. Verwendung einer anderen Datenrate oder eines anderen Modulationsverfahrens

Ähnlich zu (oder in Kombination mit) dem Ausführungsbeispiel aus Abschnitt 1.3 kann eine höhere Datenrate oder ein anderes Modulationsverfahren bei der Übertragung im Low-Delay-Modus eingesetzt werden. Idealerweise wird die Datenrate erhöht, um hierdurch die Dauer der Übertragung zu reduzieren, was eine längere Pause zwischen den Sub-Paketen zur Folge hat und somit die Übertragungssicherheit gegen Störungen erhöht.

Im Falle, dass die Modulationsart geändert wird, sollte ebenfalls darauf geachtet werden, dass nach Möglichkeit die Dauer der Übertragung reduziert wird (z. B. QPSK anstelle von BPSK).

Die Entscheidung über die zu verwendende Datenrate oder Modulationsart kann die Applikation anhand der Priorität und der notwendigen Latenz der Nachricht wählen.

Bei Ausführungsbeispielen kann Datensenderseitig die Datenrate oder die Modulationsart der verschiedenen Klassen von Sprungmustern variiert werden.

Bei Ausführungsbeispielen kann Datenempfängerseitig die Detektion der verschiedenen Sprungmuster der Klassen über unterschiedliche Datenraten und/oder Modulationsarten erfolgen.

## 2. Kombination aus Normalem und Low-Delay Sprungmuster

Bei Ausführungsbeispielen kann der Datensender 100 ausgebildet sein, um Daten kanalzucodieren und auf eine Mehrzahl von Sub-Datenpaketen aufzuteilen und um die Mehrzahl von Sub-Datenpaketen 162 entsprechend eines Sprungmusters 160 zu senden. Der Datensender 100 kann dabei ausgebildet sein, um die Daten derart kanalzucodieren und derart auf die Mehrzahl von Sub-Datenpaketen 162 aufzuteilen, dass nur eine erste Gruppe 170 von Sub-Datenpaketen 162 bei einer fehlerfreien Übertragung derselben zur erfolgreichen Decodierung der Daten erforderlich ist, und dass bei einer fehlerhaften Übertragung durch eine Kombination der ersten Gruppe von Sub-Datenpaketen und der zweiten Gruppe von Sub-Datenpaketen ein höherer Codegewinn erzielt wird.

Dementsprechend kann der Datenempfänger 110 ausgebildet sein, um zumindest die erste Gruppe 170 von Sub-Datenpaketen 162 zu empfangen, und um einen Teil der kanalcodierten Daten, die mit der ersten Gruppe 170 von Sub-Datenpaketen 162 empfangen wurden zu decodieren, um die Daten zu erhalten. Ferner kann der Datenempfänger 110 ausgebildet sein, um sofern die Decodierung der Daten nicht erfolgreich war, um zumindest einen zweiten Teil der kanalcodierten Daten, die mit zumindest einer zweiten Gruppe 172 von Sub-Datenpaketen 162 empfangen wurde, mit dem ersten Teil der kanalcodierten Daten zur Erzielung eines höheren Codegewinns zu kombinieren und zu decodieren, um die Daten zu erhalten.

Anstelle der Definition von verschiedenen Klassen von Sprungmustern ist es also auch möglich, eine Nachricht mit Redundanz so zu versenden, dass eine vorzeitige Decodierung möglich ist.

### 2.1. Kurze Pausen zu Beginn des Telegramms

Mit dem in Abschnitt 2 beschriebenen Ausführungsbeispiel lässt sich die Latenz der Übertragung reduzieren, jedoch wird die geforderte Latenz unter gewissen Umständen für bestimme Anwendungen noch nicht erreicht. Um dieses Problem zu lösen, können die Pausen der ersten Sub-Pakete ähnlich zu dem Ausführungsbeispiel von Abschnitt 1 verkürzt werden. Unterschied ist jedoch, dass nicht alle Pausen verkürzt werden, sondern nur so viele, welche für eine vorzeitige Decodierung benötigt werden.

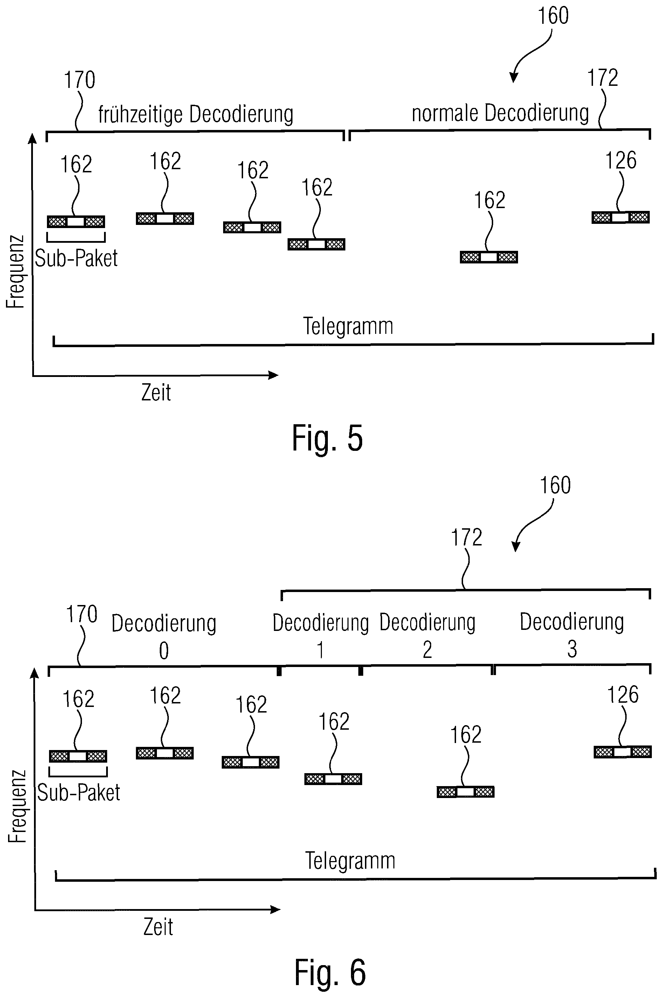

Bei Ausführungsbeispielen können die Sendpausen zwischen den Sub-Datenpaketen 162 der ersten Gruppe 170 von Sub-Datenpaketen 162 also kleiner sein als Sendepausen zwischen Sub-Datenpaketen 162 einer zweiten Gruppe 172 von Sub-Datenpaketen 162, die nach der ersten Gruppe 170 von Sub-Datenpaketen 162 gesendet werden, wie dies in Fig. 5 gezeigt ist.

Im Detail zeigt Fig. 5 in einem Diagramm eine beispielhafte Belegung des Übertragungskanals bei der Übertragung von kanalcodierten Daten mittels der Mehrzahl von Sub-Datenpaketen 142, wobei Sendpausen zwischen den Sub-Datenpaketen 162 einer ersten Gruppe 170 von Sub-Datenpaketen 162 kleiner sein als Sendepausen zwischen Sub-Datenpaketen 162 einer zweiten Gruppe 172 von Sub-Datenpaketen 162. Mit anderen Worten, Fig. 5 zeigt eine Kombination aus einem normalen und einem Low-Delay Sprungmuster.

Der Vorteil dieser Methodik liegt darin, dass ohne zusätzlich Aufwand oder Overhead der Delay für Telegramme mit gutem SNR sehr stark reduziert werden kann, da der erste Teil der Nachricht mit geringem Delay bereits vorab decodiert werden kann. Ist das SNR niedrig, muss die Übertragung nicht wiederholt werden, sondern es genügt die restliche Information zu empfangen und dann eine normale Decodierung durchzuführen.

Falls der Empfänger die Fähigkeit besitzt eine Schätzung des SNRs oder des Empfangspegels des Telegramms durchzuführen, ist es möglich, direkt eine Entscheidung (Signal SNR über Schwelle) zu treffen ob das Telegramm frühzeitig decodiert werden kann oder nicht. In diesem Fall ist es nicht notwendig für jedes empfangene Teil-Paket einen Decodierversuch mit einem Teil der Daten zu unternehmen.

Bei Ausführungsbeispielen können Datensenderseitig die ersten Sub-Pakete geringere Pausen haben als die hinteren Sub-Pakete.

Bei Ausführungsbeispielen kann Datenempfängerseitig (oder Decoderseitig) bereits vor dem Empfang der vollständigen Nachricht versucht werden das Telegramm zu decodieren. Falls dies nicht möglich ist, kann der restliche Teil der Nachricht ebenfalls empfangen und anschließend decodiert werden.

### 2.2. Ansteigende Pausen mit zunehmender Anzahl an ausgesendeten Sub-Paketen

Das Ausführungsbeispiel gemäß Abschnitt 2.1 hat unter gewissen Umständen den Nachteil, dass nach einer fehlgeschlagenen vorzeigen Decodierung relativ lange gewartet werden muss bis weitere Sub-Pakete empfangen werden und ein neuer Decodierversuch durchgeführt werden kann.

Bei Ausführungsbeispielen können daher Sendpausen zwischen den Sub-Datenpaketen der zweiten Gruppe 172 von Sub-Datenpaketen 162 mit zunehmender Anzahl an gesendeten Sub-Datenpaketen 162 ansteigen, wie dies in Fig. 6 gezeigt ist.

Im Detail zeigt Fig. 6 in einem Diagramm eine beispielhafte Belegung des Übertragungskanals bei der Übertragung von kanalcodierten Daten mittels der Mehrzahl von Sub-Datenpaketen 142, wobei Sendpausen zwischen den Sub-Datenpaketen 162 einer ersten Gruppe 170 von Sub-Datenpaketen 162 kleiner sein als Sendepausen zwischen Sub-Datenpaketen 162 einer zweiten Gruppe 172 von Sub-Datenpaketen 162, und wobei Sendpausen zwischen den Sub-Datenpaketen 162 der zweiten Gruppe 172 von Sub-Datenpaketen 162 mit zunehmender Anzahl an gesendeten Sub-Datenpaketen 162 ansteigen. Mit anderen Worten, Fig. 6 zeigt ansteigende Pausen zwischen den Sub-Paketen zur empfangsfeldstärkeabhängigen Decodierung.

Eingangs erwähntes Problem kann somit umgangen werden, indem die Pausen zwischen den Sub-Paketen mit zunehmender Anzahl an gesendeten Sub-Paketen sukzessive zunehmen.

Wichtig ist hierbei zu erwähnen, dass die Pausen nicht streng monoton steigend verteilt werden müssen, es sollte jedoch eine Tendenz zu steigenden Pausen vorhanden sein.

Falls der Empfänger keine Schätzung des SNR oder Empfangsleistung durchführen kann, wird nach jedem empfangenen Block von neuen Sub-Paketen ein Decodierversuch durchgeführt (siehe Abbildung 4 oben die Darstellung der Blöcke der Sub-Pakete). Besitzt der Empfänger eine SNR- oder Empfangspegel-Schätzung kann er berechnen nach welchem Block eine Decodierung des Telegramms möglich ist.

Bei Ausführungsbeispielen können Datensenderseitig die Pausen der Sub-Pakete im Mittel mit zunehmender Anzahl an Sub-Paketen ansteigen. Die Latenz der Übertragung ist abhängig vom SNR bzw. dem Störgrad am Empfänger.

Bei Ausführungsbeispielen kann Datenempfängerseitig bereits vor Empfang der vollständigen Nachricht versucht werden das Telegramm zu decodieren. Falls dies nicht möglich ist, kann der restliche Teil der Nachricht ebenfalls empfangen und anschließend decodiert werden. Der Empfänger kann optional das SNR oder den Empfangspegel des Telegramms schätzen und daraus einen Zeitpunkt bestimmen, ab dem es sinnvoll ist einen vorzeitigen Decodierversuch zu starten.

### 3. Telegrammwiederholung

Die vorgestellten Ausführungsbeispiele der Abschnitte 1 und 2 haben unter gewissen Umständen den Nachteil, dass durch die Reduzierung der Pausen zwischen den Telegrammen die Störanfälligkeit steigt und hierdurch die Durchkommenswahrscheinlichkeit der Übertragung sinkt. Eine Lösung zur Erhöhung der Übertragungssicherheit ist die Telegrammwiederholung. Hierfür werden im Folgenden optimierte Konzepte vorgestellt.

### 3.1. Low-Delay und Standard Sprungmuster

Bei Ausführungsbeispielen kann der Datensender 100 ausgebildet sein, um Daten auf eine Mehrzahl von Sub-Datenpaketen 162 aufzuteilen und um die Mehrzahl von Sub-Datenpaketen 162 unter Verwendung eines ersten Sprungmusters 160 zu senden, wobei der Datensender ausgebildet ist, um die Mehrzahl von Sub-Datenpaketen 162 wiederholt unter Verwendung eines zweiten Sprungmusters 140 zu senden, wobei Sendepausen zwischen Sub-Datenpakten 162, die entsprechend des ersten Sprungmusters 162 gesendet werden, kleiner sind als Sendepausen zwischen Sub-Datenpaketen 162, die entsprechend des zweiten Sprungmusters 140 gesendet werden.

Bei Ausführungsbeispielen kann der Datenempfänger 110 ausgebildet sein, um Daten, die auf eine Mehrzahl von Sub-Datenpaketen 162 aufgeteilt sind und unter Verwendung eines ersten Sprungmusters 160 und wiederholt unter Verwendung eines zweiten Sprungmusters 140 übertragen werden, zu empfangen, wobei Sendepausen zwischen Sub-Datenpakten 162, die entsprechend des ersten Sprungmusters 160 übertragen werden, kleiner sind als Sendepausen zwischen Sub-Datenpaketen 162, die entsprechend des zweiten Sprungmusters 140 übertragen werden.

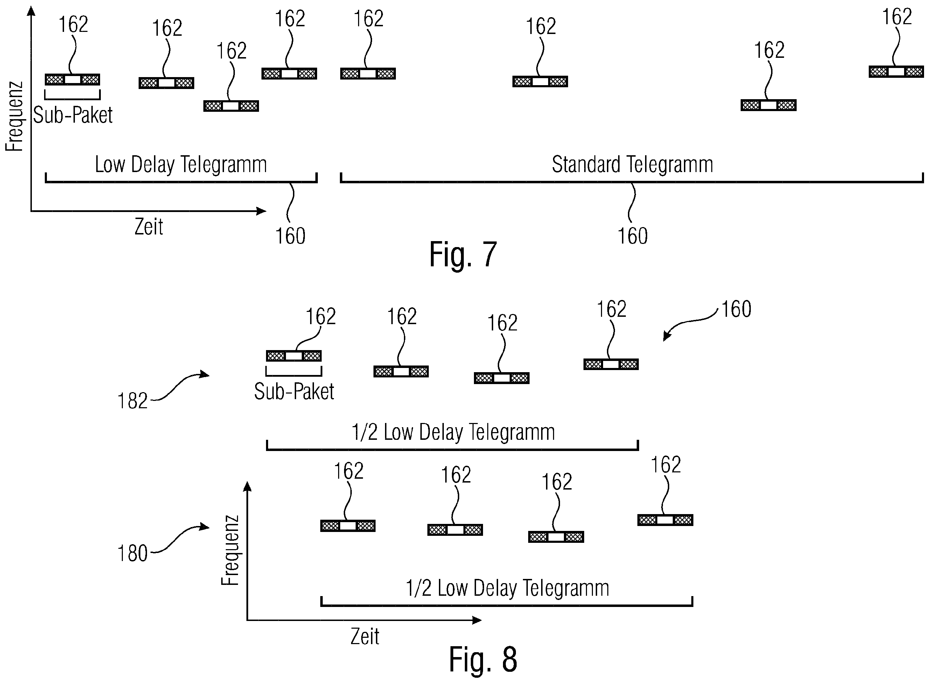

Anstelle der Einzelaussendung eines Low-Delay-Sprungmusters kann zur Erhöhung der Übertragungssicherheit im Anschluss das gleiche Telegramm nochmals mit einem anderen Sprungmuster, welches einen größeren Delay aufweist, ausgesendet werden. Dieses Prinzip veranschaulicht Fig. 7.

Im Detail zeigt Fig. 7 in einem Diagramm eine beispielhafte Belegung des Übertragungskanals bei der Übertragung von kanalcodierten Daten mittels einer Mehrzahl von Sub-Datenpaketen 162 unter Verwendung eines ersten Sprungmusters 160 und wiederholt unter Verwendung eines zweiten Sprungmusters 140. Mit anderen Worten, Fig. 7 zeigt eine Kombination einer Low-Delay-Aussendung mit einer Standard-Aussendung als Wiederholung.

Wird eine mehrfache Wiederholung eingesetzt, können abgesehen von der letzten Wiederholung die Sprungmuster auch die gleiche oder eine ähnliche Latenz wie das Initialmuster besitzen (z. b kann zweimal das Telegramm mit dem Low-Delay-Muster und abschließend einmal mit dem Standard-Muster versendet werden).

Wird im Empfänger das Low-Delay Telegramm bereits korrekt decodiert, kann der Empfänger die Decodierung der Nachricht des Standard Telegramms mit höheren Delay auslassen.

Wurde die Nachricht nicht korrekt empfangen, kann der Empfänger das Standard Telegramm empfangen und anschließend dieses decodieren. Falls dies ebenfalls aufgrund von Rauschen oder Störungen nicht funktioniert, kann er eine Kombination der zumindest beiden Aussendungen (z. B Maximal Ratio Combining, kurz MRC) durchführen.

Alternativ zum vollen Empfang des Standard-Telegramms wäre es auch möglich nur einen Teil der Nachricht des Standard-Telegramms zu empfangen und eine teilweise Kombination mit dem Low-Delay-Telegramm durchzuführen.

Falls der Empfänger über eine SNR oder Empfangspegelschätzung verfügen sollte, wäre es auch hier wieder möglich vorab die (voraussichtlich) notwendige Anzahl an Sub-Paketen zu bestimmen und dann entsprechend die Decodierung nach dem Empfang dieser zu starten.

Bei Ausführungsbeispielen kann Datensenderseitig zunächst immer (mindestens) eine Aussendung mit einem Low-Delay-Sprungmuster durchgeführt werden. Im Anschluss können Wiederholungen mit Sprungmustern folgen, welche eine höhere Latenz als das Initialmuster haben.

Bei Ausführungsbeispielen kann der Empfänger zunächst versuchen das Initialtelegramm zu empfangen. Falls das nicht funktioniert, kann versucht werden die Wiederholung oder eine Kombination aus Initialaussendung und Wiederholung zu decodieren.

3.2. Aufteilung der Telegramme auf mehrere Frequenzbänder

Die Verwendung der Low Delay Telegramme bringt aufgrund der verkürzten Pausen den Nachteil einer höheren Störempfindlichkeit mit sich. Eine mögliche Lösung für dieses Problem ist die parallele Aussendung eines Low Delay Telegramms auf zwei verschiedenen Frequenzbändern ("Dual-Verfahren") (ähnlich zur Erhöhung der Bandbreite aus Abschnitt 1.3). In Abgrenzung zu den Multi-Carrier-Verfahren (siehe Abschnitt 5), wird bei den Dual-Verfahren nie zeitgleich auf zwei Frequenzen gesendet, sondern die Subpakete klassisch, wie bei Verwendung eines einzigen Frequenzbandes nacheinander ausgesendet.

Wie im Folgenden ausgeführt wird, kann dies in verschiedenen Ausprägungen geschehen.

Bei Ausführungsbeispielen (Fall a)) kann sich das erste Sprungmuster über zwei separate Frequenzbänder erstrecken, wie dies in Fig. 8 gezeigt ist.

Fig. 8 zeigt in einem Diagramm eine beispielhafte Belegung des Übertragungskanals bei der Übertragung der Mehrzahl von Sub-Datenpaketen 162 unter Verwendung eines Sprungmusters 160, das sich über zwei separate Frequenzbänder 180 und 182 erstreckt. Mit anderen Worten, Fig. 8 zeigt ein "Dual-Verfahren" gemäß Fall a), wobei Sub-Datenpakete über zwei separate Frequenzbänder verteilt sind, auf denen jeweils ein halbes Low Delay Telegramm ausgesendet wird.

Wie in Fig. 8 gezeigt ist, kann das Sprungmuster so gewählt werden, dass ein vollständiges Low Delay Telegramm auf die beiden verwendeten Frequenzbänder verteilt wird. Dieses Verfahren erhöht im Vergleich zur Verwendung eines einzigen Frequenzbandes die Störfestigkeit gegen schmalbandige Störer und verkürzt gegenüber Standard TS-Telegrammen die Latenz.

Bei Ausführungsbeispielen (Fall b)) können die Daten unter Verwendung des ersten Sprungmusters zweifach in zwei separaten Frequenzbändern übertragen werden. Mit anderen Worten, kann ein komplettes Low Delay Telegramm auf jedem der beiden verwendeten Frequenzbänder ausgesendet werden. D.h. im Unterschied zu Fall a) können statt einem zwei komplette Low Delay Telegramme ausgesendet werden. Dies erhöht die Robustheit gegenüber Störungen weiter, auf Kosten einer höheren Latenz.

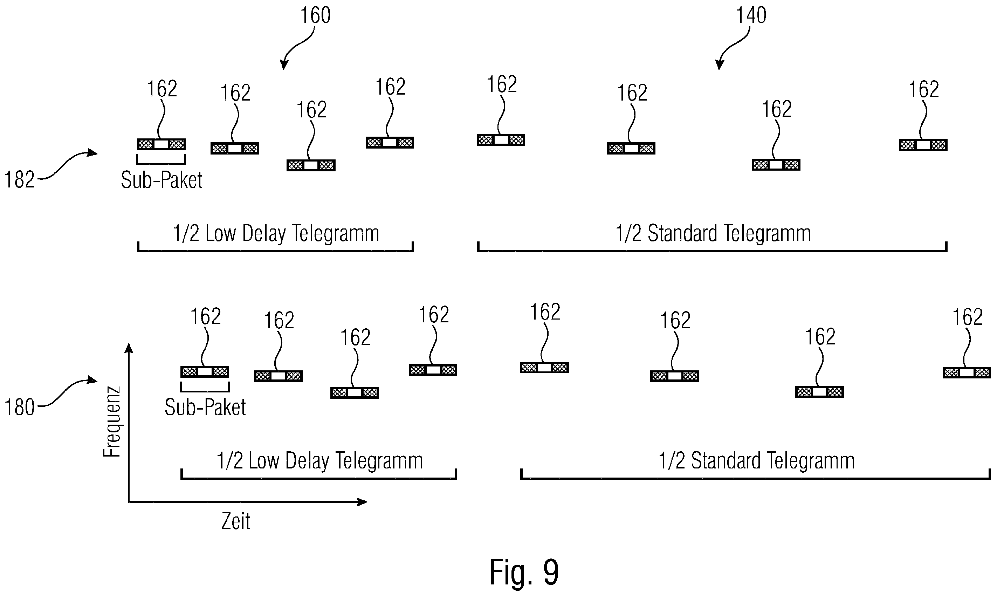

Bei Ausführungsbeispielen (Fall c)) können die Mehrzahl von Sub-Datenpaketen 162 unter Verwendung des ersten Sprungmusters zweifach in zwei separaten Frequenzbändern und wiederholt unter Verwendung des zweiten Sprungmusters zweifach in zwei separaten Frequenzbändern übertragen werden, wie dies in Fig. 9 gezeigt ist.

Im Detail zeigt Fig. 9 in einem Diagramm eine beispielhafte Belegung des Übertragungskanals bei der Übertragung der Mehrzahl von Sub-Datenpaketen 162 unter Verwendung des ersten Sprungmusters 160 zweifach in zwei separaten Frequenzbändern 180 und 182 und wiederholt unter Verwendung des zweiten Sprungmusters 140 zweifach in zwei separaten Frequenzbändern 180 und 182. Mit anderen Worten, Fig. 9 zeigt ein Sprungmuster über zwei Frequenzbänder verteilt; Aussendung eines Low Delay Telegramms gefolgt von einem Standard Telegramm.

Wie in Fig. 9 zu erkennen ist, ist eine Kombination mit der in Abschnitt 2.1 beschriebenen Kombination aus Low Delay Telegramm und Standard TS-Telegramm möglich, um die Robustheit des "Dual-Verfahrens" weiter zu erhöhen. Auf die Aussendung jeweils eines halben Low Delay Telegramm auf den zwei Frequenzbändern folgt ein Standard TS-Telegramm, dessen Sub-Pakete ebenfalls jeweils zur Hälfte auf einem der beiden Bänder ausgesendet werden. D.h. insgesamt werden zwei Telegramme, ein Low Delay Telegramm und ein Standard TS-Telegramm ausgesendet. Vorteil ist eine wesentlich erhöhte Empfangswahrscheinlichkeit im Störfall, durch die Verwendung eines Standard TS-Telegramm.

Bei Ausführungsbeispielen (Fall d)) kann die höchste Störfestigkeit durch eine Kombination von Variante b) und c) erreicht werden. Auf jedem der beiden Frequenzbänder wird ein komplettes Low Delay Telegramm gefolgt von einem kompletten Standard TS-Telegramm gesendet. Dadurch kann die Störfestigkeit auch gegenüber breitbandigen Störern erhöht werden. Nachteilig ist, dass die Latenz nicht so stark verbessert wird, wie in Fall a) oder c). Insgesamt werden hier vier komplette Telegramme ausgesendet (2 Low Delay Telegramme und 2 Standard TS-Telegramme).

Bei Ausführungsbeispielen erlaubt die Kombination aus einem Low Delay Telegramm und einem Standard TS-Telegramm eine Übertragung mit geringer Latenz (z. B eine schnelle Alarmierung), wobei die Standard TS-Telegramm Aussendung als Backup zur Erhöhung der Empfangswahrscheinlichkeit dient.

Bei Ausführungsbeispielen kann Datensenderseitig das Sprungmuster auf mehrere, z.B. zwei, Frequenzbänder aufgeteilt werden, wobei zwischen den Frequenzbändern eine Lücke vorhanden ist, welche nicht genutzt wird.

Bei Ausführungsbeispielen kann Datenempfängerseitig die Detektion der Telegramme z.B. nur in einem der beiden Bänder durchgeführt werden. Wird ein Telegramm in einem dieser beiden Bänder gefunden, kann aufgrund des festen Zeit-Frequenzabstandes automatisch auf die restlichen Sub-Pakete im anderen Band geschlossen werden.

3.3. Verschachtelung eines Low Delay Telegramms in einem Standard TS-Telegramm Sprungmuster

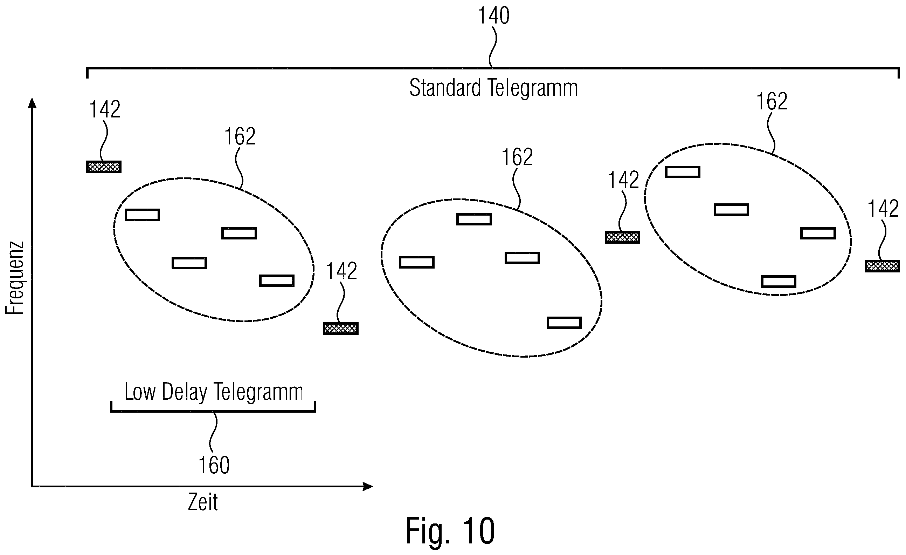

Bei Ausführungsbeispielen können die Daten unter Verwendung des ersten Sprungmusters 160 und wiederholt unter Verwendung des zweiten Sprungmusters 140 verschachtelt übertragen werden, so dass zumindest ein Sub-Datenpaket 142, das entsprechend des zweiten Sprungmusters 140 gesendet wird, zwischen zwei Sub-Datenpaketen 162, die entsprechend des ersten Sprungmusters 160 gesendet werden, angeordnet ist, wie dies in Fig. 10 gezeigt ist.

Im Detail zeigt Fig. 10 in einem Diagramm eine beispielhafte Belegung des Übertragungskanals bei der Übertragung der Mehrzahl von Sub-Datenpaketen 162 unter Verwendung des ersten Sprungmusters 160 und wiederholt unter Verwendung des zweiten Sprungmusters 140, wobei Sub-Datenpakete 162, die entsprechend des ersten Sprungmusters 160 übertragen werden zwischen Sub-Datenpaketen 142, die entsprechend des zweiten Sprungmusters 140 übertragen werden, angeordnet sind. Mit anderen Worten, Fig. 10 zeigt Low Delay Telegramme in einem Standard Telegramm verschachtelt.

Wie in Fig. 10 zu erkennen ist, können die Sprungmuster so gewählt werden, dass ein oder mehrere Low Delay Telegramme mit einem Standard TS-Telegramm verschachtelt ist bzw. sind. Vorteil dieses Verfahrens ist einerseits die kurze Latenz bei der Übertragung der Nachricht mit hoher Priorität durch das Low Delay Telegramm, andererseits die Zeitersparnis gegenüber der konsekutiven Aussendung eines Low Delay Telegramms und des Standard TS-Telegramms, d.h. eine kürzere Latenz auch in dem Falle, dass das Low Delay Telegramm nicht empfangen wird (z. B. durch Störungen) und eine Weitergabe der Nachricht erst nach vollständigem Empfang des Standard TS-Telegramm möglich ist.

Bei Ausführungsbeispielen können Datensenderseitig die Sprungmuster so definiert werden, dass ein oder mehrere Low Delay Telegramme und ein Standard TS-Telegramm ineinander verschachtelt werden können. Das heißt die Pausen zwischen den Sub-Paketen des Standard TS-Telegramm sind so groß, dass dort mindestens ein Sub-Paket des Low Delay Telegramms eingebracht werden kann.

Bei Ausführungsbeispielen kann der Empfänger zunächst das Low Delay Telegramm und Teile des Standard TS-Telegramms empfangen, und danach einen Dekodierversuch für das Low Delay Telegramm starten. Schlägt dieser fehl, kann der Empfänger das Low Delay Telegramm mit den bereits empfangenen Sub-Paketen des Standard TS-Telegramm für einen weiteren Dekodierversuch kombinieren. Schlägt dieser ebenfalls fehl, kann nach Empfang des kompletten Standard TS-Telegramms dieses (evtl. unter Einbeziehung der Sub-Pakete der Low Delay Telegramm) dekodiert werden.

4. Empfangsbestätigungen für kritische Nachrichten (in bidirektionalen Systemen)

4.1. Verkürztes Zeitfenster bis zum Down Link nach Low Delay Uplink

Bei Ausführungsbeispielen kann der Datensender 100 ausgebildet sein, um zeitlich synchronisiert zu dem Senden der Daten der ersten Klasse unter Verwendung des ersten Sprungmusters 160 eine erstes Signal 190 zu empfangen, und wobei der Datensender 100 ausgebildet sein kann, um zeitlich synchronisiert zu dem Senden der Daten der zweiten Klasse unter Verwendung des zweiten Sprungmusters 140 ein zweites Signal 192 zu empfangen, wobei ein zeitlicher Abstand zwischen dem ersten Sprungmuster 160 und der ersten Nachricht 190 kleiner ist als ein zeitlicher Abstand zwischen dem zweiten Sprungmuster 140 und der zweiten Nachricht.

Bei Ausführungsbeispielen kann der Datenempfänger 110 ausgebildet sein, um zeitlich synchronisiert zu dem Empfang der Daten der ersten Klasse unter Verwendung des ersten Sprungmusters 160 eine erste Nachricht zu senden, und wobei der Datenempfänger 110 ausgebildet sein kann, um zeitlich synchronisiert zu dem Empfang der Daten der zweiten Klasse unter Verwendung des zweiten Sprungmusters 140 eine zweite Nachricht 192 zu senden, wobei ein zeitlicher Abstand zwischen dem ersten Sprungmuster 160 und der ersten Nachricht 190 kleiner ist als ein zeitlicher Abstand zwischen dem zweiten Sprungmuster 140 und der zweiten Nachricht 192.

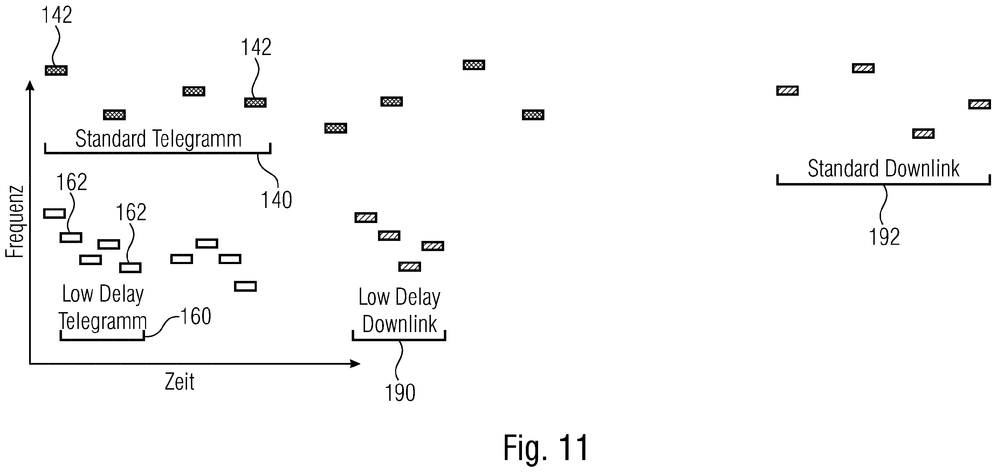

Beispielsweise kann die erste Nachricht eine erste Downlink-Nachricht 190 sein, die aufgeteilt auf eine Mehrzahl von Sub-Datenpaketen entsprechend eines ersten Downlink-Sprungmusters übertragen wird, wobei die zweite Nachricht eine zweite Downlink-Nachricht 192 sein kann, die aufgeteilt auf eine Mehrzahl von Sub-Datenpaketen entsprechend eines zweiten Downlink-Sprungmusters übertragen wird, wobei Sendepausen zwischen der Mehrzahl von Sub-Datenpaketen, die mittels des ersten Downlink-Sprungmusters übertragen werden, kürzer sind als Sendpausen zwischen der Mehrzahl von Sub-Datenpaketen, die mittels des zweiten Downlink-Sprungmusters übertragen , wie dies in Fig. 11 gezeigt ist.

Im Detail zeigt Fig. 11 in einem Diagramm eine beispielhafte Belegung des Übertragungskanals bei einer Übertragung der ersten Downlink-Nachricht 190 zeitlich synchronisiert zu einer Übertragung der ersten Mehrzahl von Sub-Datenpaketen 162 entsprechend des ersten Sprungmusters 160 im Vergleich zu einer Belegung des Übertragungskanals bei einer Übertragung der zweiten Downlink-Nachricht 192 zeitlich synchronisiert zu einer Übertragung der zweiten Mehrzahl von Sub-Datenpaketen 142 entsprechend des zweiten Sprungmusters 140. Mit anderen Worten, Fig. 11 zeigt verkürztes Zeitfenster zwischen einem Low Delay Up- und Downlink im Vergleich zum Standardfall.

Ein bidirektionales, nicht synchronisiertes System, das auf Energieeffizienz optimiert ist, ist üblicherweise dadurch gekennzeichnet, dass der Beginn des Downlink Slots durch ein festes Zeitintervall nach dem Ende des Uplink Slots definiert ist. Das bedeutet, eine Downlink-Nachricht kann nur nach einer Uplink-Nachricht versendet werden. Der Abstand zwischen Up- und Downlink-Nachricht ist fest definiert oder wird vorab signalisiert bzw. festgelegt.

Eine Anforderung für kritische Anwendungen kann jedoch sein, die Latenz in beiden Übertragungsrichtungen (Up- und Downlink) zu minimieren, um eine schnelle Bestätigung der Nachricht (ACK) versenden zu können.

Eine mögliche Lösung hierfür ist, dass als Reaktion auf den Empfang eines Low Delay Telegramm das Zeitintervall bis zum Beginn des Downlink Slots im Vergleich zum Standardfall verkürzt wird ("Low Delay Downlink"). Bei Standard-Telegrammen entspricht die Pause zwischen Uplink und Downlink üblicherweise ca. der Dauer eines Telegramms, d.h. ca. einigen Sekunden (Gründe sind Energieeffizienz / benötigte Zeit um Energiespeicher des Senders aufzuladen / Kapazitätsbegrenzung der Basisstation). Analog dazu kann im Fall eines empfangenen Low Delay Telegramm die Pause zwischen Up- und Downlink auf etwa die Dauer eines Low Delay Telegramms verkürzt werden.

Vorteil dieser Lösung ist, dass damit nicht nur eine geringe Latenz beim Versenden der Nachricht, sondern auch eine zeitnahe Bestätigung des Empfangs für den Sender der Nachricht möglich ist.

Bei Ausführungsbeispielen kann Datensenderseitig der Empfang eines Low Delay Telegramms zu einem - im Vergleich zum Standard TS-Telegramm - verkürzten Intervall zwischen dem Low-Delay Uplink und Beginn des Downlink-Slots führen.

Bei Ausführungsbeispielen der Empfänger den Empfang des Downlinks nach der Aussendung eines Low Delay Telegramm bereits nach einem - im Vergleich zum Standardfall - verkürzten Zeitfenster erwarten.

### 4.2. Low Delay Uplink fordert ACK

Anwendungen die eine geringe Latenz erfordern, d.h. zeitkritisch sind, sind häufig auch sicherheitskritisch (Beispiel: Alarmierung). In diesem Fall ist es ein Problem, dass der Sender keine Sicherheit darüber hat, ob die Nachricht erfolgreich übermittelt wurde.

Bei Ausführungsbeispielen kann der Datensender 100 ausgebildet ist, um auf das Senden der Daten der ersten Klasse eine Empfangsbestätigung von einem Datenempfänger 110 zu empfangen, die einen erfolgreichen Empfang der Daten der ersten Klasse signalisiert.

Bei Ausführungsbeispielen kann der Datenempfänger 110 ausgebildet sein, um

Beispielsweise kann in Kombination mit oder ergänzend zum Ausführungsbeispiel von Abschnitt 4.1 in einem bidirektionalen System gefordert werden, dass der Empfang eines Low Delay Telegramms von der Basisstation immer mit einer Empfangsbestätigung (ACK) bestätigt wird. Der Vorteil dieses Vorgehens ist, dass der Sender durch die Bestätigung Sicherheit hat, dass die Nachricht erfolgreich empfangen wurde.

Bei Ausführungsbeispielen kann Datenempfängerseitig auf den erfolgreichen Empfang eines Low Delay Telegramms zwingend ein ACK gesendet werden.

### 4.3. Low Delay Uplink wird gesendet bis ACK empfangen wird

Bei Ausführungsbeispielen kann der Datensender 100 ausgebildet sein, um die Daten der ersten Klasse solange wiederholt unter Verwendung des ersten Sprungmusters 160 oder eines anderen Sprungmusters auszusenden, bis die Empfangsbestätigung empfangen wurde.

Bei Ausführungsbeispielen kann der Datenempfänger 110 ausgebildet sein, um ansprechend auf einen erfolgreichen Empfang der Daten der ersten Klasse eine Empfangsbestätigung auszusenden, die einen erfolgreichen Empfang der Daten der ersten Klasse signalisiert, wobei der Datenempfänger ausgebildet sein kann, um die Empfangsbestätigung nur für die Daten der ersten Klasse auszusenden und nicht für die Daten der zweiten Klasse.

Ein Nachteil bei der Verwendung der Low Delay Telegramme ist deren geringere Störfestigkeit. Um die Wahrscheinlichkeit zu erhöhen, dass trotzdem mindestens ein Low Delay Telegramm erfolgreich empfangen wird, kann der Sender dieses solange aussenden, bis er eine Empfangsbestätigung (ACK) der Basisstation empfängt. Auf den Empfang des ACK hin stellt der Sender die Aussendung ein. Dieses Verfahren hat mehrere Vorteile: Es erhöht für jeden einzelnen Sendeknoten die Wahrscheinlichkeit, dass seine Low Delay Telegramm-Übertragung erfolgreich empfangen wird. Durch die Einstellung der Aussendung auf den ACK hin, wird außerdem belegte Kanalkapazität freigeben. Dies erhöht zusätzlich in Szenarien, in denen mehrere oder viele Sensorknoten gleichzeitig ein Low Delay Telegramm übertragen wollen, die Empfangswahrscheinlichkeit des Gesamtsystems.

Bei Ausführungsbeispielen kann Datenempfängerseitig auf den erfolgreichen Empfang eines Low Delay Telegramms wird zwingend ein ACK gesendet werden.

Bei Ausführungsbeispielen kann der Endknoten ein Low Delay Telegramm solange senden, bis ein ACK empfangen wird und dann die Übertragung eingestellt wird.

### 4.4. Downlink in Uplink verschachtelt

Um die Empfangswahrscheinlichkeit für ein z.B. als Alarmsignal ausgesandtes Telegramm zu erhöhen, kann dieses kontinuierlich gesendet werden bis ein ACK empfangen wird (siehe Ausführungsbeispiel gemäß Abschnitt 4.3). Im Normalfall muss hierfür nach einigen Aussendungen (z.B. zwei) eine Sendepause eingehalten werden, um den ACK empfangen zu können.

Bei Ausführungsbeispielen kann der Datensender 100 jedoch ausgebildet sein, um die Empfangsbestätigung von dem Datenempfänger 110 zeitlich überlappend zu (1) der Aussendung der Daten der ersten Klasse unter Verwendung des ersten Sprungmusters oder (2) der Daten der zweiten Klasse unter Verwendung des zweiten Sprungmusters zu empfangen, so dass zumindest ein Sub-Datenpaket, das entsprechend des jeweiligen Sprungmusters gesendet wird, zwischen zwei Sub-Datenpaketen eines Sprungmusters, mit dem die Empfangsbestätigung des Datenempfängers ausgesendet wird, angeordnet ist.

Bei Ausführungsbeispielen kann der Datenempfänger 110 ausgebildet sein, um die Empfangsbestätigung unter Verwendung eines Sprungmusters zeitlich überlappend zu dem Empfang (1) er Daten der ersten Klasse unter Verwendung des ersten Sprungmusters, oder (2) der Daten der zweiten Klasse unter Verwendung des zweiten Sprungmusters derart auszusenden, dass zumindest ein Sub-Datenpaket, das entsprechend des ersten Sprungmusters oder zweiten Sprungmusters übertragen wird, zwischen zwei Sub-Datenpaketen des Sprungmusters, mit dem die Empfangsbestätigung ausgesendet wird, angeordnet ist.

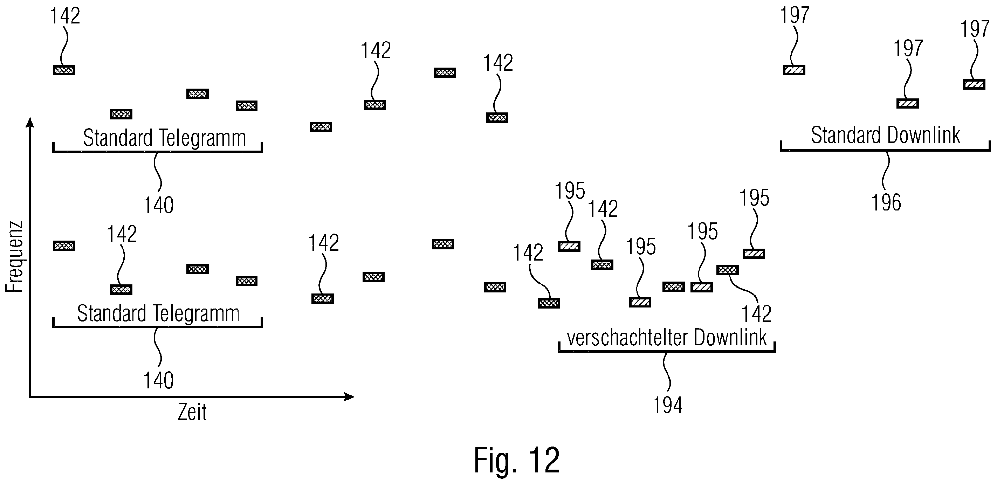

Fig. 12 zeigt in einem Diagramm eine beispielhafte Belegung des Übertragungskanals bei einer Übertragung einer Empfangsbestätigung 194 aufgeteilt auf eine Mehrzahl von Sub-Datenpaketen 195 zeitlich verschachtelt zu der Übertragung der ersten Mehrzahl von Sub-Datenpaketen 142 entsprechend des zweiten Sprungmusters 140 im Vergleich zu einer Belegung des Übertragungskanals bei einer Übertragung einer Empfangsbestätigung 196 aufgeteilt auf eine Mehrzahl von Sub-Datenpaketen 197 zeitlich nach der Übertragung der ersten Mehrzahl von Sub-Datenpaketen 142 entsprechend des zweiten Sprungmusters 140. Mit anderen Worten, Fig. 12 zeigt oben den Standardfall und unten den verschachtelten Downlink mit dem Vorteil, dass ein zusätzliches Telegramm ausgesendet werden kann und gleichzeitig der Downlink früher empfangen werden kann.

Mit anderen Worten, alternativ ist es möglich, nach einer Zeitdauer die dem Zeitintervall zwischen Uplink und Downlink Slot entspricht, den Downlink in das weiterhin ausgesandte Uplink Hopping Pattern zu verschachteln. Vorteil dieser Lösung ist, dass kein Zeitslot für die Aussendung des Alarms verloren geht, und damit die Empfangswahrscheinlichkeit maximiert wird, gleichzeitig aber die Zeitdauer bis zum Empfang des ACK minimiert wird, um eine möglichst zeitnahe Bestätigung des Empfangs des Alarms zu ermöglichen.

Bei Ausführungsbeispielen kann Datenempfängerseitig nach dem Empfang mindestens eines Standard TS-Telegramms und dem Zeitfenster bis zum Beginn des Downlink Slots das Sprungmuster für ein Standard TS-Telegramm im Downlink so gewählt werden, dass es in den weiterhin ausgesendeten Uplink verschachtelt werden kann.

Bei Ausführungsbeispielen kann sowohl Datensenderseitig die Basisstation den Downlink parallel zum Empfang senden, wobei Datenempfängerseitig der Sensorknoten den Downlink parallel zur Aussendung des Uplinks empfängt. Mit anderen Worten, sowohl Datensender als auch Datenempfänger wechseln während eines Telegramms zwischen Sende- und Empfangszweig.

### 4.5. Kombination verschachtelter Downlink mit Low Delay Uplink

Um das für kritische Anwendungen wichtige Ziel einer kurzen Latenz bis zur erfolgreichen Benachrichtigung zu erreichen, können aufbauend auf das vorangehende Ausführungsbeispiel aus Abschnitt 4.4 die ersten Aussendungen eines Standard TS-Telegramms durch die Aussendung mehrerer Low Delay Telegramme ersetzt werden, um die Latenz zu reduzieren. Auf eine Folge mehrerer (z.B. zwei) Low Delay Telegramme folgt dann die Aussendung eines Standard TS-Telegramms im Uplink um im Downlink zeitgleich das verschachtelte ACK empfangen zu können. Die Vorteile sind eine reduzierte Latenz bis zum ersten möglichen Empfang des Telegramms, sowie eine erhöhte Sicherheit für den Fall des Nicht-Empfangs der Low Delay Telegramme, da durch Verzicht auf eine Pause für den Downlink erstens eine zusätzliche Aussendung stattfindet und zweitens durch das Standard TS-Telegramm die Empfangswahrscheinlichkeit noch weiter erhöht wird.

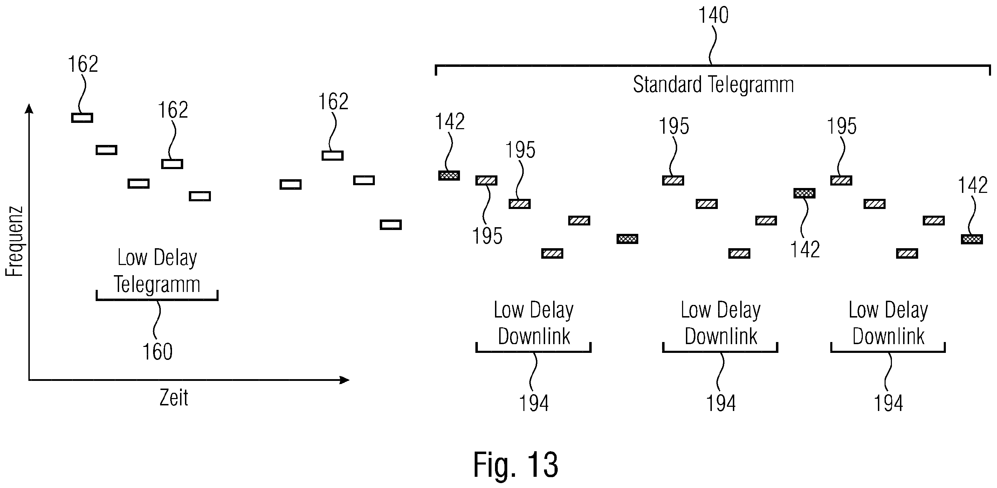

Fig. 13 zeigt eine Belegung des Übertragungskanals bei der Übertragung der ersten Mehrzahl von Sub-Datenpaketen 162 entsprechend des ersten Sprungmusters 160, der Übertragung der zweiten Mehrzahl von Sub-Datenpaketen 142 entsprechend des zweiten Sprungmusters 140 und der Übertragung einer Empfangsbestätigung 194 aufgeteilt auf eine Mehrzahl von Sub-Datenpaketen 195 zeitlich verschachtelt zu der Übertragung der zweiten Mehrzahl von Sub-Datenpaketen 142 entsprechend des zweiten Sprungmusters 140. Mit anderen Worten, Fig. 13 zeigt einen Low Delay Uplink gefolgt von einer Aussendung eines Standard Telegramms, in dessen Pausen der Low Delay Downlink verschachtelt ist.

Bei Ausführungsbeispielen kann Datensenderseitig ach der Aussendung einer oder mehrerer (z.B. zwei) Low Delay Telegramme ein Standard TS-Telegramm ausgesendet werden und gleichzeitig im Downlink ein evtl. ACK empfangen werden. Die Pausen zwischen den Subpaketen des Standard TS-Telegramms können für weitere Downlink-Slots genutzt werden.

Bei Ausführungsbeispielen können Datensenderseitig zwischen den Sub-Paketen des Standard TS-Telegramms die Pausen für den Empfang der Downlink-Nachricht genutzt werden, das heißt der Sensorknoten wechselt zwischen Sende- und Empfangszweig innerhalb eines Telegramms.

5. Multi-Carrier Übertragung

Die Sprungmuster der Übertragung wurden bisher so definiert, dass zu jedem beliebigen Zeitpunkt der Telegrammübertragung maximal eine Aussendung eines Sub-Pakets stattfindet. Dies hat den Vorteil, dass nahezu jeder auf dem Markt verfügbare Funkchip für die Aussendung verwendet werden kann.

Nachteil ist jedoch, dass durch diese Einschränkung und den Pausen beim Telegram-Splitting hohe Latenzen entstehen.

5.1. Voll überlappender Muli-Carrier Mode

Bei Ausführungsbeispielen kann der Datensender 100 ausgebildet sein, um zumindest zwei Sub-Datenpakete 162 entsprechend des ersten Sprungmusters 160 auf unterschiedlichen Frequenzen und sich vollständig zeitlich überlappend zu senden.

Bei Ausführungsbeispielen kann der Datenempfänger 110 ausgebildet sein, um zumindest zwei Sub-Datenpakete 162 entsprechend des ersten Sprungmusters 160 auf unterschiedlichen Frequenzen und sich vollständig zeitlich überlappend zu empfangen.

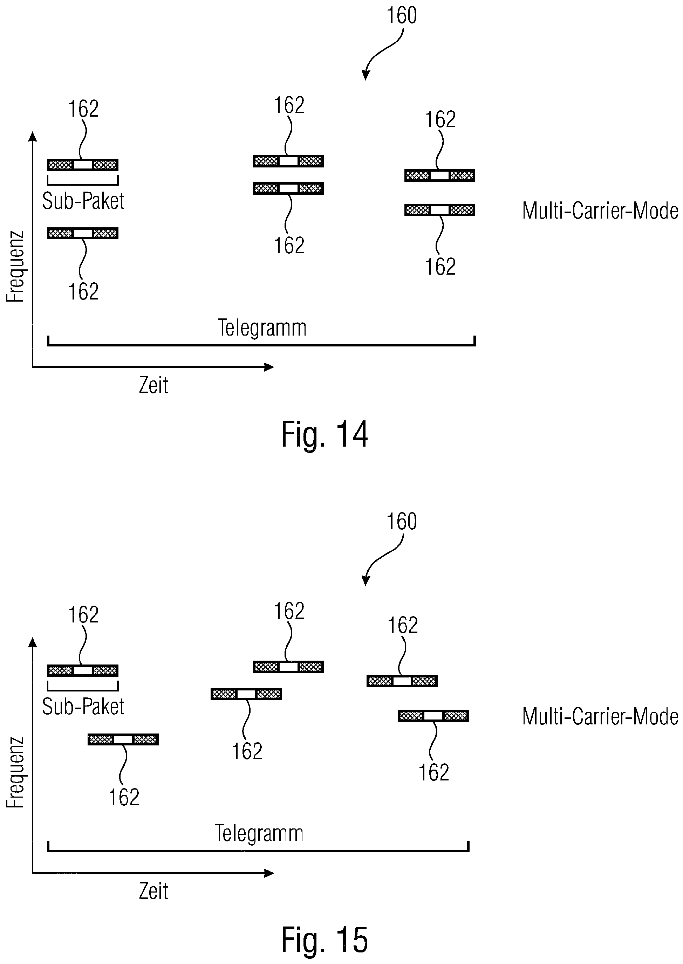

Fig. 14 zeigt in einem Diagramm eine beispielhafte Belegung des Übertragungskanals bei der Übertragung der ersten Mehrzahl von Sub-Datenpaketen 162 entsprechend des ersten Sprungmusters 160 derart, dass sich Sub-Datenpakete 162 auf unterschiedlichen Frequenzen vollständig zeitlich überlappen. Mit anderen Worten, Fig. 14 zeigt eine Multi-Carrier-Mode mit Telegram Splitting.

Wie in Fig. 14 zu erkennen ist, besteht die Möglichkeit eine sog. Multi-Carrier Aussendung vorzunehmen, sofern spezielle Funkchips, ein SDR-Frontend oder ähnliche Sender eingesetzt werden, die die Möglichkeit besitzen parallel auf mehreren Frequenzen senden zu können.

In Kombination mit dem Telegram Splitting bedeutet dies, dass zu gewissen Zeitpunkten mehrere Sub-Pakete parallel ausgesendet werden. Aber es gibt auch Zeiten innerhalb des Telegramms in welcher keine Aussendung (Sendepause) stattfindet.

Bisher eingesetzte Empfänger können ohne Modifikation der Algorithmen weiterverwendet werden (unter Anpassung des Sprungmusters), da in der Regel im Empfänger bereits eine Kanalzerlegung implementiert ist.

Bei Ausführungsbeispielen kann Datensenderseitig das Sprungmuster so definiert werden, dass zu mindestens einem Zeitpunkt eine parallele Aussendung stattfindet.

5.2. Teil überlappender Muli-Carrier Mode

Das vorherige Ausführungsbeispiel gemäß Abschnitt 5.1 hat unter gewissen Umständen den Nachteil einer geringeren Störfestigkeit bei Breitbandstörungen, da dieser nun bei Auftreten im Vergleich zum bisherigen Telegramm Splitting mehr als ein Sub-Paket zerstören kann. Dies bedingt sich in der Bandbreite der Störungen, da diese in der Regel größer ist als die typischen Sprungweiten des Telegram Splittings.

Diese Breitbandstörungen sind aufgrund der hohen Symbolrate (die Symbolrate steht im Zusammenhang mit der Bandbreite) jedoch nur sehr kurz in der Sendedauer. Daher ist es möglich die Störfestigkeit zu erhöhen, in dem die Sub-Pakete nur teilweise überlagert gesendet werden.

Bei Ausführungsbeispielen kann der Datensender 100 also ausgebildet sein, um zumindest zwei Sub-Datenpakete 162 entsprechend des ersten Sprungmusters 160 auf unterschiedlichen Frequenzen und sich teilweise zeitlich überlappend zu senden.

Bei Ausführungsbeispielen kann der Datenempfänger 110 ausgebildet sein, um zumindest zwei Sub-Datenpakete 162 entsprechend des ersten Sprungmusters 160 auf unterschiedlichen Frequenzen und sich teilweise zeitlich überlappend zu empfangen.

Fig. 15 zeigt in einem Diagramm eine beispielhafte Belegung des Übertragungskanals bei der Übertragung der ersten Mehrzahl von Sub-Datenpaketen 162 entsprechend des ersten Sprungmusters 160 derart verteilt in der Zeit und der Frequenz, dass sich Sub-Datenpakete 162 auf unterschiedlichen Frequenzen teilweise überlappen. Mit anderen Worten, Fig. 14 zeigt einen Multi-Carrier-Mode mit Teilüberlagerungen bei Telegram Splitting.

Wie in Fig. 15 zu erkennen ist, kann durch die nur noch teilweise Überlagerung der Sub-Pakete die Wahrscheinlichkeit reduziert werden, dass ein Breitbandstörer mehr als ein Sub-Paket zerstört auf den Bereich, in dem die Überlagerte Aussendung stattfindet.

Bei Ausführungsbeispielen kann Datensenderseitig das Sprungmuster so definiert werden, dass zu mindestens einem Zeitpunkt eine parallele Aussendung stattfindet, wobei die Überlagerung auch nur in einen Teil eines Sub-Pakets auftreten kann.

6. Kombination aus klassischer Übertragung und Telegramm Splitting

Unter der Bedingung, dass bei einer Low-Delay Nachricht die Übertragungssicherheit nicht ausschlaggebend ist, kann zunächst eine Aussendung der Nachricht als klassisches Telegramm erfolgen. Im Anschluss kann die Nachricht mittels Telegramm Splitting wiederholt werden.

Bei Ausführungsbeispielen kann der Datensender 100 ausgebildet sein, um Daten einer ersten Klasse unter Verwendung eines Datenpakets 150 auszusenden, und wobei der Datensender 100 ausgebildet sein kann, um die Daten wiederholt unter Verwendung einer Mehrzahl von Sub-Datenpaketen 162 auszusenden, wobei die Mehrzahl von Sub-Datenpaketen 162 entsprechend eines ersten Sprungmusters 160 ausgesendet werden.

Bei Ausführungsbeispielen kann der Datenempfänger 110 ausgebildet sein, um die Daten der ersten Klasse, die unter Verwendung des einen Datenpakets 150 übertragen werden, zu empfangen, und wobei der Datenempfänger 110 ausgebildet sein kann, um die Daten der ersten Klasse, die wiederholt unter Verwendung der Mehrzahl von Sub-Datenpaketen 162 entsprechend des ersten Sprungmusters 160 übertragen werden, zu empfangen.

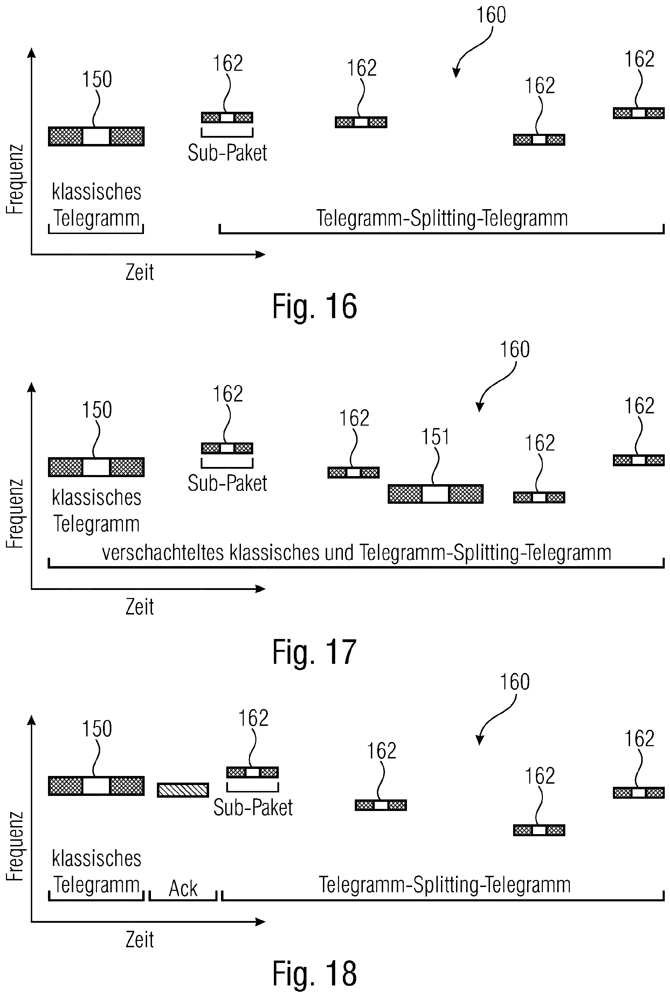

Fig. 16 zeigt in einem Diagramm eine beispielhafte Belegung des Übertagungskanals bei der Übertragung von Daten einer ersten Klasse unter Verwendung eines Datenpakets und wiederholt unter Verwendung einer Mehrzahl von Sub-Datenpaketen 162 entsprechend eines ersten Sprungmusters in der Zeit und der Frequenz verteilt. Mit anderen Worten, Fig. 16 zeigt eine Kombination aus einem klassischen Telegramm und einem Telegramm mit Telegram-Splitting.

Der zeitliche Abstand sowie der optionale Frequenzoffset zwischen dem klassischen Telegramm und dem Telegram-Splitting Telegramm kann frei gewählt werden. In diesem Fall ist nur eine getrennte Decodierung der Nachricht möglich, außer die Detektion kann beide Telegramme Detektieren und eine erfolgreiche Synchronisation durchführen.

Optional kann der Zeit- und Frequenzabstand zwischen den beiden Aussendungen auch fix gewählt werden. In diesem Fall ist eine Kombination der beiden Aussendungen möglich, es genügt, wenn nur eines der beiden Telegramme detektiert wurde und für die Synchronisation verwendet werden kann.

Bei Ausführungsbeispielen kann Datensenderseitig zunächst immer eine Aussendung mit einem klassischen Übertragungsverfahren (z. B. BPSK ohne Pausen) durchgeführt werden. Im Anschluss folgen Wiederholungen mit Telegram-Splitting.

Bei Ausführungsbeispielen kann der Empfänger zwei getrennte Verarbeitungsstränge besitzen. Einer ist für die Detektion und Verarbeitung des klassischen Übertragungsverfahrens zuständig und ein weiterer für die Verarbeitung des Telegram-Splitting. Optional kann eine Kombination aus beiden Übertragungen vorgenommen werden, wenn Zeit und Frequenz zwischen den beiden Aussendungen bekannt ist oder ein Hypothesentest durchgeführt wird.

6.1. Verschachtelte Aussendung der klassischen Übertragung mit Telegram-Splitting

Das Ausführungsbeispiel gemäß Abschnitt 6 besitzt unter gewissen Umständen den Nachteil, dass bei einer nicht korrekten Übertragung mit Hilfe des klassischen Übertragungsverfahrens die Latenz sehr stark ansteigt. Eine Möglichkeit zur Lösung dieses Problems wäre es zum Beispiel die Aussendung mit Hilfe des klassischen Übertragungsverfahrens zu wiederholen (z.B. zwei oder dreimal) bevor die Übertagung mit Telegram-Splitting durchgeführt wird.

Dies erhöht die Durchkommenswahrscheinlichkeit, hat aber weiterhin den Nachteil, dass es bei stark gestörten Kanälen immer noch eine vergleichbar hohe Ausfallrate für die klassische Übertragung gibt. In diesen Kanälen ist es somit wahrscheinlicher, dass die klassischen Telegramme auch bei Wiederholung nicht korrekt empfangen werden können, als die Übertragung mit Telegram-Splitting.

Damit ergibt sich für diese Kanäle weiterhin das Problem der sprunghaft ansteigenden Latenz bei der Übertragung.

Bei Ausführungsbeispielen kann der Datensender 100 daher ausgebildet sein, um die Daten der ersten Klasse ferner wiederholt unter Verwendung eines weiteren Datenpakets 151 auszusenden. Dabei kann der Datensender 100 ausgebildet sein, um die Daten der ersten Klasse unter Verwendung des weiteren Datenpakets 151 und unter Verwendung der Mehrzahl von Sub-Datenpaketen 162 zeitlich verschachtelt auszusenden, so dass das weitere Datenpaket 151 zeitlich zwischen zwei der Mehrzahl von Sub-Datenpaketen 162 angeordnet ist.

Bei Ausführungsbeispielen kann der Datenempfänger 110 ausgebildet sein, um die Daten der ersten Klasse ferner wiederholt unter Verwendung eines weiteren Datenpakets 151 zu empfangen. Dabei kann wobei Datenempfänger 110 ausgebildet sein, um die Daten der ersten Klasse unter Verwendung des weiteren Datenpakets 151 und unter Verwendung der Mehrzahl von Sub-Datenpaketen 162 zeitlich verschachtelt zu empfangen, so dass das weitere Datenpaket 151 zeitlich zwischen zwei der Mehrzahl von Sub-Datenpaketen 162 angeordnet ist.

Fig. 17 zeigt in einem Diagramm eine Belegung des Übertragungskanals bei der Übertragung von Daten einer ersten Klasse unter Verwendung eines Datenpakets 150 und wiederholt unter Verwendung eines weiteren Datenpakets 151 und wiederholt unter Verwendung einer Mehrzahl von Sub-Datenpaketen 162, die entsprechend eines Sprungmusters in der Zeit und Frequenz verteilt sind, wobei das weitere Datenpaket 151 und die Mehrzahl von Sub-Datenpaketen 162 derart verschachtelt sind, dass das weitere Datenpaket 151 zeitlich zwischen zwei der Mehrzahl von Sub-Datenpaketen 162 angeordnet ist. Mit anderen Worten, Fig. 17 zeigt eine verschachtelte Aussendung eines Telegramms mit klassischem Übertragungsverfahren und einem Telegramm mit Telegramm-Splitting.

Wie in Fig. 17 zu erkennen ist, kann das eingangs erwähnte Problem umgangen werden, indem in die (mehrfache) Übertragung des Telegramms mit dem klassischen Übertragungserfahren verschachtelt mit dem Telegram-Splitting Telegramm übertragen wird.

Das Sprungmuster kann hierzu so definiert werden, dass die Pausen zwischen den Sub-Paketen so groß sind, dass ein Telegramm mit klassischen Übertragungserfahren in diese Lücke passt oder es wird eine Punktierung des Telegram-Splitting Telegramms durchgeführt.

Bei Ausführungsbeispielen kann Datensenderseitig die (wiederholte) Aussendung mit einem klassischen Übertragungsverfahren (z. B. BPSK ohne Pausen) verschachtelt mit der Übertragung des Telegramms mit Telegramm-Splitting erfolgen.

Bei Ausführungsbeispielen kann der Empfänger zwei getrennte Verarbeitungsstränge besitzen. Einer ist für die Detektion und Verarbeitung des klassischen Übertragungsverfahrens zuständig und ein weiterer für die Verarbeitung des Telegram-Splitting. Optional kann eine Kombination aus beiden Übertragungen vorgenommen werden, wenn Zeit und Frequenz zwischen den beiden Aussendungen bekannt ist oder ein Hypothesentest durchgeführt wird.

6.2. Empfangsbestätigung (engl. acknowledge) bei bidirektionalen Systemen

Bei Ausführungsbeispielen kann der Datensender ausgebildet sein, um einen zeitlichen Abstand zwischen der Aussendung des Datenpakets 150 und der Mehrzahl von Sub-Datenpaketen 162 so groß zu wählen, dass ein Empfang einer Empfangsbestätigung 154 von einem Datenempfänger 110 in dem zeitlichen Abstand möglich ist.

Bei Ausführungsbeispielen kann der Datenempfänger 110 ausgebildet sein, um in einem zeitlichen Abstand zwischen dem Empfang des Datenpakets 150 und der Mehrzahl von Sub-Datenpaketen 150 eine Empfangsbestätigung 154 zu senden.

Fig. 18 zeigt in einem Diagramm eine beispielhafte Belegung des Übertagungskanals bei der Übertragung von Daten einer ersten Klasse unter Verwendung eines Datenpakets 150 und wiederholt unter Verwendung einer Mehrzahl von Sub-Datenpaketen 162 entsprechend eines ersten Sprungmusters 160 in der Zeit und Frequenz verteilt, und einer Übertragung einer Empfangsbestätigung 154 in einem zeitlichen Abstand zwischen dem Datenpaket 150 und der Mehrzahl von Sub-Datenpaketen 162. Mit anderen Worten, Fig. 18 zeigt eine Kombination aus einem klassischem Telegramm und einem Telegramm mit Telegram-Splitting mit einer Empfangsbestätigung für das klassische Übertragungsverfahren.

Wie in Fig. 18 zu erkennen ist, kann ergänzend zu den beiden vorhergehenden Ausführungsbeispielen aus den Abschnitten 6 und 6.1 bei einem bidirektionalen System die Pause zwischen der klassischen Aussendung und dem Telegramm mit Telegram-Splitting bzw. bei dem Ausführungsbeispiel gemäß Abschnitt 6.1 die Pause zum nächsten Sub-Paket so groß gewählt werden, dass zwischen den beiden Aussendungen vom Empfänger der Nachricht eine Empfangsbestätigung zurückgeschickt werden kann.

Wird die Empfangsbestätigung vom Sender der ursprünglichen Nachricht korrekt empfangen, kann die Aussendung des Telegram-Splitting Telegramms ausgelassen werden, da der korrekte Empfang der Nachricht am Empfänger bereits quittiert wurde.

Andernfalls, falls keine Empfangsbestätigung vom Empfänger der Nachricht empfangen wurde, kann die Aussendung des Telegramms mit Telegram-Splitting erfolgen. Im Falle, dass für die Nachricht eine hohe Priorität der Nachricht besteht, kann auch eine weitere Aussendung des klassischen Telegramms erfolgen.

Die Empfangsbestätigung kann im gleichen Frequenzband erfolgen oder aber auch in einem anderen Frequenzband, in welchem beispielsweise weniger Störungen vorhanden sind.

Bei Ausführungsbeispiele kann Datenempfängerseitig, sofern die Aussendung mit einem klassischen Übertragungsverfahren korrekt empfangen wurde, der Empfänger der Nachricht eine Empfangsbestätigung an den Sender zurücksenden, wobei Datensenderseitig der Datensender je nach Empfang (oder nicht Empfang) der Empfangsbestätigung entscheiden kann, ob weitere Aussendungen erfolgen.

Bei Ausführungsbeispielen kann der Empfänger zwei getrennte Verarbeitungsstränge besitzen. Einer ist für die Detektion und Verarbeitung des klassischen Übertragungsverfahrens zuständig und ein weiterer für die Verarbeitung des Telegram-Splitting. Optional kann eine Kombination aus beiden Übertragungen vorgenommen werden, wenn Zeit und Frequenz zwischen den beiden Aussendungen bekannt ist oder ein Hypothesentest durchgeführt wird.

### 7. Informationscodierung im Sprungmuster

Wie bereits in Abschnitt 1.2 beschrieben, kann die Anzahl der zu übertragenden Sub-Pakete reduziert werden, um die Latenz der Übertragung zu reduzieren. Hierfür wird in Abschnitt 1.2 die Länge der Sub-Pakete vergrößert, um die gleiche Menge an Daten mit weniger Sub-Paketen übertragen zu können. Dies hat jedoch den Nachteil, dass die Störfestigkeit des Systems sinkt.

Um das eingangs erwähnte Problem zu lösen, kann die Informationscodierung (eines Teils) der Daten in das Sprungmuster erfolgen. Das bedeutet, es wird nun nicht mehr ein vorab fest definiertes Muster eingesetzt, sondern die Lage der Sub-Pakete in Frequenz und/oder Zeit definieren die Datensymbole.

Bei Ausführungsbeispielen kann der Datensender 100 also ausgebildet sein, um zumindest einen Teil des ersten Sprungmusters aus den Daten der ersten Klasse oder einer kanalcodierten Version der Daten der ersten Klasse zu berechnen, so dass zumindest ein Teil des ersten Sprungmusters selbst zumindest ein Teil der Daten der ersten Klasse codiert.

Beispielsweise kann eine erste Gruppe von Sprüngen des ersten Sprungmusters fest vorgegeben sein, wobei der Datensender eine zweite Gruppe von Sprüngen des ersten Sprungmusters aus den Daten der ersten Klasse oder einer kanalcodierten Version der Daten der ersten Klasse berechnen kann, so dass die zweite Gruppe von Sprüngen des ersten Sprungmusters selbst zumindest ein Teil der Daten der ersten Klasse codiert. Der Datensender 100 kann dabei ausgebildet sein, um die erste Mehrzahl von Sub-Datenpaketen entsprechend der ersten Gruppe von Sprüngen und der zweiten Gruppe von Sprüngen zu senden.

Bei Ausführungsbeispielen kann der Datenempfänger 110 ausgebildet sein, um das Muster der zweiten Gruppe von Sprüngen des ersten Sprungmusters zu decodieren, um zumindest den Teil der Daten der ersten Klasse oder die kanalcodierte Version der Daten der ersten Klasse zu erhalten.

Bei Ausführungsbeispielen kann dies exklusiv für die Modulation der Datenbits eingesetzt werden (das heißt die gesamte Information ist in das Sprungmuster codiert), dann bestehen die Symbole innerhalb der Sub-Pakete aus einer reinen Synchronisationssequenz oder die Sub-Pakete enthalten neben der Synchronisationssequenz weitere Datenbits, die entsprechend der Modulationsvorschrift auf Symbole gemappt wurden. In diesem Fall setzt sich die Datenübertragung aus der Information im Sprungmuster und der Information in den Symbolen der Sub-Pakete zusammen.

Im Empfänger kann mittels Hypothesentest das Sprungmuster detektiert werden und aus den ermittelten Frequenzen und Zeitabständen der Sub-Pakete können die Datenbits extrahiert werden.

Beispielsweise können zwei Trägerfrequenzen (fc1 und fc2) definiert werden. Soll als Datenbit eine Eins gesendet werden, wird die Frequenz fc1 als Trägerfrequenz verwendet, andernfalls bei einer Null als Datenbit wird Frequenz fc2 verwendet.

Die Zuordnung von Frequenzen und Zeiten kann beliebig erfolgen, muss nur sowohl dem Sender, als auch dem Empfänger bekannt sein.

Optional kann vor der Zuordnung der Datenbits zu den jeweiligen Frequenzen und/oder Zeitabständen eine Kanalcodierung der Datenbits erfolgen um Fehler die bei der Übertragung (z. B. durch Rauschen oder Störungen) oder im Empfänger bei der Schätzung entstehen, korrigieren zu können. Durch diese Kanalcodierung besteht die Möglichkeit diese Methodik auch in Interferenzkanälen und bei geringem SNR einzusetzen, bei welcher nicht für alle Sub-Pakete die zeitliche Lage und/oder die Frequenz bestimmt werden können.

Bei Ausführungsbeispielen kann Datensenderseitig die Lage der Sub-Pakete in Zeit- und/oder Frequenz von (einem Teil) der zu übertragenen Information abhängig sein.

Bei Ausführungsbeispielen kann der Empfänger mittels Hypothesentest (z. B einer Korrelation mit der Synchronisationssequenz im Sub-Paket) die Zeit- und/oder Frequenzabstände zwischen den Sub-Paketen ermitteln, um daraus die übertragene Information extrahieren zu können.

7.1. Vereinfachte Detektion mit Hilfe einer fest definierten Referenz

Das Ausführungsbeispiel gemäß Abschnitt 6 besitzt unter Umständen den Nachteil, dass der Empfänger bei nicht synchronisierten Systemen keine Information besitzt, wo und wann das Telegramm startet. Durch die Codierung der Information auf das Sprungmuster, ist es nicht mehr ohne weiteres möglich eine Telegrammdetektion durchführen zu können, da die Positionen der Sub-Pakete in Zeit und/oder Frequenz variieren.

Somit muss der Empfänger kontinuierlich nach einem Telegramm suchen, wobei er alle Möglichkeiten des Sprungmusters untersuchen muss. Steht nur eine begrenzte Rechenleistung zur Verfügung, ist es in der Regel nicht möglich alle Kombinationen der Übertragung abzusuchen.

Bei Ausführungsbeispielen kann der Datensender 100 daher ausgebildet sein, um die erste Mehrzahl von Sub-Datenpaketen 162 entsprechend des ersten Sprungmusters 160 verteilt zeitlich synchronisiert zu einem Synchronisationssignal zur Synchronisation in einem Datenempfänger zu senden.

Bei Ausführungsbeispielen kann der Datenempfänger 110 ausgebildet sein, um die erste Mehrzahl von Sub-Datenpaketen 162, entsprechend des ersten Sprungmusters 160 verteilt übertragen werden, in einem Empfangsdatenstrom unter Verwendung des Synchronisationssignals zu detektieren, wobei der Datenempfänger ausgebildet sein, um das erste Sprungmuster selbst zu decodieren, um zumindest den Teil der Daten der ersten Klasse oder die kanalcodierte Version der Daten der ersten Klasse zu erhalten.

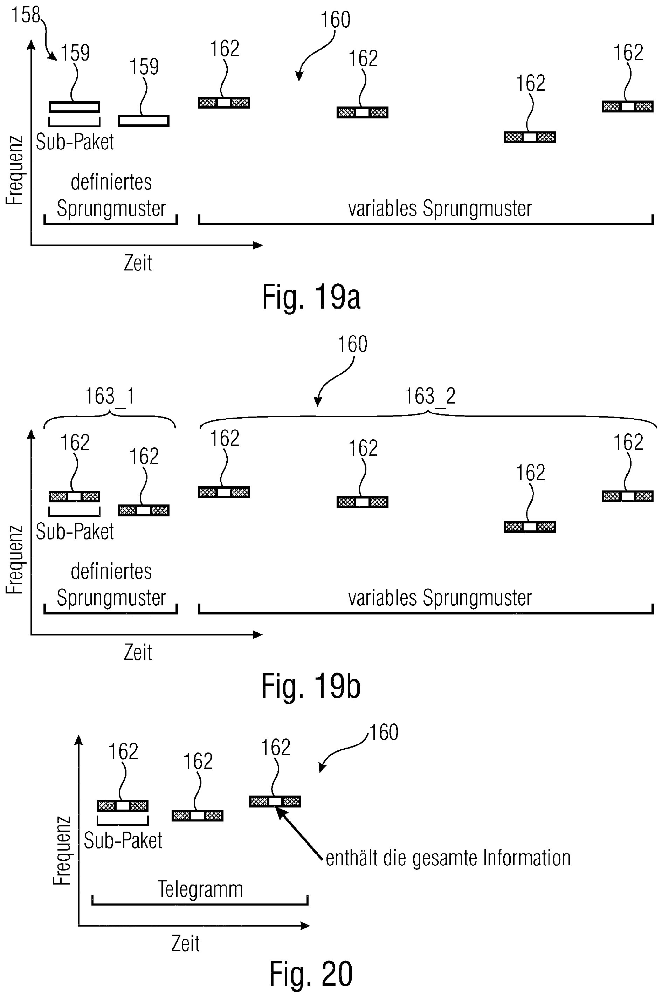

Fig. 19a zeigt in einem Diagramm eine beispielhafte Belegung des Übertragungskanals bei der Übertragung der ersten Mehrzahl von Sub-Datenpaketen 162 entsprechend des ersten Sprungmusters 160 in der Zeit und Frequenz verteilt zeitlich synchronisiert zu einem Synchronisationssignal 158. Das Synchronisationssignal 158 kann beispielsweise zwei (oder mehr) Sub-Datenpakete 159 mit Synchronisationssequenzen zur Synchronisation der Sub-Datenpakete 159 in einem Datenempfänger 110 aufweisen, wobei die zwei (oder mehr) Sub-Datenpakete 159 entsprechend eines festen (nicht variablen oder vorgegebenen) Sprungmusters übertragen werden. Mit anderen Worten, Fig. 19a zeigt eine Kombination aus einem festen und variablem Sprungmuster.

Bei Ausführungsbeispielen kann vor der eigentlichen Übertragung ein/mehrere Synchronisationsbursts (im Grenzfall ist dies nur ein Sub-Paket) mit einem festen Sprungmuster versendet werden (siehe Abbildung 11 untere Skizze). Diesen Teil der Übertragung kann der Empfänger zur Telegrammdetektion nutzen.

Bei Ausführungsbeispielen kann der Datensender 100 alternativ auch ausgebildet sein, um die erste Mehrzahl von Sub-Datenpaketen 162 entsprechend einer ersten Gruppe 163_1 von Sprüngen und einer zweiten Gruppe 163_2 von Sprüngen des ersten Sprungmusters 160 zu senden, wobei die erste Gruppe 163_1 von Sprüngen fest vorgegeben ist, und wobei der Datensender 100 ausgebildet ist, um die zweite Gruppe 163_2 von Sprüngen aus den Daten der ersten Klasse oder einer kanalcodierten Version der Daten der ersten Klasse zu berechnen, so dass die zweite Gruppe 163_1 von Sprüngen des ersten Sprungmusters selbst zumindest ein Teil der Daten der ersten Klasse codiert.

Fig. 19b zeigt in einem Diagramm eine beispielhafte Belegung des Übertragungskanals bei der Übertragung der ersten Mehrzahl von Sub-Datenpaketen 162 entsprechend eines Sprungmusters mit einer ersten Gruppe 163_1 von Sprüngen und einer zweiten Gruppe 163_2 von Sprüngen, wobei die erste Gruppe 163_1 von Sprüngen fest vorgegeben ist, und wobei die zweite Gruppe 163_2 von Sprüngen aus den Daten der ersten Klasse oder einer kanalcodierten Version der Daten der ersten Klasse berechnet ist. Mit anderen Worten, Fig. 19b zeigt eine Kombination aus einem festen und einem variablen Sprungmuster.

Bei Ausführungsbeispielen ist es also auch möglich, einen Teil 163_1 der eigentlichen Sub-Pakete (diese enthalten eine Pilotsequenz und Daten) mit einem festen Sprungmuster zu senden.

Der Zeitpunkt der folgenden Übertragung zur der vorab gesendeten Information mit dem festen Sprungmuster ist definiert und dem Empfänger bekannt. Auch möglich wäre es, die Daten des variablen Sprungmusters vor oder zwischen dem festen Sprungmuster zu verschicken. Somit wäre die Referenz, welche für die Detektion eingesetzt wird, am Ende oder in der Mitte des Telegramms.

Die Länge, Datenrate, das Modulationsverfahren, die Bandbreite, und weitere Parameter der Aussendung mit dem festen Sprungmuster kann von der Aussendung mit der Information im Sprungmuster abweichen.

Bei Ausführungsbeispielen kann Datensenderseitig vor der Aussendung der Sub-Pakete, bei welcher die Lage in Zeit- und/oder Frequenz von (einem Teil) der zu übertragenen Information abhängig ist, Sub-Pakete mit einem festen Sprungmuster versendet werden.

Bei Ausführungsbeispielen kann der Empfänger mittels der Sub-Pakete mit dem festen Sprungmuster ermitteln, ob und wann eine Übertragung stattgefunden hat. Wurde eine Übertragung detektiert, ermittelt der Empfänger auf Basis dieser Detektion die Zeit- und/oder Frequenzabstände zwischen den Sub-Paketen, um daraus die übertragene Information extrahieren zu können.

8. Gesamte Information in jedem Sub-Paket

Bei Ausführungsbeispielen kann der Datensender 100 ausgebildet sein, um die Daten der ersten Klasse derart auf die erste Mehrzahl von Sub-Datenpaketen 162 aufzuteilen, dass jedes Sub-Datenpaket 162 für sich selbst bei einer fehlerfreien Übertragung empfängerseitig decodierbar ist, um die Daten der ersten Klasse zu erhalten, und dass bei einer fehlerbehafteten Übertragung durch eine Kombination zumindest zwei der Sub-Datenpakete 162 ein höherer Codegewinn erzielt wird.

Bei Ausführungsbeispielen kann der Datenempfänger 110 ausgebildet sein, um zumindest ein erstes Sub-Datenpaket der ersten Mehrzahl von Sub-Datenpaketen 162 zu empfangen, und um das erste Sub-Datenpaket zu decodieren, um die Daten der ersten Klasse zu erhalten, und um, sofern die Decodierung der Daten der ersten Klasse unter Verwendung des ersten Sub-Datenpakets nicht erfolgreich war, das erste Sub-Datenpaket mit zumindest einem zweiten Sub-Datenpaket der ersten Mehrzahl von Sub-Datenpaketen 162 zur Erzielung eines höheren Codegewinns zu kombinieren und zu decodieren, um die Daten der ersten Klasse zu erhalten.

Fig. 20 zeigt in einem Diagramm eine beispielhafte Belegung des Übertragungskanals bei der Übertragung der ersten Mehrzahl von Sub-Datenpaketen 162 entsprechend des ersten Sprungmusters 162, wobei jedes Sub-Datenpaket 162 für sich selbst bei einer fehlerfreien Übertragung empfängerseitig decodierbar ist. Mit anderen Worten, Fig. 20 zeigt eine Übertragung mit voller Information auf jedem Sub-Paket.

Bei Ausführungsbeispielen ist es somit auch möglich, anstelle der Aufteilung der gesamten Information auf mehrere Sub-Pakete, zur Reduzierung der Latenz die gesamte Information in jedem Sub-Paket zu übertragen. So ist es bei einem Störungsfreiem Kanal und ausreichend SNR (SNR = signal-to-noise ratio, dt. Signal- zu Rauschverhältnis) bereits nach Empfang eines Sub-Pakets möglich die Information zu decodieren.

Die Aussendungen der folgenden Sub-Pakete können entweder Wiederholungen sein oder zusammen mit dem Sub-Paket so codiert worden sein, dass jedes Sub-Paket die volle Information trägt. Das bedeutet jedes Sub-Paket besitzt mindestens eine Coderate von eins. Werden beispielsweise drei Sub-Pakete verschickt, so wird ein Code der Rate 1/3 eingesetzt.

Optional ist es auch möglich die Coderate weiter zu erhöhen, z. B. könnte bei drei Sub-Paketen auch ein Code der Rate 1/4 eingesetzt werden. Jedes Sub-Paket besitzt in diesem Fall dann die Coderate 3/4, was den Vorteil mit sich bringt, dass bei nur "kleinen" Störungen nicht immer auf das nächste Sub-Paket gewartet werden muss.

Bei Ausführungsbeispielen kann Datensenderseitig jedes Sub-Paket die volle Information des Telegramms enthalten.

Bei Ausführungsbeispielen kann der Empfänger bereits nach einem Empfang des ersten Sub-Pakets versuchen die Nachricht zu decodieren.

## 9. Spezielles Interleaving zur möglichst frühzeitigen Decodierung

Bei Ausführungsbeispielen kann der Datensender 100 ausgebildet sein, um die Daten der ersten Klasse kanalzucodieren und unter Verwendung des ersten Sprungmusters 160 zu senden, wobei der Datensender ausgebildet ist, um die kanalcodierten Daten der ersten Klasse derart auf die erste Mehrzahl von Sub-Datenpaketen 162 zu verteilen, dass nur eine erste Gruppe 163_1 von Sub-Datenpaketen 162 bei einer fehlerfreien Übertragung derselben zur erfolgreichen Decodierung der Daten der ersten Klasse erforderlich ist, und dass bei einer fehlerhaften Übertragung durch eine Kombination der ersten Gruppe 163_1 von Sub-Datenpaketen 162 und einer zweiten Gruppe 163_2 von Sub-Datenpaketen 162 (und optional einer dritten Gruppe 163_3 von Sub-Datenpaketen 162) ein höherer Codegewinn erzielt wird, wobei die erste Gruppe 163_1 von Sub-Datenpaketen 162 zeitlich vor der zweiten Gruppe 163_2 von Sub-Datenpaketen 162 (und der dritten Gruppe 163_3 von Sub-Datenpaketen 162) gesendet wird.

Bei Ausführungsbeispielen kann der Datenempfänger ausgebildet sein, um einen ersten Teil der kanalcodierten Daten, die mit der ersten Gruppe 163_1 von Sub-Datenpaketen 162 empfangen wurden, zu decodieren, um die Daten der ersten Klasse zu erhalten, und um, sofern die Decodierung der Daten der ersten Klasse nicht erfolgreich war, um zumindest einen zweiten Teil der kanalcodierten Daten, die mit zumindest einer zweiten Gruppe 162_2 von Sub-Datenpaketen 162 empfangen wurde, mit dem ersten Teil der kanalcodierten Daten zur Erzielung eines höheren Codegewinns zu kombinieren und zu decodieren, um die Daten der ersten Klasse zu erhalten.

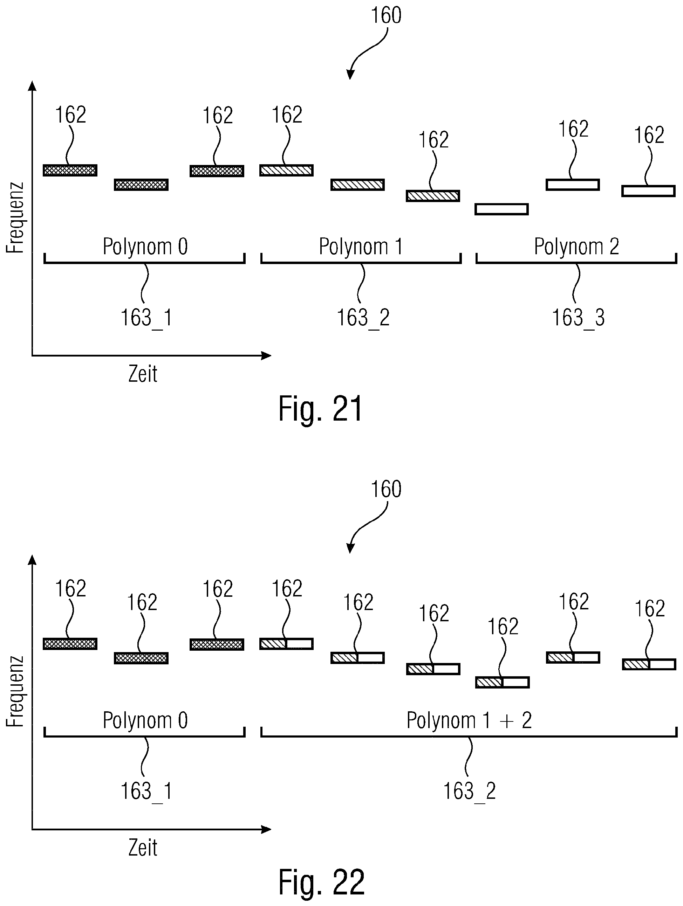

Fig. 21 zeigt in einem Diagramm eine beispielhafte Belegung des Übertragungskanals bei der Übertragung der ersten Mehrzahl von Sub-Datenpaketen 162 entsprechend des ersten Sprungmusters 160 in der Zeit und Frequenz verteilt, wobei die kanalcodierten Daten der ersten Klasse derart auf die erste Mehrzahl von Sub-Datenpaketen 162 verteilt sind, dass jede Gruppe 163_1 bis 163_3 von Sub-Datenpaketen 162 bei einer fehlerfreien Übertragung derselben für sich genommen decodiert werden kann, um die Daten der ersten Klasse zu erhalten. Mit anderen Worten, Fig. 21 zeigt eine spezielle Aufteilung der kanalcodierten Daten auf die Sub-Pakete bei Telegram-Splitting, um eine möglichst frühzeitige Decodierung zu ermöglichen.

Anstelle (oder in Kombination mit) der Reduktion der Pausen aus Abschnitt 1 oder der Telegrammwiederholung aus Abschnitt 3, kann somit auch eine spezielle Interleaver-Struktur zur Reduktion der Latenzzeit bei der Übertragung gewählt werden. Ziel dabei ist es die Aufteilung der Daten möglichst geschickt vorzunehmen, damit ein erster Versuch der Decodierung der Daten zum frühestmöglichen Zeitpunkt stattfinden kann.

Hierdurch muss die Information nicht mehrfach übertragen werden und im Vergleich zur bisher bekannten Übertragung mit Telegram-Splitting ergibt sich kein Unterschied in der Leistungsfähigkeit des Systems (bei Betrachtung der kompletten Übertragung).

Dieses Ziel wird nun am Beispiel eines Faltungscodes mit der Coderate 1/3 genauer erklärt, gilt jedoch für andere Kanalcodes analog.

Bei einem Faltungscode der Coderate 1/3 (ohne Punktierung) werden drei Polynome bei der Encodierung verwendet. Der Output dieser drei Polynome nach der Encodierung wird nun wie folgt auf die Sub-Pakete verteilt: Die Bits des ersten Polynoms werden auf die ersten Sub-Pakete gemappt (erste Gruppe 163_1 von Sub-Datenpaketen), während die Bits des zweiten Polynoms auf die mittleren Sub-Pakete gemappt werden (zweite Gruppe 163_2 von Sub-Datenpaketen), während die Bits des dritten Polynoms auf die letzten Sub-Pakete gemappt werden (dritte Gruppe 163_3 von Sub-Datenpaketen).

Durch diese spezielle Aufteilung ist es dem Empfänger bereits nach Empfang von im Beispiel 1/3 der Sub-Pakete möglich einen Decodierversuch zu starten. Schlägt dieser fehl, kann er weitere Daten empfangen und entsprechend neue Decodierversuche starten.

Bei Ausführungsbeispielen kann Datensenderseitig der Interleaver ist so designt werden, dass die minimal notwendige Information für einen Decodierversuch möglichst frühzeitig im Paket eingebracht und übertragen werden kann.

Bei Ausführungsbeispielen kann der Empfänger bereits nach Empfang aller Daten vom Polynom 0 versuchen die Nachricht zu decodieren. Falls dies nicht klappt, werden weitere Informationen empfangen. Falls der Empfänger über eine Schätzung der Empfangsparameter verfügt, kann er alternativ berechnen ab welchem Zeitpunkt eine Decodierung sinnvoll erscheint.

### 9.1. Kombination der Polynome

Wird in dem Ausführungsbeispiel gemäß Abschnitt 9 beispielsweise das erste Sub-Paket von Polynom 0 und das erste Sub-Paket von Polynom 1 gestört, ist in der Regel keine vorzeitige Decodierung des Telegramms nach dem Empfang von Polynom 1 möglich, es muss ebenfalls das Polynom 2 empfangen werden. Zur Verbesserung der Latenz kann das 2te und dritte Polynom im Beispiel aus Abschnitt 9 verschachtelt werden. Ein solcher Aufbau ist in Fig. 22 zu sehen.

Im Detail zeigt Fig. 22 in einem Diagramm eine beispielhafte Belegung des Übertragungskanals bei der Übertragung der ersten Mehrzahl von Sub-Datenpaketen 162 entsprechend des ersten Sprungmusters 160 in der Zeit und Frequenz verteilt, wobei die kanalcodierten Daten der ersten Klasse derart auf die erste Mehrzahl von Sub-Datenpaketen 162 verteilt sind, dass eine erste Gruppe 163_1 von Sub-Datenpaketen 162 kanalcodierte Daten gemäß eines ersten Codierpolynoms (Polynom 0) aufweisen, und dass eine zweite Gruppe 163_2 von Sub-Datenpaketen 162 kanalcodierte Daten gemäß mehrere Codierpolynome (Polynom 1 und Polynom 2) aufweisen. Mit anderen Worten, Fig. 22 zeigt eine spezielle Aufteilung der kanalcodierten Daten auf die Sub-Pakete bei Telegram-Splitting, um eine möglichst frühzeitige Decodierung zu ermöglichen, wobei zunächst das erste Polynom und dann verschachtelt die beiden weiteren Polynome folgen.

Durch den Fakt, dass Polynom 0 weiterhin vollständig in den ersten Sub-Paketen eingebracht wurde, ist die minimale Latenz immer noch gegeben, bei Störungen wie im einleitenden Beispiel kann es jedoch auch schon ausreichen nur die Hälfte (oder noch weniger) der Sub-Pakete der beiden verbleibenden Polynome zu empfangen.

Bei Ausführungsbeispielen kann Datensenderseitig der Interleaver so designt werden, dass die minimal notwendige Information für einen Decodierversuch möglichst frühzeitig im Paket eingebracht ist, wobei die verbleibenden Polynome verschachtelt werden.

Bei Ausführungsbeispielen kann der Empfänger bereits nach Empfang aller Daten vom Polynom 0 versuchen die Nachricht zu decodieren. Falls dies nicht klappt werden weitere Informationen empfangen.

### 9.2. Entscheidung über Decodierversuch mit Hilfe der Transinformation

In den beiden vorhergehenden Ausführungsbeispielen gemäß den Abschnitten 9 und 9.1 wurde der Decodierversuch unabhängig von den Kanaleigenschaften durchgeführt. Dies bedeutet auch bei schlechten Kanaleigenschaften wird nach Empfang von Polynom 0 ein Decodierversuch gestartet, welcher jedoch in der Regel erfolglos bleibt.

Bei Ausführungsbeispielen kann der wobei der Datenempfänger 110 ausgebildet sein, um anhand einer Schätzung einer Transinformation zu ermitteln, ob für eine erfolgreiche Decodierung der Daten der ersten Klasse die erste Gruppe 163_1 von Sub-Datenpaketen 162 ausreichend ist, oder ob für eine erfolgreiche Decodierung der Daten der ersten Klasse eine Kombination der ersten Gruppe 163_1 von Sub-Datenpaketen und der zweiten Gruppe 163_2 von Sub-Datenpaketen 162 erforderlich ist, wobei der Datenempfänger ausgebildet sein kann, um die erste Gruppe 163_1 von Sub-Datenpaketen 162 zu decodieren, um die Daten der ersten Klasse zu erhalten, sofern die Schätzung der Transinformation ergab, dass für eine erfolgreiche Decodierung der Daten der ersten Klasse die erste Gruppe 163_1 von Sub-Datenpaketen 162 ausreichend ist, und wobei der Datenempfänger 110 ausgebildet sein kann, um die erste Gruppe 163_1 von Sub-Datenpaketen 162 und die zweite Gruppe 163_2 von Sub-Datenpaketen 162 zu kombinieren und zu decodieren, sofern die Schätzung der Transinformation ergab, dass für eine erfolgreiche Decodierung der Daten der ersten Klasse eine Kombination der ersten Gruppe 163_1 von Sub-Datenpaketen 162 und der zweiten Gruppe 163_2 von Sub-Datenpaketen 162 erforderlich ist.

Bei Ausführungsbeispielen kann der Datenempfänger 110, sofern dieser über Methoden zur Schätzung der Transinformation der LLRs (z. B. aus dem SNR) verfügt, den Zeitpunkt einer möglichen korrekten Decodierung berechnen.

Somit ist es nicht mehr notwendig blind Decodierversuche durchzuführen bis die Daten korrekt decodiert wurden und somit kann die Rechenleistung im Empfänger reduziert werden.

Bei Ausführungsbeispielen kann der Empfänger mit Hilfe der Transinformation den Zeitpunkt berechnen, ab welchem eine Decodierung des Telegramms als sinnvoll erscheint.

## 10. Kurze Nachricht mit kleiner Latenz und nachfolgenden Details

Bei Ausführungsbeispielen kann der Datensender 100 ausgebildet sein, um die Daten der ersten Klasse derart auf die erste Mehrzahl von Sub-Datenpaketen 162 aufzuteilen, dass eine erste Gruppe 163_1 von Sub-Datenpaketen 162 eine Kerninformation der Daten der ersten Klasse aufweisen und eine zweite Gruppe 163_2 von Sub-Datenpaketen 162 eine Erweiterungsinformation der Daten der ersten Klasse aufweisen, wobei die erste Gruppe 163_1 von Sub-Datenpaketen 162 zeitlich vor der zweiten Gruppe 163_2 von Sub-Datenpaketen 162 gesendet wird.

Bei Ausführungsbeispielen kann der Datenempfänger 110 ausgebildet sein, um zuerst die erste Gruppe 163_1 von Sub-Datenpaketen 162 zu empfangen und dann die zweite Gruppe 163_2 von Sub-Datenpaketen 162 zu empfangen, um die Kerninformation vor der Erweiterungsinformation zu erhalten.

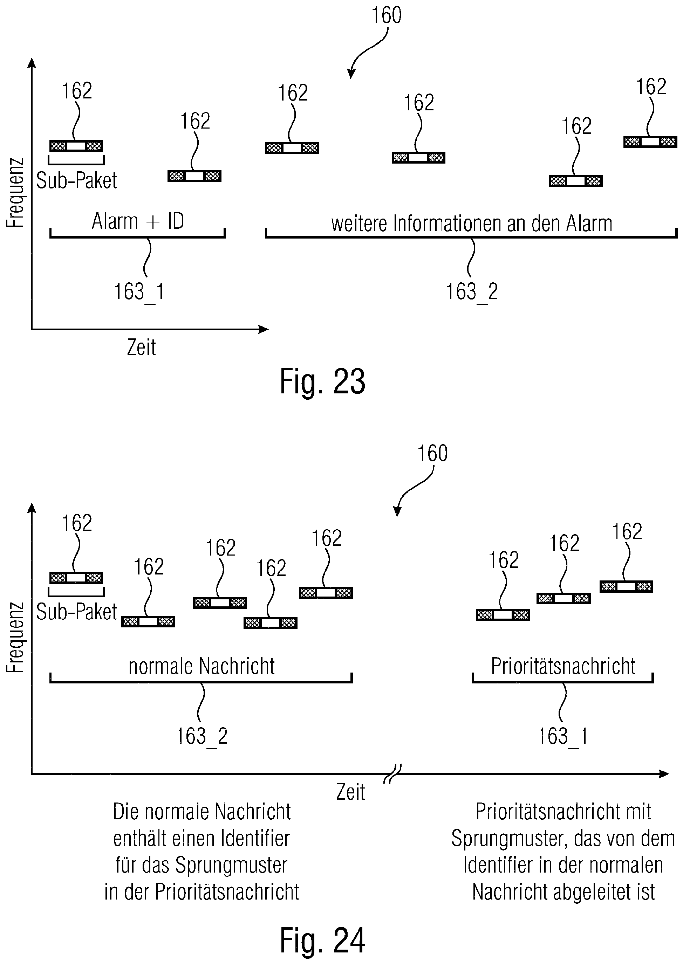

Fig. 23 zeigt in einem Diagramm eine beispielhafte Belegung eines Übertragungskanals bei der Übertragung der ersten Mehrzahl von Sub-Datenpaketen 162 entsprechend des ersten Sprungmusters 160 in der Zeit und Frequenz verteilt, wobei eine erste Gruppe 163_1 von Sub-Datenpaketen 162 eine Kerninformation aufweisen und eine zweite Gruppe 163_2 von Sub-Datenpaketen 162 eine Erweiterungsinformation, wobei die erste Gruppe 163_1 von Sub-Datenpaketen 162 zeitlich vor der zweiten Gruppe 163_2 von Sub-Datenpaketen 162 übertagen wird. Mit anderen Worten, Fig. 23 zeigt dass eine vorzeitige Alarmierung möglich ist, da nur ein Teil der Information zu Beginn benötigt wird.

Bei Ausführungsbeispielen wird bei vielen Anwendungen zunächst nur die Information, dass ein Ereignis vorliegt und die Information welches Gerät das Ereignis gesendet hat, benötigt. Weitere Informationen zu dem Ereignis (wie z. B. Temperaturüberschreitung in einer Fabrik oder Ursache einer Alarmauslösung) werden erst später benötigt. Beispielsweise können sich Einsatzkräfte in vielen Fällen auch ohne die genaue Ursache bereits auf den Weg zum Ereignisgeber begeben. Während der Fahrt dorthin, kann die genaue Ursache nachgereicht werden.

Aus dieser Tatsache heraus ergibt sich die Möglichkeit, vorab mit einem kurzen Delay nur die wichtigsten Informationen zum Ereignis (Ereignis + ID) zu schicken. Durch die reduzierte Anzahl an zu übertragenden Daten werden auch nur verhältnismäßig wenige Sub-Pakete benötigt, wodurch die Pausen zwischen den Sub-Paketen in der Region der bisherigen Dauern liegen können. Damit wird für die Übertragung mit hoher Priorität in etwa die gleiche Störfestigkeit (bei niedriger Latenz) wie für ein normales Telegramm mit mehr Information erzielt. Dadurch wird in der Regel keine weitere Telegrammwiederholung benötigt um die gewünschte Störfestigkeit zu erreichen.

Bei Ausführungsbeispielen kann Datensenderseitig das Telegramm so aufgebaut sein, dass im vorderen Teil der Nachricht nur die notwendigen Informationen für die Meldung eines Ereignisses eingebracht sind. Im hinteren Teil folgen Zusatzinformationen zu dem Ereignis.

Bei Ausführungsbeispielen kann Datenempfängerseitig das Ereignis bereits nach Teil-Decodierung des Ereignisses und dessen notwendigen Informationen weitergegeben werden und somit die Latenz reduziert werden. Wenn das komplette Telegramm empfangen wurde, werden auch die weiteren Daten zur Verfügung gestellt.

## 10.1. Vergabe von Sprungmustern

Bei Ausführungsbeispielen kann der Datensender 100 ausgebildet sein, um zumindest eine erste Gruppe von Sprüngen des ersten Sprungmusters 162 unter Verwendung einer Adressinformation des Datensenders 100 oder einer davon abgeleiteten Information zu berechnen, so dass das erste Sprungmuster 162 selbst den Datensender identifiziert. Eine zweite Gruppe 163_2 von Sprüngen des Sprungmusters 162 kann fest vorgegeben sein.

Bei Ausführungsbeispielen kann der Datensender 100 ferner ausgebildet sein, um eine codierte oder verschlüsselte Information über das erste Sprungmuster vorab zu einem Datenempfänger 110 zu senden.

Bei Ausführungsbeispielen kann der Datenempfänger 110 ausgebildet sein, um den Datensender anhand des ersten Sprungmusters 160 zu identifizieren, beispielsweise über eine zuvor empfangene codierte oder verschlüsselte Information über das erste Sprungmuster.

Fig. 24 zeigt in einem Diagramm eine beispielhafte Belegung des Übertragungskanals bei der Übertragung der ersten Mehrzahl von Sub-Datenpaketen 162 entsprechend des ersten Sprungmusters 160 in der Zeit und Frequenz verteilt, wobei eine erste Gruppe 163_1 von Sprüngen des Sprungmusters 162 den Datensender identifiziert.

Anstelle der gesamten Codierung der Information in die Sub-Pakete kann bei Ausführungsbeispielen auch ein Teil der Nachricht mit hoher Priorität in das Sprungmuster eingebracht werden. Am sinnvollsten ist hierfür die Verwendung der ID des Sensorknotens, da diese für mehrere Aussendungen konstant ist und somit die Basisstation nur nach diesem Muster suchen muss.

Somit ergeben sich für die verschiedenen Sensorknoten beim Aussenden der Nachricht mit hoher Priorität verschiedene Sprungmuster, welche der Basisstation bekannt sein müssen. Durch diesen Umstand wird die ID der Sensorknoten bei Aussendung einer Nachricht mit hoher Priorität in das Sprungmuster kodiert und muss nicht explizit übertragen werden.

Um Angriffe auf das System zu vermeiden, ist es sinnvoll, wenn die Sprungmuster zwischen den Knoten und der Basisstation geheim sind. Somit ist es von Außenstehenden nicht möglich einen Fehlalarm auszulösen, da das Sprungmuster unbekannt ist.

Um das Sprungmuster der Basisstation bekannt zu geben, kann vorab in einer normalen Nachricht (mit Verschlüsselung) ein sog. Identifier für das Sprungmuster gesendet werden. Aus diesem Identifier lässt sich dann das verwendete Sprungmuster berechnen.

Zur Wahrung der Sicherheit ist es zusätzlich möglich, das Sprungmuster von Zeit zu Zeit anzupassen, um Replay-Attacken zu vermeiden.

Um die niedrige Latenz bei der Übertragung der Nachricht mit hoher Priorität zu erhalten, besitzt das Sprungmuster zur Meldung der Nachricht mit hoher Priorität weniger Sprünge als ein normales Telegramm.

Bei Ausführungsbeispielen kann der Sensorknoten der Basisstation mittels eines Identifier ein Sprungmuster mitteilen, welcher nur er als Signalisierung für Nachrichten mit hoher Priorität einsetzt. Hierdurch muss keine explizite Übertragung der ID erfolgen.

Bei Ausführungsbeispielen kann der Empfänger zusätzlich zu den normalen Sprungmustern eine Detektion der ihm bekannten Sprungmuster der Sensorknoten für Nachrichten mit hoher Priorität durchführen. Wird ein solches Muster detektiert kann die eigentliche ID mit dem Sprungmuster verknüpft werden.

10.2. Vergabe von Kurz-IDs

Bei Ausführungsbeispielen kann der Datensender 100 ausgebildet sein, um eine Kurzadressinformation, die kürzer ist als eine Adressinformation, die den Datensender 100 innerhalb eines Kommunikationsnetzwerks eindeutig identifiziert, von einer Basisstation des Kommunikationsnetzwerks zu erhalten und diese bei der Aussendung mit dem ersten Sprungmuster zu verwenden. Beispielsweise kann der Datensender 100 ausgebildet sein, um zumindest eine Gruppe von Sprüngen des ersten Sprungmusters 162 aus der Kurzadressinformation zu berechnen, so dass das erste Sprungmuster 162 selbst den Datensender identifiziert.

Bei Ausführungsbeispiel kann der Datenempfänger 110 ausgebildet sein, um den Datensender 100 anhand der Kurzadressinformation zu identifizieren. Beispielsweise kann der Datenempfänger 110 ausgebildet ist, um den Datensender 100 anhand des ersten Sprungmusters zu identifizieren, das zumindest teilweise aus der Kurzadressinformation berechnet sein kann.

Bei Ausführungsbeispielen kann der Datenempfänger (z.B. eine Basisstation) ausgebildet sein, um dem Datensender 100 die Kurzadressinformation, die kürzer ist als eine Adressinformation, die den Datensender innerhalb eines Kommunikationsnetzwerks eindeutig identifiziert, zuzuweisen.

Typischerweise sind in einem Sensornetz bis zu mehreren Millionen Sensorknoten ausgebracht, welche von mehreren Basisstationen bedient werden. Durch diese hohe Anzahl an Geräten ist eine gewisse Länge für die eindeutige Zuordnung der Geräte mittels ID (z. B. IP-v6) notwendig.

Diese verhältnismäßig langen IDs sind jedoch nur schwer mit dem Konzept aus Abschnitt 10 kombinierbar.

Da jedoch die Anzahl an Sensorknoten pro Basisstation geringer ist und auch nicht alle Geräte Nachrichten mit hoher Priorität versenden müssen, kann eine Kurz-ID von der Basisstation an diese Geräte vergeben werden.

Diese Kurz-ID wird dann bei der Übertragung der Nachricht mit hoher Priorität eingesetzt. In der Basisstation wird von der Kurz-ID auf die eigentliche ID zurückgemappt.

Die Kurz-IDs können sich in einem Sensornetz wiederholen, wichtig ist nur, dass alle Sensorknoten innerhalb einer Basisstation eine eindeutige Kurz-ID besitzen.

Bei Ausführungsbeispielen können Datensenderseitig Kurz-IDs für die Übertragung von Nachrichten mit hoher Priorität eingesetzt werden, wobei beispielsweise eine Basisstation die Kurz-IDs innerhalb der verbundenen Geräte vergibt.

Bei Ausführungsbeispielen kann der Empfänger die Kurz-IDs auf die ursprünglichen IDs zurückmappen.

10.3. Vergabe von Kurz-IDs an Gruppen

Bei Ausführungsbeispielen kann die Kurzadressinformation einer Gruppe von Datensendern 100 zugewiesen sein, wobei die Gruppe von Datensendern in einem räumlich zusammenhängenden Gebiet angeordnet ist.

Beispielsweise kann der Datenempfänger 110 ausgebildet sein, um die Kurzadressinformation der Gruppe von Datensendern 110 zuzuweisen, wobei die Gruppe von Datensendern in einem räumlich zusammenhängenden Gebiet angeordnet ist.

Häufig kommt es vor, dass mehrere Ereignisgeber örtlich nahe (z. B. in einem Gebäude) verbaut sind. Hier ist es für die Planung der Gegenmaßnahmen in der Regel nicht sofort notwendig, dass der genaue Ereignisgeber bekannt ist. Es reicht hier häufig aus, wenn das Gebäude bekannt ist, um die Einsatzkräfte zu dem Krisenpunkt zu schicken.

Aus diesem Grund ist es auch möglich sog. Gruppen Kurz-IDs zu vergeben. Das heißt mehrere Sender innerhalb einer Basisstation erhalten die gleiche Kurz-ID. Dadurch lässt sich in der Basisstation zunächst nicht mehr eine genaue Zuordnung von Kurz-ID zu ursprünglicher ID durchführen.

Die vollständige ID könnte beispielsweise im hinteren Teil der Nachricht eingebracht sein oder als separate Nachricht versendet werden.

Bei Ausführungsbeispielen können Datensenderseitig Kurz-IDs für die Übertragung von Nachrichten mit hoher Priorität eingesetzt werden, wobei die Basisstation die Kurz-IDs an die verbundenen Sensorknoten vergeben kann, wobei die IDs nach Zugehörigkeiten der Sensorknoten auch mehrfach vergeben werden können.

Bei Ausführungsbeispielen kann der Empfänger bei Empfang einer Kurz-ID zunächst nur die Zugehörigkeit der Kurz-ID weitergeben. Nach Empfang der vollständigen ID kann auch diese ausgegeben werden.

10.4. Abkürzungen für Nachrichten mit hoher Priorität

Bei Ausführungsbeispielen können die Daten der ersten Klasse eine von einem Sensorwert abgeleitete Kurzinformation sein, die kürzer ist als der Sensorwert.

Bei Ausführungsbeispielen kann der Datenempfänger 110 ausgebildet sein, um bei Empfang der Daten der ersten Klasse, die eine Kurzinformation aufweisen, die Kurzinformation mit einem bekannten Sensorwert zu assoziieren.

In den meisten Fällen lässt sich die Information bei einer Nachricht mit hoher Priorität auf wenige mögliche Ereignisse einschränken. Das bedeutet, dass es z. B. bei Alarmen nur eine sehr geringe Anzahl an Möglichkeiten für einen Alarm gibt.

Somit ist es beispielsweise nicht notwendig für einen Alarm den gesamten Sensorwert des Rauchmelders zu übertragen, es reicht aus, die Alarmmeldung, dass ein Rauchmelder angeschlagen hat, zu übermitteln.

In der Regel wird weiterhin nicht jede Basisstation alle Arten verschiedener Nachrichten mit hoher Priorität (Ereignisse) verarbeiten müssen, da nicht alle Typen von Sensorknoten mit der einzelnen Basisstation kommunizieren werden.

Hier ist es sinnvoll, dass die Basisstation darüber Kenntnis hat, welche verschiedenen Arten von Nachrichten mit hoher Priorität von ihr empfangen werden müssen.

Aus diesem Satz an Nachrichtentypen kann die Basisstation jedem Ereignis eine Abkürzung (ähnlich zu Kurz-ID, jedoch nicht für die ID sondern für den Nachrichteninhalt zuweisen und diese den entsprechenden Sensorknoten übermitteln.

Die Kombination der Kurznachrichten zu den entsprechenden Nachrichtentypen kann zwischen den Basisstationen variieren, das heißt eine Kurznachricht kann bei verschiedenen Basisstationen eine andere Bedeutung haben.

Dadurch lässt sich die Menge an zu übertragenen Daten bei Ereignissen mit hoher Priorität sehr stark reduzieren und somit die Anzahl der zu übertragenen Sub-Pakete reduzieren, woraus eine kleinere Latenz der Übertragung resultiert.

Werden neben dem Nachrichtentyp zu einem späteren Zeitpunkt noch weitere Informationen benötigt, können diese nach Abschnitt 10 angehängt oder in einem extra Telegramm verschickt werden.

Bei Ausführungsbeispielen können für jede Basisstation eine Klasse an verschiedenen Nachrichtentypen mit hoher Priorität definiert werden. Den verschiedenen Ereignissen innerhalb dieser Klasse können Kurznachrichten zugewiesen werden, die den entsprechenden Sensorknoten mitgeteilt werden.

Bei Ausführungsbeispielen kann der Empfänger bei Empfang einer Kurznachricht mit Hilfe der definierten Klasse den Typ der Kurznachricht ermitteln und diesen weitergeben.

10.5. Abkürzung häufig versendeter Nachrichtenteile

Bei Ausführungsbeispielen können die Daten der ersten Klasse eine von einem Sensorwert abgeleitete Kurzinformation sein, die kürzer ist als der Sensorwert, wobei der Datensender ausgebildet sein kann, um die Kurzinformation und einen der Kurzinformation zugehörigen Sensorwert oder eine der Kurzinformation zugehörige Gruppe von Sensorwerten vorab zu einem Datenempfänger zu senden.

Bei Ausführungsbeispielen kann der Datenempfänger 110 ausgebildet sein, um die Kurzinformation und einen der Kurzinformation zugehörigen Sensorwert oder eine der Kurzinformation zugehörige Gruppe von Sensorwerten vorab von dem Datenempfänger zu empfangen, wobei der Datenempfänger 110 ausgebildet sein kann, um bei Empfang der Daten der ersten Klasse, die eine Kurzinformation aufweisen, die Kurzinformation mit einem bekannten Sensorwert oder einer Gruppe von Sensorwerten zu assoziieren.

Mit anderen Worten, ähnlich wie in abschnitt 9.3 können auch in Nachrichten ohne hohe Priorität oder in den nachfolgenden Details einer Nachricht mit hoher Priorität Abkürzungen für wiederkehrende oder häufig ausgesendete Nachrichtenteile vorgenommen werden.

Hierfür muss der Basisstation vorab eine Information bereitgestellt werden, welche Nachrichtenteile mit welchem Inhalt häufiger vorkommen. Dies können beispielsweise Sensorwerte von einem Sensor sein, wobei nach der Digitalisierung der Daten immer nur das untere Byte eines 4 Byte ADC-Wertes ausgesteuert wird. Somit wäre in diesem Beispiel die wiederkehrende Nachricht die 3 MSBs (most significant bytes) des Sensorwertes, die immer bei null liegen würden.

Falls die Basisstation vorab keine Kenntnisse über wiederkehrende Nachrichtenteile der mit ihr verbundenen Sensorknoten hat, kann auch eine Messung und Analyse der Empfangsdaten durchgeführt werden, um wiederkehrende Teile zu erkennen.

Wurde ein wiederkehrender Nachrichtenteil erkannt kann dieser entweder mittels einer Tabelle auf eine kürzere Nachricht übertragen werden oder es kann eine Arithmetische Kodierung bzw. eine Huffman-Kodierung oder ein anderes Verfahren zur Reduktion der Nachrichtenmenge eingesetzt werden.

Bei Ausführungsbeispielen kann für jede Basisstation (oder auch global) eine Klasse an verschiedenen wiederkehrenden Nachrichtenteilen definiert werden. Den verschiedenen Ereignissen innerhalb dieser Klasse werden Kurznachrichten (mittels Tabelle oder Kodierung) zugewiesen, die den entsprechenden Sensorknoten mitgeteilt werden.

Bei Ausführungsbeispielen kann der Empfänger bei Empfang einer Kurznachricht mit Hilfe der definierten Klasse die Kurznachricht in die eigentliche Nachricht umwandeln und diese weitergeben.

### 11. Spezielle Sprungmuster oder Pilotsequenzen

### 11.1. Spezielle Sprungmuster für Prio-Nachrichten

Bei Ausführungsbeispielen kann wobei das erste Sprungmuster dem Datensender von einem Datenempfänger (z.B. einer Basisstation) 110 entsprechend einer Nutzungshäufigkeit und/oder Priorität zugewiesen sein.

Aufgrund der sehr hohen Anzahl an Sensorknoten (mehrere Tausend Senderknoten) in einem Sensornetz kommt es bei Störungen hauptsächlich/häufig zu Eigenstörungen zwischen den Sensorknoten.

Die Eigenstörung stellt bei Telegram-Splitting dann ein Problem dar, wenn zwei Sender mit dem gleichen Sprungmuster innerhalb der Dauer eines Sub-Pakets zu senden beginnen, da es dann zu einer Totalüberlagerung der Sub-Pakete kommt.

Soll nun eine Nachricht mit geringen Delay und hoher Priorität versendet werden, ist es am sinnvollsten hierfür ein anderes Sprungmuster als für die normalen Übertragungen zu verwenden.

Da jedoch im Normalfall am Empfänger nur eine gewisse Anzahl an Pattern detektiert werden kann, ist es nicht möglich jedem Sensorknoten ein eigenes Sprungmuster für die Alarmierung bereit zu stellen. Daher müssen sich mehrere Knoten die speziellen Sprungmuster teilen.

In der Regel weiß die Basisstation welche Knoten mit ihr kommunizieren und wie häufig diese Knoten eine Nachricht mit hoher Priorität versenden. Somit ist es sinnvoll, wenn die Basisstation die verfügbaren Sprungmuster für Nachrichten mit hoher Priorität an die entsprechenden Sensorknoten abhängig von den Prioritäten und der Nutzungshäufigkeit zuweist.

Bei Ausführungsbeispielen kann die Basisstation spezielle Sprungmuster an die Sensorknoten vergeben, welche für eine Nachricht mit hoher Priorität eingesetzt werden kann.

### 11.2. Treppen-Sprungmuster für Prio-Nachrichten

Durch die Definition von weiteren Sprungmustern in Abschnitt 11.1 muss der Empfänger für diese Sprungmuster ebenfalls eine Detektion durchführen. Ist die Rechenleistung des Empfängers so ausgelegt, dass die normalen Sprungmuster nahezu die komplette Rechenleistung des Empfängers benötigen, können keine Sprungmuster für Nachrichten mit hoher Priorität hinzugefügt werden, außer es werden nicht mehr alle Sprungmuster des normalen Modi unterstützt. Dies hat jedoch einen Performanceeinbruch für die normalen Telegramme zur Folge.

Um dieses Problem zu lösen, können für die Nachrichten mit hoher Priorität Sprungmuster verwendet werden, welche mit sehr geringem Rechenauswand detektiert werden können.

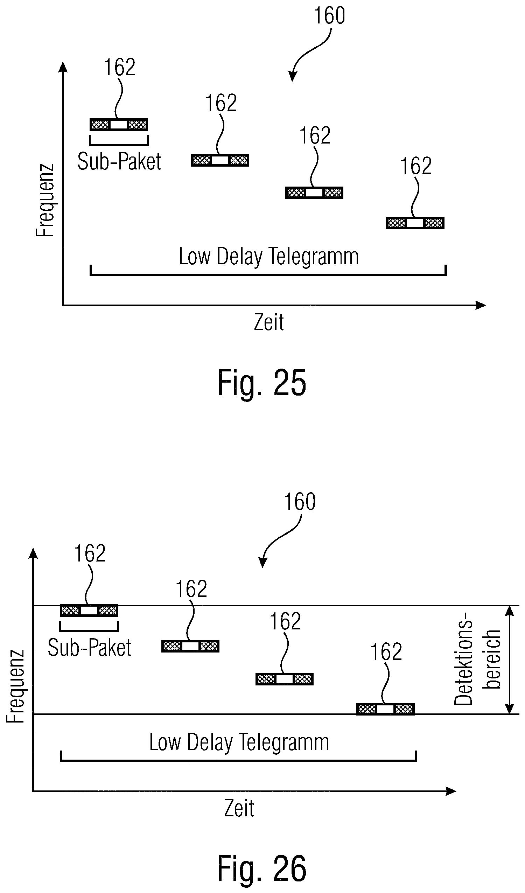

Bei Ausführungsbeispielen kann das erste Sprungmuster 160 derart generiert sein, dass Sub-Datenpakete 162, die entsprechend des ersten Sprungmusters 160 gesendet werden, den gleichen Zeitabstand und Frequenzabstand zueinander aufweisen, wie dies in Fig. 25 gezeigt ist.

Im Detail zeigt Fig. 25 in einem Diagramm eine beispielhafte Belegung des Übertragungskanals bei der Übertragung der ersten Mehrzahl von Sub-Datenpaketen 162 entsprechend des ersten Sprungmusters 160 derart in der Zeit und Frequenz verteilt, dass Sub-Datenpakete 162, die entsprechend des ersten Sprungmusters 160 gesendet werden, den gleichen Zeitabstand und Frequenzabstand zueinander aufweisen. Mit anderen Worten, Fig. 25 zeigt eine Aussendung eines Telegramms mit einem Treppen-Sprungmuster.

Wie in Fig. 25 zu erkennen ist, bietet sich ein sog. Treppen-Sprungmuster an, welches mit sehr geringem Rechenauswand detektiert werden kann. Bei einem Treppen-Sprungmuster werden die Frequenzen der aufeinanderfolgenden Sub-Pakete so gewählt, dass die Differenz zwischen zwei Sub-Paketen immer gleich ist. Die Pausen zwischen den Sub-Paketen können optional (um den Rechenaufwand weiter zu reduzieren) äquidistant (also alle Pausen sind gleich lang) sein.

Am Empfänger kommt ein solches Telegramm (genauso wie ein normales Telegramm) verursacht durch Quarztoleranzen mit einem Frequenzoffset an. Bei der Detektion eines Telegramms mit einem normalen Sprungmuster muss nun eine Detektion über alle möglichen Frequenzabweichungen erfolgen, da die Frequenzabstände zwischen den Sub-Paketen nicht gleich sind.

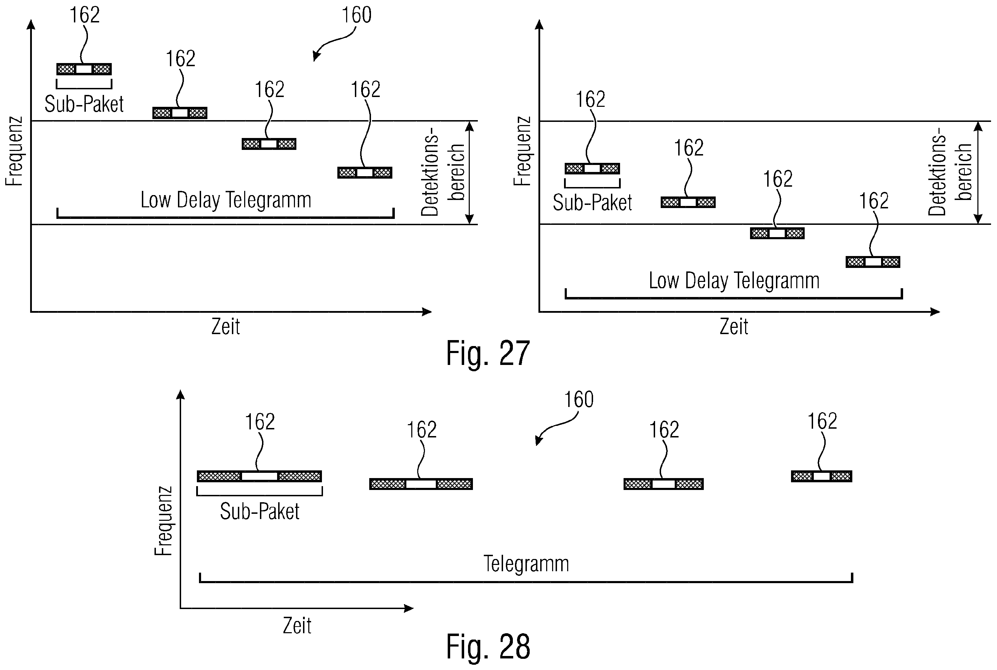

Im Falle des Treppen-Sprungmusters reicht es aus einen kleineren Bereich abzusuchen, da durch die Frequenzverschiebung das gesamte Telegramm verschoben wurde und die relativen Frequenzabstände zwischen den Sub-Paketen immer noch konstant sind. Fig. 26 zeigt ein Telegramm am Empfänger, welches ohne Frequenzversatz empfangen wurde, es liegt vollständig im Detektionsbereich. In Fig. 27 sind weiterhin zwei Telegramme zu sehen, welche am Empfänger mit einem positiven bzw. negativen Frequenzversatz am Empfänger eintreffen. Die Telegramme liegen nun nur noch teilweise im Detektionsbereich.

Zur Detektion wird nun zunächst eine Korrelation über die einzelnen Sub-Pakete (oder eine Art der Korrelation) auf allen möglichen Frequenzen innerhalb des Detektionsbereichs durchgeführt. Im Anschluss werden die Ergebnisse dieser Teil-Korrelationen entsprechend dem Sprungmuster des Telegramms addiert.

Genau hier zeigt sich der Vorteil des Treppen-Sprungmusters, da die Frequenzabstände zwischen den Sub-Paketen äquidistant sind. Im Falle von Frequenzversatz erfolgt eine Detektion des Telegramms auf den verbleibenden Sub-Paketen innerhalb des Detektionsbereichs.

Daraus folgt jedoch, dass der Empfänger nicht mehr zwingend den Telegrammbeginn detektiert, sondern eine beliebige Stelle im Telegramm, welche abhängig vom Frequenzoffset ist.

Somit muss bei Detektion eines Telegramms im Anschluss eine weitere Bestimmung des Telegrammstartzeitpunktes durchgeführt werden.

Ein weiterer Vorteil der Wahl des Sprungmusters als Treppenfunktion besteht darin, dass jede Frequenz nur einmal belegt werden kann und dadurch die Bandbreite des Signals maximiert wird. Hierdurch entsteht eine bessere Störfestigkeit gegen Fremdstörungen von anderen Systemen.

Die Methodik bringt jedoch auch einen Nachteil mit sich, nämlich die verringerte Kapazität des Systems, da die Eigenstörfestigkeit sinkt. Dies stellt jedoch kein Problem dar, wenn normale Nachrichten und Low-Delay-Nachrichten mit hoher Priorität andere Sprungmuster verwenden.

Bei Ausführungsbeispielen kann (Datensenderseitig) das Sprungmuster 162 so gewählt werden, dass alle Frequenzabstände zwischen zwei Sub-Paketen äquidistant sind und optional auch die Pausen gleich lang sind.

Bei Ausführungsbeispielen kann (Datenempfängerseitig) der Detektionsbereich für die Treppen-Sprungmuster kleiner sein als für normale Sprungmuster. Nach Detektion eines Treppen-Sprungmusters wird eine weitere Analyse des exakten Startzeitpunktes durchgeführt.

## 11.3. Spezielle Pilotsequenzen für Prio-Nachrichten

In Abschnitt 10.2 wurden sog. Kurz-IDs definiert, mit welchem es möglich ist eine Nachricht mit hoher Priorität mit kleiner Latenz zu versenden indem die Datenmenge reduziert wird.

Eine weitere Methodik um die Datenmenge zu reduzieren ist es die Kurz-ID oder einen Teil der vollständigen ID oder einen beliebigen Teil der Nachricht in die Pilotsequenz zu codieren. Werden nur wenige Möglichkeiten (wie zum Beispiel für die verschiedenen Typen von Nachrichten mit hoher Priorität) vorgehalten, ist es im Empfänger möglich eine Suche der Sequenzen durchzuführen und somit die übertragene Information in der Pilotsequenz mittels Hypothesentest zu extrahieren.

Bei Ausführungsbeispielen kann der Datensender 100 ausgebildet sein, um zumindest einen Teil einer Synchronisationssequenz zur Synchronisation der ersten Mehrzahl von Sub-Datenpaketen 162 in einem Datenempf-fänger 110 aus zumindest einem Teil der Daten der ersten Klasse, der ersten Klasse, einer Adressinformation des Datensenders 100 oder einer Kurzadressinformation des Datensenders 100 zu berechnen.

Beispielsweise kann die Kurz-ID eine Länge von 2 Bit aufweisen, damit können vier verschiedene Prioritätstypen signalisiert werden. Um diese vier verschiedenen Typen in die Pilotsequenz zu modulieren, müssen somit vier verschiedene Sequenzen vorhanden sein. Eine Möglichkeit ist nun vier möglichst orthogonale Sequenzen zu entwickeln, welche vom Empfänger detektiert und erkannt werden können. Dies erfordert jedoch die parallele Detektion der vier Pilotsequenzen.

Für den Fall, dass die Pilotsequenz in mehrere Teile gesplittet ist (im Beispiel mindestens vier) und die Addition zwischen den Teilen der Pilotsequenz inkohärent durchgeführt wird (siehe WO 2017/167366) kann anstelle der Verwendung von mehreren möglichst orthogonalen Sequenzen auch ein Phasenoffset auf den Symbolen eingesetzt werden um die Information in der Pilotsequenz zu signalisieren. Hierbei würde die Detektion der vier Sequenzen gemeinsam erfolgen, nur im Decoder muss noch eine Analyse der Phaseninformation der Pilotsequenzteile (oder einer Phaseninformation zwischen den Pilotsequenzteilen) erfolgen.

Auch möglich wäre es ähnlich zu Abschnitt 7.1 nicht alle Synchronisationssequenzen zu modifizieren und den verbleibenden Teil der Synchronisationssequenz (welche dann noch konstant ist) zur Synchronisation einzusetzen.

Bei Ausführungsbeispielen kann Datensenderseitig die Pilotsequenz abhängig von einem Nachrichtentyp oder einem Teil der Daten einer Nachricht mit hoher Priorität sein.

Bei Ausführungsbeispielen kann der Empfänger die gesendete Pilotsequenz mittels Hypothesentest ermitteln und damit den Typ oder einen Teil der Daten einer Nachricht mit hoher Priorität extrahieren.

12. Adaption der Datenrate im Telegramm

12.1. Sprungweise Anpassung der Datenrate

Bei Ausführungsbeispielen kann der Datensender 100 ausgebildet sein, um die Daten der ersten Klasse kanalzucodieren und unter Verwendung des ersten Sprungmusters 160 zu senden, wobei der Datensender 100 ausgebildet sein kann, um die kanalcodierten Daten der ersten Klasse derart auf die erste Mehrzahl von Sub-Datenpaketen 162 zu verteilen, dass nur eine erste Gruppe von Sub-Datenpaketen bei einer fehlerfreien Übertragung derselben zur erfolgreichen Decodierung der Daten der ersten Klasse erforderlich ist, und dass bei einer fehlerhaften Übertragung durch eine Kombination der ersten Gruppe von Sub-Datenpaketen und der zweiten Gruppe von Sub-Datenpaketen ein höherer Codegewinn erzielt wird, wobei der Datensender 100 ausgebildet sein kann, um die erste Gruppe von Sub-Datenpaketen mit einer anderen Datenrate zu senden, als eine zweite Gruppe von Sub-Datenpaketen.

Bei Ausführungsbeispielen kann der Datenempfänger 110 ausgebildet sein, um einen ersten Teil der kanalcodierten Daten, die mit der ersten Gruppe von Sub-Datenpaketen 162 empfangen wurden, zu decodieren, um die Daten der ersten Klasse zu erhalten, und um, sofern die Decodierung der Daten der ersten Klasse nicht erfolgreich war, um zumindest einen zweiten Teil der kanalcodierten Daten, die mit zumindest einer zweiten Gruppe von Sub-Datenpaketen 162 empfangen wurde, mit dem ersten Teil der kanalcodierten Daten zur Erzielung eines höheren Codegewinns zu kombinieren und zu decodieren, um die Daten der ersten Klasse zu erhalten.

Anstelle der Anpassung der Datenrate bzw. dem Modulationsverfahren des gesamten Telegramms aus Abschnitt 1.4 ist es bei Ausführungsbeispielen also auch möglich die Datenrate während eines Telegramms anzupassen. Das heißt zu Beginn der Nachricht wird in der Regel eine höhere Datenrate gewählt, um die minimal nötige Information für eine vorzeitige Decodierung möglichst schnell übertragen zu können. Nachdem diese minimal nötige Information übertragen wurde, kann die Datenrate reduziert werden, somit haben alle weiteren Sub-Pakete eine längere Übertragungsdauer und damit auch eine höhere Latenz.

Optional können vor der Variation der Datenrate noch ein paar zusätzliche Redundanzsubpakete angehängt werden, welche vom Empfänger im Falle von Störungen genutzt werden können.

Somit kann auch ein Decodierversuch auf den Sub-Paketen mit höherer Datenrate erfolgreich sein, wenn wenige Sub-Pakete durch Störung nicht nutzbar sind.

Diese Methodik besitzt gegenüber Abschnitt 1.4 den Vorteil, dass die Leistungsübertragungsbilanz (engl. link-bugdet) der Übertragung mit Hilfe der reduzierten Datenrate mit zunehmender Latenz erhöht wird. Daher können Sender, welche am Empfänger mit einem SNR im Grenzbereich eintreffen mit der Methodik aus Abschnitt 1.4 nicht empfangen werden, mit der Anpassung der Datenrate jedoch schon (wobei dabei eine hohe Latenz in Kauf genommen werden muss).

In einigen Fällen kann es vorkommen, dass eine Detektion der Übertragung mit der hohen Datenrate nicht möglich ist bzw. fehlschlägt (z. B. durch Störungen oder Rauschen). In diesem Fall erfolgt die Detektion erst auf den Sub-Paketen der Aussendung mit der geringeren Datenrate. Daher ist es sinnvoll die Codierung und das Interleaving so zu wählen, dass jeder der beiden Teile für sich selbst decodierbar ist, jedoch auch die Kombination aus beiden für die Decodierung einsetzbar ist.

Optional können nach der Variation der Datenrate ebenfalls noch ein paar zusätzliche Redundanzsubpakete angehängt werden, welche vom Empfänger im Falle von Störungen genutzt werden können.

Bei Ausführungsbeispielen kann sich (Datensenderseitig) die Datenrate innerhalb eines Telegramms ändern. Dabei ist die Änderung so gewählt, dass eine vorzeitige Decodierung möglich ist, sobald alle oder ein Teil Sub-Pakete mit der höheren Datenrate empfangen wurden.

Bei Ausführungsbeispielen kann der Empfänger zunächst nach Empfang aller oder ein Teil der Sub-Pakete mit der höheren Datenrate versuchen das Telegramm zu decodieren. Falls dies fehlschlägt werden die weiteren Sub-Pakete mit der geringeren Datenrate empfangen.

12.2. Sukzessive Anpassung der Datenrate

Bei Ausführungsbeispielen kann der Datensender 100 ausgebildet sein, um die Daten der ersten Klasse kanalzucodieren und auf die erste Mehrzahl von Sub-Datenpaketen 162 aufzuteilen, wobei der Datensender 100 ausgebildet sein kann, um eine Datenrate mit der die Sub-Datenpaketen 162 gesendet werden sukzessive zu erhöhen oder zu erniedrigen.

Bei Ausführungsbeispielen kann also anstelle der sprungweisen Anpassung der Datenrate innerhalb eines Telegramms auch eine sukzessive Anpassung (z. B. linearer Abstieg) der Datenrate vorgenommen werden. Das heißt, die Datenrate nimmt mit zunehmender Anzahl an versendeten Sub-Paketen ab (oder zu).

Das bringt wie in Abschnitt 2.2 den Vorteil mit sich, dass der Empfänger 110 aufgrund von Empfangsparametern entscheiden kann wann eine Decodierung sinnvoll erscheint. In der vorherigen Idee ist dies zwar prinzipiell auch möglich, jedoch ist die Latenz nicht auf dieses Szenario optimiert.

Wird bei dem Ausführungsbeispiel aus Abschnitt 12.1 beispielsweise ein Sub-Paket mehr als die mit der höheren Datenrate ausgesendeten Sub-Pakete benötigt, steigt die Latenz an, da nun die Sub-Pakete mit der kleineren Datenrate folgen, welche eine längere Übertragungsdauer besitzen.

Wir nun die Datenrate sukzessive erhöht, erhöht sich bei dem oben genannten Beispiel zwar auch die Latenz, aber nicht so stark wie bei der sprunghaften Anpassung der Datenrate.

Bei Ausführungsbeispielen kann Datensenderseitig die Datenrate sich innerhalb eines Telegramms ändern, wobei es mehrere verschiedene Datenraten innerhalb des Telegramms gibt. Beispielsweise kann die Datenrate linear fallend gewählt werden.

Bei Ausführungsbeispielen kann der Empfänger anhand von Empfangsparametern (SNR, Störungen) entscheiden wie viele Sub-Pakete für eine vorzeitige Decodierung notwendig sind und empfängt entsprechend viele Sub-Pakete. Hierbei wird entsprechend der im Sender gewählten Methodik die Datenrate sukzessive angepasst.

13. Sukzessive Anpassung der Sub-Paket-Längen

Bei Ausführungsbeispielen kann eine Länge der Sub-Datenpakete der ersten Mehrzahl von Sub-Datenpaketen 162 mit zunehmender Anzahl an versendeten Sub-Datenpaketen abnehmen oder ansteigen.

Fig. 28 zeigt in einem Diagramm eine beispielhafte Belegung des Übertragungskanals bei der Übertragung der ersten Mehrzahl von Sub-Datenpaketen 162 entsprechend des ersten Sprungmusters 160 in der Zeit und Frequenz verteilt, wobei eine Länge der Sub-Datenpakete mit zunehmender Anzahl an versendeten Sub-Datenpaketen abnimmt.

Mit anderen, in ähnlicher Weiße zur sukzessiven Variation der Datenraten (siehe Abschnitt 12.2) kann bei Ausführungsbeispielen auch die Länge der Sub-Pakete über der Anzahl an ausgesendeten Sub-Paketen variiert werden. Das heißt die Länge der Sub-Pakete steigt oder sinkt mit der Anzahl an versendeten Sub-Paketen.

Im ersten Sub-Paket (oder in den ersten 2, 3, 4, ...) ist bereits der Großteil (oder die gesamte Information) der zu übertragenden Daten eingebracht. Somit handelt es sich ab dem 2ten bzw. 3ten Sub-Paket um reine Redundanz.

Der Empfänger kann entsprechend nach dem 2ten bzw. 3ten empfangen Sub-Paket einen Decodierversuch starten oder anhand der Empfangsparameter (SNR, Störgrad) entscheiden wann ein erster Decodierversuch als sinnvoll erscheint.

Durch diese Methodik ist die Latenz ähnlich zu Abschnitt 2 abhängig von den Empfangsparametern. Daher haben Knoten mit besseren Empfangsparametern eine kleinere Latenz als Knoten mit schlechten Empfangsparametern.

Bei Ausführungsbeispielen kann sich Datensenderseitig die Länge der Sub-Pakete innerhalb eines Telegramms ändern, wobei die Länge von der Anzahl an bereits versendeten Sub-Paketen abhängig ist.

Bei Ausführungsbeispielen kann der Empfänger einen Decodierversuch starten sobald alle notwendigen Informationen hierfür empfangen wurden oder entscheidet andernfalls anhand von Empfangsparametern (SNR, Störungen) wie viele Sub-Pakete für eine vorzeitige Decodierung notwendig sind und entsprechend viele Sub-Pakete empfangen.

14. Anpassung der Sendeleistung

Die vorab beschriebenen Ausführungsbeispiele besitzen unter gewissen Umstanden den Nachteil, dass eine Reduktion der Latenz in der Regel nur dann erzielt werden kann, wenn die Empfangsparameter (SNR, Störgrad) des Telegramms gut sind.

Typische Telegrammnetze werden jedoch so ausgelegt, dass es immer einige Sensorknoten gibt, die sich an der Empfangsgrenze (schlechtes SNR und/oder starke Störungen) befinden. Für diese Knoten ist mit den vorherigen Konzepten zwar eine Reduzierung der Latenz möglich, jedoch nicht in der gleichen Region wie für Sender mit guten Empfangsparametern.

Um dieses Problem zu lösen, kann die Basisstation anhand der Empfangsparameter den Sensorknoten verschiedene Sendeleistungen zuweisen, welche entweder für alle Aussendungen verwendet werden oder nur für Telegramme mit hoher Priorität gelten. Somit ist es ebenfalls für Sensorknoten mit schlechten Empfangsparametern möglich bei Bedarf eine Nachricht mit geringer Latenz zu übertragen.

Bei Ausführungsbeispielen die Sendeleistung der einzelnen Knoten von der Basisstation vorgegeben werden und dort anhand der Empfangsparameter bestimmt werden.

15. Erzeugung von Sprungmustern

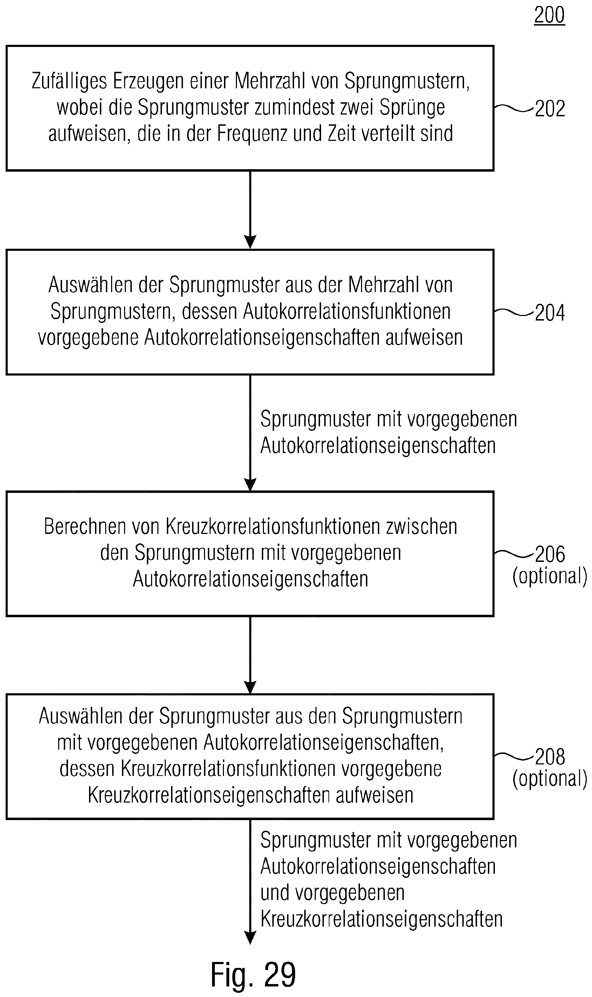

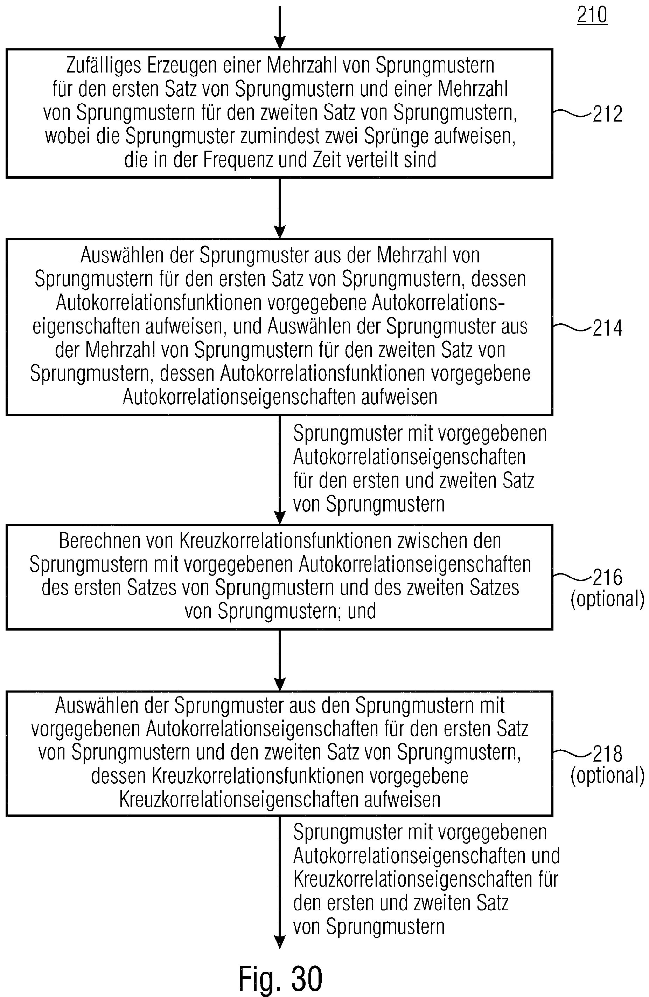

Im Folgenden werden Ausführungsbeispiele eines Verfahrens zum Erzeugen von Sprungmustern näher beschrieben. Im Detail zeigt Fig. 29 dabei ein Verfahren zum Erzeugen von Sprungmustern für eine einfache (d.h. einmal) Übertagung von Daten mittels eines Sprungmusters, während Fig. 30 ein Verfahren zum Erzeugen von Sprungmustern für eine wiederholte Übertagung von Daten mittels zwei Sprungmustern zeigt.

Fig. 29 zeigt ein Flussdiagramm eines Verfahrens 200 zum Erzeugen eines Satzes von Sprungmustern, gemäß einem Ausführungsbeispiel. Das Verfahren 200 umfasst einen Schritt 202 des zufälligen Erzeugens einer Mehrzahl von Sprungmustern, wobei die Sprungmuster zumindest zwei Sprünge aufweisen, die in der Frequenz und Zeit verteilt sind. Das Verfahren 200 umfasst ferner einen Schritt 204 des Auswählens der Sprungmuster aus der Mehrzahl von Sprungmustern, deren Autokorrelationsfunktionen vorgegebene Autokorrelationseigenschaften aufweisen, um Sprungmuster mit vorgegebenen Autokorrelationseigenschaften zu erhalten.

Bei Ausführungsbeispielen können diejenigen Sprungmuster die vorgegebenen Autokorrelationseigenschaften erfüllen, deren Autokorrelationsfunktions-Nebenmaxima einen vorgegebenen minimalen Amplitudenschwellwert nicht überschreiten. Der Amplitudenschwellwert kann beispielsweise gleich einer Anzahl von Sprüngen eines Clusters einer Mehrzahl von Clustern sein, in die das Sprungmuster unterteilt ist. Ein Cluster kann beispielsweise eine Anzahl von Sprüngen sein, die den gleichen Zeit- und/oder Frequenzabstand zueinander aufweisen.

Bei Ausführungsbeispielen können diejenigen Sprungmuster die vorgegebenen Autokorrelationseigenschaften erfüllen, deren Teilsumme über eine vorgegebene Anzahl von größten Amplitudenwerten der jeweiligen Autokorrelationsfunktion gebildet, kleiner als ein vorgegebener Schwellwert ist. Der Schwellwert kann dabei so gewählt werden, dass zumindest zwei Sprungmuster (oder eine vorgegebene Anzahl von Sprungmustern) die vorgegebenen Autokorrelationseigenschaften erfüllen.

Wie in Fig. 29 zu erkennen ist, kann das Verfahren 200 ferner einen Schritt 206 des Berechnens von Kreuzkorrelationsfunktionen zwischen den Sprungmustern mit vorgegebenen Autokorrelationseigenschaften aufweisen. Ferner kann das Verfahren 200 einen Schritt 208 des Auswählens der Sprungmuster aus den Sprungmustern mit vorgegebenen Autokorrelationseigenschaften, deren Kreuzkorrelationsfunktionen vorgegebene Kreuzkorrelationseigenschaften aufweisen, um Sprungmuster mit vorgegebenen Autokorrelationseigenschaften und vorgegebenen Kreuzkorrelationseigenschaften zu erhalten.

Bei Ausführungsbeispielen können diejenigen Sprungmuster die vorgegebenen Kreuzkorrelationseigenschaften erfüllen, deren Teilsummen über eine vorgegebene Anzahl von größten Amplitudenwerten der jeweiligen Kreuzkorrelationsfunktion gebildet, am kleinsten sind.

Fig. 30 zeigt ein Flussdiagramm eines Verfahrens 210 zum Erzeugen eines ersten Satzes von Sprungmustern und eines zweiten Satzes von Sprungmustern. Das Verfahren 210 umfasst einen Schritt 212 des zufälligen Erzeugens einer Mehrzahl von Sprungmustern für den ersten Satz von Sprungmustern und einer Mehrzahl von Sprungmustern für den zweiten Satz von Sprungmustern, wobei die Sprungmuster zumindest zwei Sprünge aufweisen, die in der Frequenz und Zeit verteilt sind, wobei die Sprungmuster für den ersten Satz von Sprungmustern und die Sprungmuster für den zweiten Satz von Sprungmustern unterschiedlich sind. Ferner umfasst das Verfahren 210 einen Schritt 214 des Auswählens der Sprungmuster aus der Mehrzahl von Sprungmustern für den ersten Satz von Sprungmustern, deren Autokorrelationsfunktionen vorgegebene Autokorrelationseigenschaften aufweisen, um für den ersten Satz von Sprungmustern Sprungmuster mit vorgegebenen Autokorrelationseigenschaften zu erhalten, und Auswählen der Sprungmuster aus der Mehrzahl von Sprungmustern für den zweiten Satz von Sprungmustern, deren Autokorrelationsfunktionen vorgegebene Autokorrelationseigenschaften aufweisen, um für den zweiten Satz von Sprungmustern Sprungmuster mit vorgegebenen Autokorrelationseigenschaften zu erhalten.

Bei Ausführungsbeispielen kann ein zeitlicher Abstand der Sprünge der Sprungmuster für den zweiten Satz von Sprungmustern mindestens so groß sein wie eine zeitliche Länge eines der Sprünge der Sprungmuster für den ersten Satz von Sprungmustern.

Beispielsweise kann, um möglichst viele Wiederholungen ineinander zu verschachteln können, der kürzeste zeitliche Abstand zwischen zwei Sub-Datenpaketen (oder Bursts) maximiert werden. Dies wäre (T_Frame - N*T_Burst)/(N-1), also eine äquidistante zeitliche Verteilung der Bursts (innerhalb der Cluster und zwischen den Clustern). Da diese Regularität natürlich für den Design-Prozess nicht optimal ist, kann ein leichter Jitter eingefügt werden.

Bei Ausführungsbeispielen können diejenigen Sprungmuster die vorgegebenen Autokorrelationseigenschaften erfüllen, deren Autokorrelationsfunktions-Nebenmaxima einen vorgegebenen minimalen Amplitudenschwellwert nicht überschreiten. Der Amplitudenschwellwert kann beispielsweise gleich einer Anzahl von Sprüngen eines Clusters einer Mehrzahl von Clustern sein, in die das Sprungmuster unterteilt ist. Ein Cluster kann beispielsweise eine Anzahl von Sprüngen sein, die den gleichen Zeit- und/oder Frequenzabstand zueinander aufweisen.

Bei Ausführungsbeispielen können diejenigen Sprungmuster die vorgegebenen Autokorrelationseigenschaften erfüllen, deren Teilsumme über eine vorgegebene Anzahl von größten Amplitudenwerten der jeweiligen Autokorrelationsfunktion gebildet, kleiner als ein vorgegebener Schwellwert ist. Der Schwellwert kann dabei so gewählt werden, dass zumindest zwei Sprungmuster (oder eine vorgegebene Anzahl von Sprungmustern) die vorgegebenen Autokorrelationseigenschaften erfüllen.

Wie in Fig. 30 zu erkennen ist, kann das Verfahren 210 ferner einen Schritt 216 des Berechnens von Kreuzkorrelationsfunktionen zwischen den Sprungmustern mit vorgegebenen Autokorrelationseigenschaften für den ersten Satz von Sprungmustern und von Kreuzkorrelationsfunktionen zwischen den Sprungmustern mit vorgegebenen Autokorrelationseigenschaften für den zweiten Satz von Sprungmustern aufweisen. Ferner kann das Verfahren einen Schritt 218 des Auswählens der Sprungmuster aus den Sprungmustern mit vorgegebenen Autokorrelationseigenschaften für den ersten Satz von Sprungmustern, deren Kreuzkorrelationsfunktionen vorgegebene Kreuzkorrelationseigenschaften aufweisen, um Sprungmuster mit vorgegebenen Autokorrelationseigenschaften und vorgegebenen Kreuzkorrelationseigenschaften für den ersten Satz von Sprungmustern zu erhalten, und der Sprungmuster aus den Sprungmustern mit vorgegebenen Autokorrelationseigenschaften für den zweiten Satz von Sprungmustern, deren Kreuzkorrelationsfunktionen vorgegebene Kreuzkorrelationseigenschaften aufweisen, um Sprungmuster mit vorgegebenen Autokorrelationseigenschaften und vorgegebenen Kreuzkorrelationseigenschaften für den zweiten Satz von Sprungmustern zu erhalten.

Bei Ausführungsbeispielen können diejenigen Sprungmuster die vorgegebenen Kreuzkorrelationseigenschaften erfüllen, deren Teilsummen über eine vorgegebene Anzahl von größten Amplitudenwerten der jeweiligen Kreuzkorrelationsfunktion gebildet, am kleinsten sind.

<u>15.1 Erzeugung von Sprungmustern für TSMA</u>

Sprungmuster, die mit dem in Fig. 29 oder Fig. 30 gezeigtem Verfahren erzeugt sind, können beispielsweise in einem System zur unidirektionalen oder bidirektionalen Datenübertragung von vielen Sensorknoten zu einer Basisstation unter Verwendung des sogenannten "Telegram Splitting Multiple Access (TSMA)" Zugriffsverfahrens zum Einsatz kommen.

Bei TSMA wird dabei die Übertragung einer Nachricht in eine Vielzahl kurzer Bursts (= Sprünge, oder Sub-Datenpakete) 142 unterteilt, zwischen denen sich jeweils unterschiedlich lange übertragungsfreie Zeitintervalle befinden. Die Bursts 142 können dabei nach einem echten oder einem Pseudo-Zufallsprinzip sowohl über die Zeit als auch über die zur Verfügung stehenden Frequenzen verteilt werden.

Dieser Ansatz des Telegram-Splittings liefert dabei eine besonders große Robustheit gegenüber Störungen anderer Sensorknoten, egal ob sie nun aus dem eigenen oder aus fremden Systemen kommen. Die Störrobustheit bei den eigenen Sensorknoten wird insbesondere durch das möglichst gleichmäßige Verteilen der verschiedenen Nutzersignal-Bursts sowohl über den Zeit- wie auch den Frequenzbereich erzielt.

Diese zufallsähnliche Verteilung kann durch verschiedene Maßnahmen erreicht werden, wie z.B. (1) durch unvermeidbare Toleranzabweichungen des Kristallreferenzoszillators bzgl. der Frequenz, (2) durch den zufälligen asynchronen Kanalzugriff erfolgt eine beliebige Granularität im Zeitbereich, und (3) durch unterschiedliche Burst-Anordnung der verschiedenen Sensorknoten zu verschiedenen Sprungmustern.

Um eine weitere Steigerung der Ausfallwahrscheinlichkeit in der Datenübertragung zu erzielen, kann es beim Senden der Nutzerdaten nun zum Einsatz von Zeit- und Frequenzdiversität kommen. Die Sub-Datenpakete (Bursts) können mindestens zweimal zeitlich versetzt in z.B. möglichst unterschiedlichen Sprungmustern und in z.B. möglichst verschiedenen Frequenzbändern gesendet werden. Da für die Übertragung des Signals nur ein Sender im Sensorknoten zur Verfügung steht, resultieren für die verschachtelte Wiederholung bestimmte Einschränkungen hinsichtlich der zeitlichen Burst-Anordnung im Sprungmuster. Die Art und Weise der Verschachtelung von Erst- und Zweitaussendung im Wiederholungsfall wird an späterer Stelle noch genauer erläutert.

Die diversitär redundanten Signale können empfangsseitig beispielsweise in allen möglichen Formen, wie Maximal-Ratio Combining (MRC), Equal-Gain Combining, Scanning/Switching Combining oder Selection Combining zusammengeführt werden. Beim Design solcher diversitär redundanter Sprungmuster gilt es aber auch zu beachten, dass der Kombinierer (engl. combiner) möglichst einfach erkennt, dass eine Wiederholung und keine Erstaussendung gesendet wurde.

Der Entwurf und die Optimierung derartiger Sprungmuster (engl. hopping pattern) wird im Folgenden detailliert erläutert.

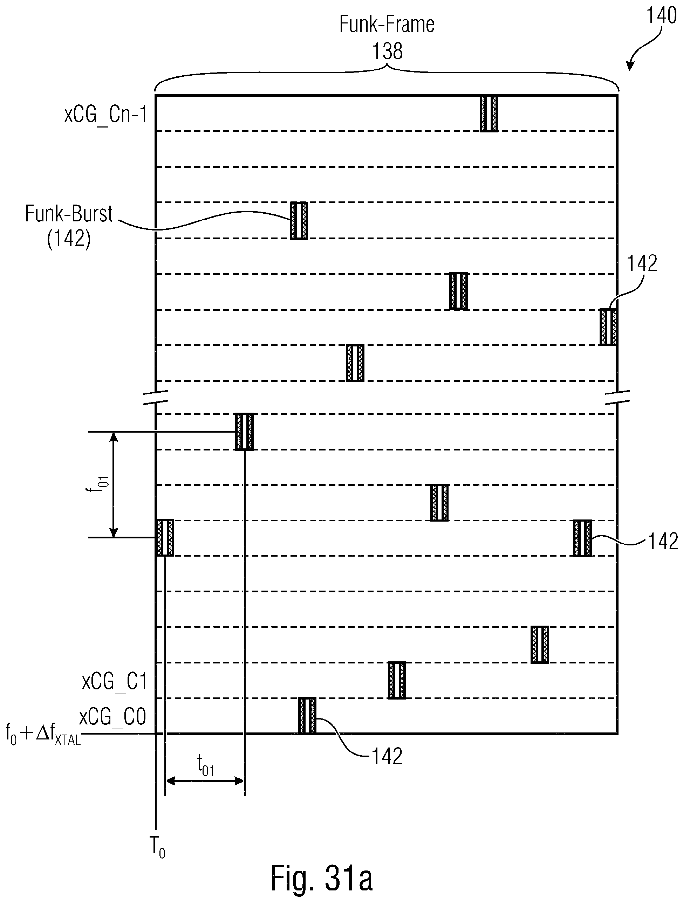

Bei dem Übertragungsverfahren TSMA sind die einzelnen Bursts eines Datenpakets 120 (im Folgenden auch als Frame bezeichnet), wie in Fig. 31a dargestellt, sowohl über die Zeit wie auch über die Frequenzen verteilt.

Im Detail zeigt Fig. 31a in einem Diagramm einen Aufbau eines Frames 120 mit einem TSMA Sprungmuster 140. Dabei beschreibt die Ordinate die Frequenz bzw. Kanäle (Frequenzkanäle) und die Abszisse die Zeit.

Die Startzeit $T_0$ eines Frames 120 mit der Gesamtdauer $T_{Frame}$ wird vom Sensorknoten 100 aufgrund der asynchronen Übertragung zufällig ausgewählt. Die Zeitdauer $T_{Burst}$ eines Bursts 142 kann variieren, ist im Folgenden ohne Einschränkung der Allgemeingültigkeit als konstant angenommen, wohingegen die Zeitintervalle $t_{n,(n+1)}$, welche jeweils den Abstand zweier benachbarter Burst-Mitten (hier der beiden Bursts mit den Indizes $n$ und $n+1$) kennzeichnen, jeweils Zufallsgrößen sind, die alle innerhalb eines vorgebbaren Bereichs $T_{A\_min} \leq t_{n,(n+1)} \leq T_{A\_max}$ für $n \in \{1,2,...,N-1\}$ liegen. $N$ ist die Anzahl der Bursts 142 innerhalb eines Frames 120. Für die zur Übertragung verwendeten Frequenzen wird angenommen, dass diese in Form diskreter Frequenzkanäle vorliegen, welche in einem vorgegebenen Frequenzkanalraster liegen. Die Frequenzseparierung $f_{n,(n+1)}$ zwischen 2 Bursts 142 ist ein Vielfaches des in TSMA verwendeten Trägerabstandes $B_C$ und damit unabhängig von der verwendeten Symbolrate $S_R$. ($S_R \leq B_C$). Die relative Startfrequenz eines Frames sei mit $f_0$ bezeichnet.

Die Anzahl der verfügbaren Frequenzkanäle sei mit $L$ vorgegeben und es gelte $N \leq L$. Insofern sind üblicherweise mehr oder exakt so viele Frequenzkanäle vorhanden, wie von den $N$ Bursts 142 benötigt werden und innerhalb eines Frames 120 befindet sich damit jeder der $N$ Bursts 142 in einem anderen Frequenzkanal. Die von den $N$ Bursts genutzten Frequenzen müssen nicht zusammenhängend sein, sondern können sich innerhalb der $L$ vorhanden Frequenzen beliebig verteilen.

Die Anordnung der $N$ Bursts 142 in Zeit und Frequenz wird im Folgenden als TSMA-Muster (TSMA-Sprungmuster) bezeichnet. Ist dieses Sprungmuster dem Empfänger bekannt, dann kann dieser sich anhand der in manchen oder jedem Burst 142 befindlichen Pilot-Sequenzen darauf synchronisieren und anschließend die Empfangsdaten dekodieren.

Bezüglich des Designs einer oder mehrerer TSMA-Muster können nachfolgend aufgeführte systembedingte Annahmen und Einschränkungen beachtet werden.

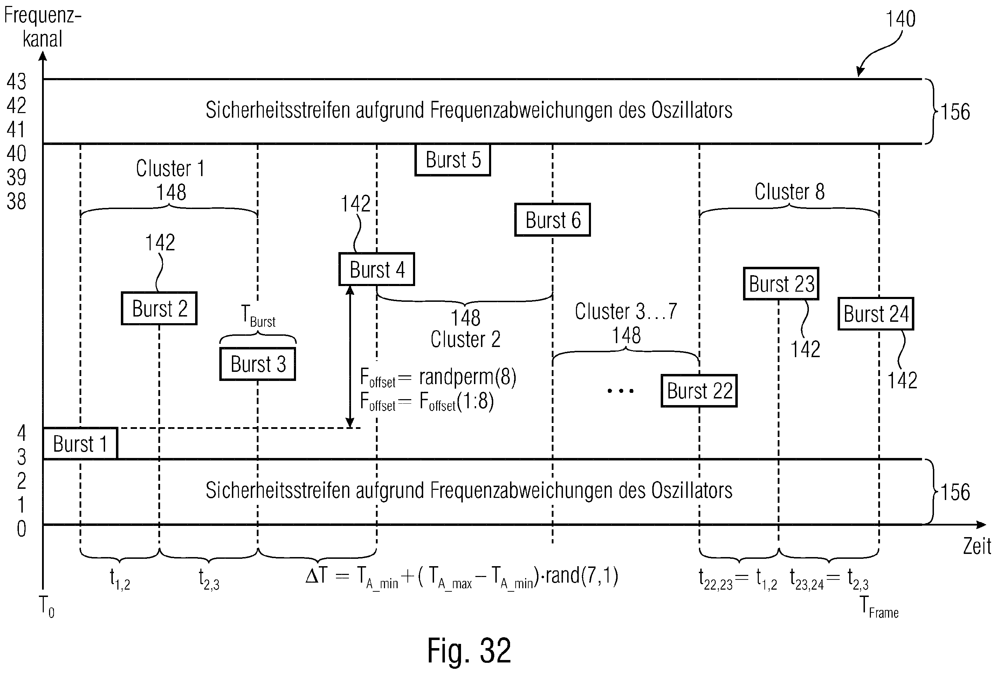

(1) Die Frequenzabweichung des Oszillators von seiner Nominalfrequenz kann berücksichtigt werden. Ja nach den Systemparametern und Hardwareanforderungen kann die Frequenzabweichung durchaus ein Mehrfaches des Trägerabstandes $B_c$ sein. Da dieser Frequenzoffset sowohl positive als auch negative Werte annehmen kann, kann entsprechend an beiden Rändern des insgesamt zur Nutzung betrachteten Frequenzbereichs ein Sicherheitsstreifen 156 von S Frequenzkanal vorgesehen werden, in denen kein Burst liegt (siehe auch Fig. 32). Insofern reduziert sich der Freiheitsgrad für die einzelnen Bursts des Sprungmusters auf $(L-2 \cdot S)$ Frequenzen, wobei immer noch $N \leq (L-2 \cdot S)$ gilt. (2) Aufgrund der zeitlich asynchronen Übertragung ist dem Empfänger 110 nicht bekannt, wann ein Sender 100 sendet und auch welcher Sender mit welchem Hopping-Pattern sendet ist dem Empfänger unbekannt. Insofern wäre es für die Detektion eines Signales mit einem erheblichen Mehraufwand verbunden, wenn die Muster-Anordnung, also die Gruppierung der $N$ Bursts 142 innerhalb des Zeitbereichs $T_{Frame}$ und über die $(L-2 \cdot S)$ Frequenzen völlig zufällig wäre. Insofern können beispielsweise $C$ aufeinanderfolgende Bursts 142 zu einem sogenannten Cluster 148 zusammengefasst werden, die bezüglich ihrer Zeit- und Frequenzabstände relativ zueinander z.B. identisch sind. Ein Sprungmuster 140 besteht damit aus $N/C$ Cluster 148 mit jeweils $C$ Bursts 142. $C$ kann dabei vorteilhafterweise so gewählt werden, dass es ganzzahliger Teiler von $N$ ist. Es gilt also $N/C \mid N \iff \exists k \in \mathbb{Z} : k \cdot N/C = N$. Details werden in Fig. 32 gezeigt besprochen. Es sei aber schon hier erwähnt, dass ein Sprungmuster-Aufbau, bestehend aus $N/C$ Clustern 148, die in ihrer inneren Struktur völlig identisch sind, gewisse Nachteile bezüglich ihrer Korrelationseigenschaften aufweisen (Auftreten von stark ausgeprägten Nebenmaximas mit jeweils einer Amplitude von $N/C$ in der 2D-Autokorrelationfunktion. Alle ersten Bursts 142 in den $N/C$ Clustern haben frequenzversetzt (und eventuell auch zeitversetzt) identisches Wiederholmuster.

Entsprechend kommt es vor, dass sich zeitgleich $N/C$ Burst 142 gegenseitig stören. Dieser Nachteil kann aber in Hinblick auf die dadurch erzielbaren Vereinfachungen im Empfänger in Kauf genommen werden. Eine Clustergröße von C=1 (und somit kein Cluster) ist immer am vorteilhaftesten bezüglich der Korrelationseigenschaften. (3) Aufgrund des Telegram Splittings ist die Zeitdauer $T_{Burst}$ eines Bursts 142 relativ kurz im Verhältnis zur Übertragungszeit $T_{Frame}$ des gesamten Frames 120. Lässt man nach dem Senden des ersten Bursts 142 eine gewisse Mindestzeit $T_{A\_min}$ verstreichen, kann dies bzgl. des Stromverbrauchs der batteriebetriebenen Sensorknoten gewisse Vorteile aufweisen (Erholungszeit der Batterie nach vergleichsweise energieintensivem Sendevorgang). Dieser Mindestabstand $T_{A\_min}$ sollte als Designvorgabe auch möglichst innerhalb der Cluster sowie zwischen den Clustern eingehalten werden.

Die oben genannten Punkte 1) bis 3) können als Ausgangspunkt für das Design von Sprungmustern für einfach (= einmal oder nicht wiederholt) ausgesendete Daten (Nutzerdaten) verwendet werden.

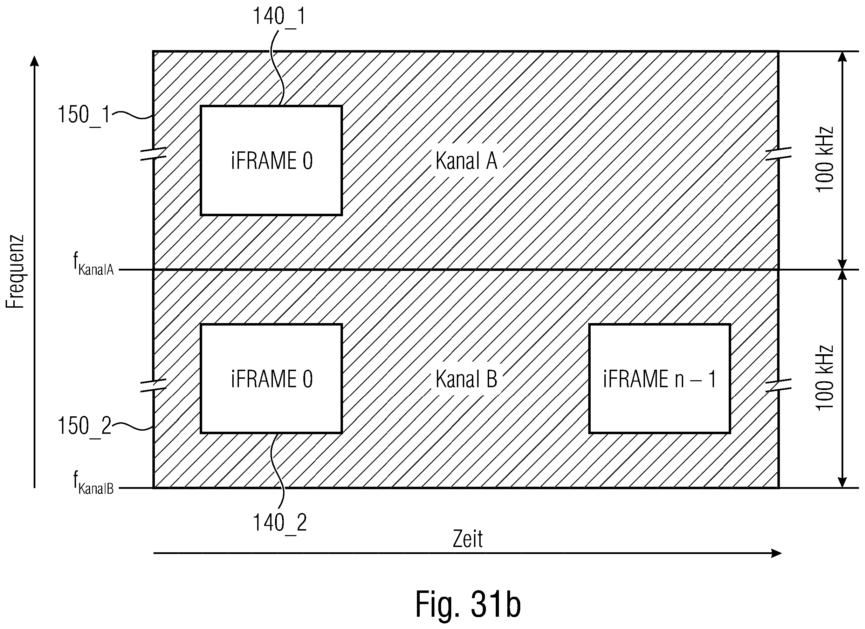

Um die Ausfallwahrscheinlichkeit in der Datenübertragung weiter zu steigern, kann es beim Senden der Nutzerdaten nun optional zum Einsatz von Zeit- und Frequenzdiversität in Form von verschachtelten Wiederholungen kommen. Hierbei können die Bursts (=Sprünge oder Sub-Datenpakete) 142 der beiden zu wiederholenden Sprungmuster beispielsweise frameweise wie in Fig. 31b angedeutet zeitlich ineinander verwoben werden. Damit die für beide Wiederholungen benötigte Sendezeit möglichst gering bleibt, bietet sich eine alternierende Verschachtelung an, wo sich die Bursts von Erst- und Zweitaussendung abwechseln.

Welche weiteren Anforderungen für die neu zu entwerfenden Sprungmuster noch existieren, wird in den nächsten Punkten beschreiben. Die neuen Sprungmuster für wiederholt ausgesendete Daten können dabei optional mit den Sprungmustern für einfach ausgesendete Daten zusammenpassen, d.h. eine möglichst geringe Kreuzkorrelation haben.

(4) Auswahl des Frequenzsprungmusters. Die TSMA Sprungmuster sollten a) gegenüber externen Störungen aus anderen Systemen (hier ist weder die Bandbreite noch die Zeitdauer der Störung bekannt) robust sein, ebenso wie b) gegenüber Störungen aus dem eigenen System. Optional kann es c) dem Empfänger möglichst einfach gemacht werden, zwischen Sendungen mit und ohne Wiederholung zu unterscheiden, speziell bei Verwendung von Maximal-Ratio Combining. Die Aspekte a) und c) sind unabhängig vom Entwurfsprozess und können vorab festgelegt werden. Eine verbesserte oder sogar maximale Störfestigkeit gegenüber externen Störungen kann beispielsweise dadurch erreicht werden, dass die beiden zu wiederholenden Frames in zwei verschiedene Frequenzbänder (mit ihren jeweils $L$ Frequenzkanälen) gelegt werden. Je größer der Frequenzabstand ist (siehe Fig. 31b), desto geringer ist die Wahrscheinlichkeit, dass ein externer Störer beide Frames gleichzeitig stören kann. Im Detail zeigt Fig. 31b in einem Diagramm eine Belegung von zwei Frequenzkanälen 150_1 und 150_2 bei der wiederholten Übertragung von Daten mittels eines ersten Sprungmusters 140_1 und eines zweiten Sprungmusters 140_2. Dabei beschreibt die Ordinate die Frequenz und die Abszisse die Zeit. Mit anderen Worten, Fig. 31b zeigt eine verschachtelte Frameübertragung mit Wiederholung bei Verwendung von zwei verschiedenen Frequenzbändern.

Der Empfänger (Datenempfänger) kann beispielsweise anhand des Sprungmusters zwischen Aussendungen mit und ohne Wiederholung unterscheiden, wenn für beide Sendeformen unterschiedliche Sprungmuster verwendet werden. Ohne Einschränkung der Allgemeinheit können für Übertragungen ohne Wiederholung beispielsweise die in Abschnitt 3.2 gezeigten Sprungmuster verwendet werden und für Übertragungen mit Wiederholung können beispielsweise die in Abschnitt 3.3 gezeigten Sprungmuster verwendet werden. Prinzipiell kann bei der ersten Übertragung im Wiederholungs-Modus ein anderes (neues) Sprungmuster verwendet werden wie bei der zweiten Übertragung. Es hat sich aber gezeigt, dass mit entsprechenden, weiter unten beschriebenen Maßnahmen die Verwendung eines einzigen Sprungmusters für alle Aussendungen im Wiederholungs-Modus ausreicht. Zudem erleichtert auch diese Maßnahme dem Empfänger das gemeinsame Erkennen der einzelnen Bursts bei gleichen Pattern im Wiederholungs-Modus.

Wie bei der bei Verwendung von gleichen Sprungmustern bei der Erst- und Zweitaussendung im Wiederholungsfall eine verbesserte oder sogar maximale Robustheit gegenüber Störungen aus dem eigenen System erreicht werden kann (Punkt (4b)), wird im Folgenden erläutert. Da gemäß einem Ausführungsbeispiel für die Einzelaussendung jeweils andere Sprungmuster verwenden werden (z.B. die Sprungmuster aus Abschnitt 3.2) als für die Erst- und Zweitaussendung im Wiederholungsfall verwendet werden (z.B. die Sprungmuster aus Abschnitt 3.2), ist eine Vollstörung mit den Sprungmustern im Wiederholungsfall (die Überlappung aller $N$ Bursts eines Frames) nicht möglich. In einem späteren Beispiel wird anhand der Kreuzkorrelierten gezeigt, dass sich im schlimmsten Fall maximal $C$ Bursts (eines Clusters) treffen können. Weisen die für den für den Wiederholungsfall zu verwendenden Sprungmustern zusätzlich noch (etwas) andere Zeitabstände zwischen den Bursts im Cluster auf, so kann die mittlere Trefferanzahl nochmals reduziert werden. Im Folgenden wird die Störfestigkeit von Sendern betrachtet, die im Wiederholmodus jeweils das gleiche Sprungmuster verwenden. Würden zwei Sender mit identischen Sprungmustern zum gleichen Zeitpunkt $T_0$ (siehe Fig. 31b) im gleichen Frequenzband starten, dann käme es ohne irgendeine Gegenmaßnahmen zu einer vollständigen Überlagerung aller $2N$ Bursts in beiden Frames des Wiederholmodus. Eine derartige Situation kann durch Parametervariation fast gänzlich verhindert werden. Beispielsweise kann eine Vielfalt durch die Einführung eines variablen, mehrstufigen Zeitoffsets $T_W$ (siehe Bild 2), oder dem zufälligen Starten des ersten Bursts in einem der beiden Frequenzbändern A oder B erreicht werden. Zusätzlich kann das TSMA Muster noch mit einem beispielsweise zufälligen positiven oder negativen Frequenzoffset (z.B. in Vielfachen des Trägerabstandes $B_C$) beaufschlagt werden. Nach den Vorgaben in [ETSI TS 103 357 V0.0.5 (2017-03), "ERM-Short Range Devices - Low Throughput Networks; Protocols for Interfaces A, B and C ", Kapitel 7 "Telegram splitting ultra narrow band (TS-UNB) family, März 2017] würden sich bei zusätzlicher Vorgabe von acht verschiedenen Wiederholungs-Sprungmustern eine Restwahrscheinlichkeit von 0,2% ergeben, dass sich bei zufällig gleichem $T_0$ zwei Sprungmuster vollständig auslöschen würden. Ein zufälliges Zusammentreffen der Aussendungen zweier Datensender bei $T_0$ hängt vom Duty-Cycle und der Burstdauer ab und liegt üblicherweise ebenfalls schon im niedrigen Promillebereich.

Im Folgenden werden Einschränkungen im Zeitbereichsverhalten beschrieben. Als Zeiteinschränkungen wurden unter Punkt 2) die Unterteilung des Frames in $N/C$ Cluster mit jeweils C Bursts eingeführt, wobei die einzelnen Bursts der Cluster immer gleiche zeitliche Abstände zu ihren benachbarten Bursts aufweisen. Und in Punkt 3) wurde wegen der Stromökonomie noch ein Mindestzeit $T_{A\_min}$ zwischen den Bursts eingeführt, die nicht unterschritten werden sollte. Generell kann festgehalten werden, dass je kleiner das für die $N$ Bursts zur Verfügung stehende Frequenzband mit seinen

(L-2.S) möglichen belegbaren Frequenzen ist, umso wichtiger ist das Pseudo-Zufallsprinzip der Zeitintervalle $t_{n,(n+1)}$ zwischen den Clustern. Inwieweit dieses Zufallsprinzip aufgrund des in Punkt 4) geforderten variablen, mehrstufigen Zeitoffsets $T_W$ (siehe Fig. 31b) für die Wiederholungs-Sprungmuster aufrechterhalten werden kann, muss geklärt werden. Dass das gleiche Sprungmuster im Wiederholungsfall verwendet wird ist in Bezug auf das Pseudo-Zufallsprinzip auf jeden Fall als positiv anzusehen.

Unter Berücksichtigung der oben aufgeführten Einschränkungen ergibt sich der in Fig. 32 dargestellte Aufbau eines TSMA-Musters 140.

Im Detail zeigt Fig. 32 in einem Diagramm eine schematische Ansicht eines Aufbaus eines TSMA-Sprungmusters 140. Dabei beschreibt die Ordinate die Frequenz in Frequenzkanälen und die Abszisse die Zeit. Mit anderen Worten, Fig. 9 zeigt eine Struktur des TSMA-Sprungmusters 140 mit Cluster-Anordnung und Frequenzbelegung.

Zur besseren Verständlichkeit seien in Fig. 9 die Werte soweit nötig und rein beispielhaft mit konkreten Zahlen unterlegt: *L = 44, S = 4, N = 24, C = 3.* Jeweils *S=4* Frequenzbänder sind aufgrund der Frequenzabweichung des Oszillators von seiner Nominalfrequenz für die BurstBelegung gesperrt, wodurch noch 36 Frequenzbänder für die 24 Bursts, bzw. die 8 Cluster verbleiben.

Es ergeben sich die im Folgenden beschriebenen Freiheitsgrade bezüglich der Frequenzkanalbelegung. Da die 3 Bursts in den 8 Cluster relativ zueinander jeweils einen gleichen Frequenzabstand haben können, können mindestens 8 weitere Frequenzbänder reserviert werden, womit maximal ein Hub von 28 Frequenzbändern für die Basiszuordnung der 3 Bursts übrigbleibt. Beispielsweise kann eine beliebige relative Zuordnung mit 3 verschiedenen Frequenzbändern erfolgen. Ein möglichst großer Frequenzhub bei benachbarten Bursts wie es beispielsweise bei den Basiszuordnungen (1,28,14) oder (1,24,12) der Fall ist, erweist sich in Bezug auf die späteren Optimierungen als vorteilhaft. Auch die Zuordnung der einzelnen Cluster zueinander kann nach dem Zufallsprinzip erfolgen. Beispielsweise kann bei den Basiszuordnungen (1,28,14) die Reihenfolge der Zahlen {1,2,3,4,5,6,7,8} beliebig miteinander permutiert werden (Matlab-Befehl: randperm(8)) und diese 8 verschiedenen Werte können jeweils mit der Basiszuordnung addiert werden, um die Frequenzzuordnung der Bursts in den 8 Clustern zu erhalten. Bei den Basiszuordnungen (1,24,12) ist sogar eine Permutation von 12 Startwerten (Matlab-Befehl: randperm(12)) möglich und die ersten 8 Werte können erneut mit der entsprechenden Basiszuordnung (1,24,12) addiert werden. Sofern zwei Gruppen von Sprungmustern zu entwerfen sind, beispielsweise zwei Gruppen von 8 Sprungmustern mit und ohne Wiederholung, dann empfiehlt es sich zwei Basisanordnungen mit unterschiedlichem Frequenzhub zu nehmen. Dann können zwischen den Gruppen keine ganzen Cluster kollidieren.

Es ergeben sich die im Folgenden beschriebene Freiheitsgrade bezüglich der Zeitintervalle. Hier gilt es sowohl die 2 Zeitintervalle zwischen den 3 Bursts der Cluster festzulegen, wie auch die 7 Zeitabstände zwischen den 8 Clustern. Eine gewisse Mindestzeit $T_{A\_min}$ soll dabei nicht unterschritten werden. Eine obere Zeitschranke $T_{A\_max}$ ergibt sich durch die Vorgabe der Framedauer $T_{Frame}$. Die Bestimmung der Zufalls-Zeitintervalle kann ebenfalls durch auswürfeln erfolgen (Matlab-Befehl: $\Delta T = T_{A\_min} + (T_{A\_max} - T_{A\_min}) \cdot rand(7,1)$). Auch hier empfiehlt es sich unterschiedliche Burst-Zeitabstände in den Clustern zu verwenden, falls ein Entwurf von zwei unterschiedlichen Sprungmuster-Gruppen geplant ist. Bei den Zeitabständen zwischen den Clustern kann bei den Wiederholungs-Sprungmustern auch noch überprüft werden inwieweit die Verschiebung durch den mehrstufige Zeitoffset $T_W$ zu keinen Burstüberlappungen führt und inwieweit auch noch $T_{A\_min}$ zwischen allen verschachtelten Bursts eingehalten wird. Ist dies nicht der Fall, so kann die Zeitskalierung erneut durchgeführt werden. Es sollte auch noch erwähnt werden, dass sich bei obigem Matlab-Befehl mit Gleichsetzung von $T_{A\_max} = T_{A\_min}$ auch äquidistante Zeitabstände $\Delta T$ erzielen lassen.

Beim "Telegram Splitting Multiple Access (TSMA)" Zugriffsverfahren wird die Nachricht entsprechend dem Sprungmuster 140 sowohl in Zeit- wie auch in Frequenzrichtung in viele kleine Bursts 142 zerlegt. Durch die asynchrone Übertragung und die unterschiedlichen Frequenzablagen der einzelnen Sensorknoten 100 werden die Bursts 142 sowohl über die Zeit als auch über das zur Verfügung stehende Frequenzspektrum verschmiert. Besitzen alle Sensorknoten 100 das gleiche Sprungmuster, dann kommt es mit steigender Teilnehmerzahl immer öfter dazu, dass sich Bursts unterschiedlicher Teilnehmer zeitlich (im schlimmsten Fall vollständig) überlagern und damit gegenseitig stören. Je mehr Bursts 142 innerhalb eines Frames 120 von Bursts anderer Teilnehmer gestört werden, umso größer wird die Wahrscheinlichkeit, dass die empfängerseitige Fehlerkorrektur versagt und Übertragungsfehler auftreten.

Ausführungsbeispiele schaffen einen Satz von Sprungmustern, welche idealerweise die Paketfehlerrate (Frame oder Paket Error Rate, FER, PER) des Funkübertragungssystems minimieren. Dies geschieht unter der Annahme, dass alle Funkteilnehmer denselben Satz von Sprungmustern verwenden. Während hinsichtlich der Anordnung der Funkfrequenzen in einem Sprungmuster durch Einführung von diskreten Funkkanälen nur eine endliche (wenn auch i.d.R. relativ große) Anzahl von Permutationen möglich ist, führt die zeitliche Anordnung der Bursts 142 aufgrund einer kontinuierlichen Zeitachse zu einer extrem großen Anzahl von Permutationsmöglichkeiten, d.h. Sprungmustern. Damit ist eine "Vollsuche" über alle möglichen Sprungmuster fast ausgeschlossen. Das der Erfindung zugrundeliegende Verfahren basiert daher auf einem Monte-Carlo-Ansatz, welcher aus einer sehr großen Zahl von (pseudo-) zufällig erzeugten Sprungmuster durch geeignete Design-Kriterien einen Satz mit den besten Eigenschaften im Sinne einer zu erwartenden, minimalen Fehlerrate auswählt. Die Anzahl der Sprungmuster in diesem Satz beläuft sich auf $P_{Auswahl}$.

Zur Erstellung geeigneter Sprungmuster 140 wird eine Metrik benötigt, welche idealerweise mit der zu erwartenden Paketfehlerrate in einem streng monotonen Zusammenhang steht, deren Minimierung also idealerweise die Paketfehlerrate minimiert. Bei Ausführungsbeispielen kann als Entwurfskriterium die zweidimensionale (2D-)Autokorrelierte bzw. Kreuzkorrelierte des Sprungmusters betrachtet werden.

Die 2D-Autokorrelierte (AKF) $\Theta_{x,x}$ der Matrix **X** des Sprungmusters 140, welche die Fläche über die mit Vielfachen von $T_A$ abgetastete Zeitdauer $T_{Frame}$ und das belegte Frequenzspektrum mit den L Frequenzbändern aufspannt, lässt sich wie folgt angeben:

$$\theta_{x,x}(f,t) = \sum_{l=0}^{L-1} \sum_{m=0}^{M-1} x_{l,m} \cdot x_{l+f,m+t}$$

wobei *L* die Zeilenanzahl der Matrix **X** und $M = T_{Frame}/T_A$ die Spaltenanzahl der Matrix **X** ist. Falls sich an der betreffenden Stelle *x(l,m)* der Matrix **X** ein Burst befindet, dann erfolgt an dieser Stelle ein Eintrag in **X** mit *x(l,m)* = 1, ansonsten bleibt *x(l,m) = 0*. Die indizierten Elemente von **X,** die außerhalb des belegten Bereichs liegen, sind ebenfalls Null:

$$x(l,m) = 0, \, l < 0 \text{ oder } l \geq L \text{ oder } m < 0 \text{ oder } m \geq M$$

Da sich der Oszillator-Frequenzfehler pro Teilnehmer definitionsgemäß maximal auf eine Abweichung von *S* Frequenzkanälen belaufen kann, erstreckt sich der Frequenz-Index *f* in der AKF von *-2S* bis *+2S*. Der Zeit-Index *t* läuft dagegen von - $T_{Frame}$ bis $T_{Frame}$, in Schritten von $T_{Frame}/T_A$. Die AKF-Dimension von $\Theta_{x,x}$ ist damit *(4S+1) x (2M+1)*.

In der Zeit- und Frequenzinformations-Matrix **X** kann, falls gewünscht, auch der Einfluss von Nachbarkanalstörungen berücksichtigt werden. Dies ist dann wichtig, wenn die Empfangsfilter im Empfänger 110 keine besondere Trennschärfe (Selektivität) hinsichtlich von Nachbarkanalstörungen aufweisen. Dazu kann ein Metrik-Vektor $m_{Met}$ = *{Gleichkanal, 1ster Nachbarkanal, 2ter Nachbarkanal, ...}* eingeführt werden, der in der Matrix **X** die entsprechende Information einfügt. Spezifiziert man beispielsweise eine Metrik mit $m_{Met}$ = *{1, 0.5, 0.1}*, dann werden in **X** an der Stelle *x(L,m),* wo wir die Anwesenheit eines Burst unterstellen, eine *1* und an den beiden Positionen der Nachbarfrequenzen *x(l-1,m)* und *x(l+1,m)* steht eine *0.5*. Entsprechend befindet sich noch weiter außen bei *x(l-2,m)* und *x(l+2,m)* der Wert *0.1* für den 2ten Nachbarkanal. Diese Indizierung kann an allen Positionen geschehen, wo sich ein Burst in **X** befindet.

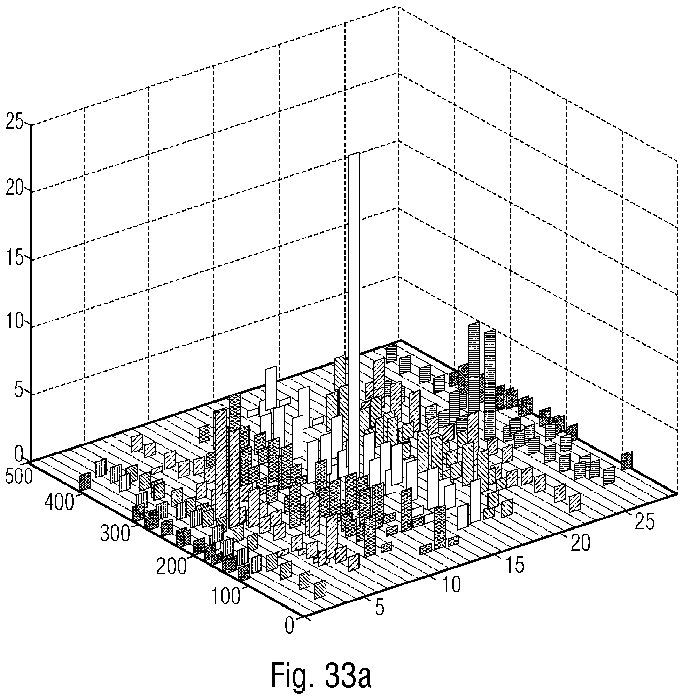

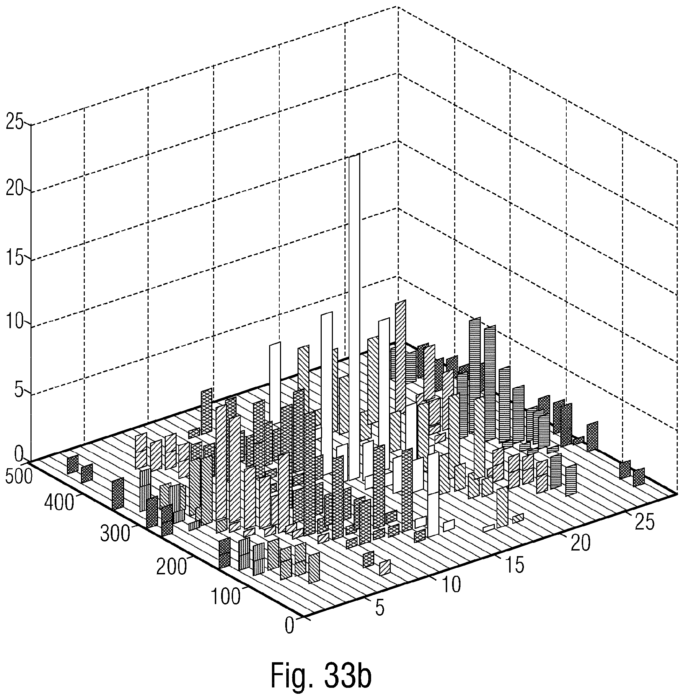

Fig. 33a und 33b zeigen zwei AKF-Beispiele. In Fig. 33a treten neben dem unvermeidbaren Hauptmaximum bei *t = f = 0* (Da die unverschobene Folge mit sich selbst am ähnlichsten ist, hat die 2D-AKF für die in beiden Dimensionen (Zeit und Frequenz) unverschobene Folge den höchsten Wert, in unserem Fall eben *N* Burst-Kollisionen) und den 2 oder 4 möglichen Nebenmaximas mit den Amplituden von jeweils *N/C* aufgrund der Cluster-Bildung, nur noch Werte auf, die kleiner oder gleich einem Schwellwert $N_{Schwelle}$ sind. Je niedriger diese Schwelle ist, desto weniger Bursts sind dann in einem Frame gestört und die Wahrscheinlichkeit eines Übertragungsfehlers sinkt. Fig. 33b zeigt dagegen ein ungünstigeres Sprungmuster, bei dem der Schwellwert an einigen Stellen z.B. deutlich überschritten wird. Die Wahrscheinlichkeit von Übertragungsfehlern steigt dadurch an.

Im Folgenden werden die einzelnen Designschritte detailliert beschrieben.

In einem ersten Design-Schritt können daher $P_{Optimal}$ Kandidaten der Sprungmuster generiert werden, deren AKF-Nebenmaxima einen vorgegebenen minimalen Amplitudenschwellwert $N_{Schwelle} \geq C$ (*C* ist die Cluster-Größe) nicht übersteigen. Die Erzeugung von Kandidaten der Sprungmuster erfolgt im Rahmen einer Monte-Carlo-Simulation, in welcher Sprungmuster mit zufälligen Zeit- und Frequenzmustern (im Rahmen der erwähnten Randbedingungen, siehe oben) generiert werden. Falls für den Schwellwert $N_{Schwelle}$ > *C* gilt, sollte die Anzahl der Werte, die den Wert C übersteigen, möglichst gering sein.

Dazu können die *(4S+1) x (2M+1)* Elemente der 2D-Autokorrelierten $\Theta_{x,x}$ in aufsteigender Reihenfolge in einem Vektor $V_{Sort}$ sortiert werden. Da die Gesamtsumme über alle AKF-Elemente für alle Sprungmuster immer annähernd konstant ist und die meisten AKF-Elemente Werte von 0, 1 oder C (vollständige Cluster-Kollision) aufweisen, interessieren lediglich, falls vorhanden, die Werte größer C. Insofern reicht es aus, dass lediglich die letzten $v_{AKF}$ Elemente von $V_{Sort}$ ,also $V_{Sort}$*(end- $v_{AKF}$+1:end)* betrachtet werden. Als Kriterium (vorgegebene Autokorrelationseigenschaft) kann daher festgelegt werden, dass die Summe $SUM_{AKF}$ dieser $v_{AKF}$ Elemente möglichst einen Summenschwellwert von $S_{Sum\_AKF\_Schwelle}$ = *($v_{AKF}$-1)·C+N* nicht übersteigt. Findet man hierzu nicht genügend verschiedene Sprungmuster, dann kann der Wert von $S_{Sum\_AKF\_Schwelle}$ schrittweise um 1 erhöht werden, bis eine ausreichende Anzahl $P_{Optimal}$ von Sprungmustern zur Verfügung steht. Speziell wenn mittels des Metrik-Vektor $m_{Met}$ Nachbarkanalstörungen in die Berechnung der 2D-AKF einfließen, dann kann der Summenschwellwert $S_{Sum\_AKF\_Schwelle}$ deutlich ansteigen.

Falls unterschiedliche Sätze von Sprungmustern 140 gesucht werden sollen, kann der erste Design-Schritt mit einem neuen Parametersatz wiederholt werden. Beispielsweise kann der Wunsch bestehen, mehrere Sätze von Sprungmustern mit unterschiedlichen Oszillator-Abweichungen zu generieren und gemeinsam zu optimieren. Unterschiedliche Oszillator-Abweichung bewirken verschieden Sicherheitsstreifen S, wodurch sich der Freiheitsgrad der möglichen Burstbelegung verändert. Insofern ändern sich dadurch auch einige Parameter innerhalb der AKF-Berechnung. Oder es soll ein neuer Sprungmuster-Satz erzeugt werden, der mehrfache Wiederholungen unter Verwendung eines mehrstufigen Zeitoffsets $T_W$ ermöglicht. Hier ändern sich die Anforderungen an das Zeitverhalten. Ist eine burstweise alternierende Verschachtelung der Sprungmuster vorgesehen, so kann der kürzeste Abstand zwischen zwei ursprünglichen Bursts eines Sprungmusters ermittelt und vorgegeben werden, welcher dann den Zeitoffsets $T_W$ festlegt. Der Zeitoffsets $T_W$ sollte dabei deutlich größer als die Mindestzeit $T_{A\_min}$ gewählt werden.

Der erste Design-Schritt, das Auffinden von $P1_{Optimal}$ Kandidaten eines Satzes von Sprungmustern-Pattern, erfolgt gänzlich unabhängig vom Auffinden von $P2_{Optimal}$ Kandidaten eines anderen Pattern-Satzes. Insofern können sämtliche Parametervorgaben bei den Pattern (Cluster, Frequenzmuster, Zeitabstände, usw.), wie auch die Designparameter ($N_{Schwelle}$, $V_{Sort}$ ,Zeilen- und Spaltenanzahl der 2D-AKF $\Theta_{x,x}$ , usw.) beliebig geändert werden. Erst im zweiten Design-Schritt, der Berechnung der Kreuzkorrelierten, erfolgt eine Zusammenführung aller entworfener Kandidaten.

Wenn eine vorgegebene Zahl $P_{Auswahl}$ verschiedener Sprungmuster gesucht wird, dann sollte jedes einzelne Sprungmusterpaar möglichst orthogonal zueinander sein und die einzelnen 2D-Kreuzkorrelationsmatrizen (2D-KKF)

$$\theta_{x,y}(f,t) = \sum_{l=0}^{L-1}\sum_{m=0}^{M-1} x_{l,m} \cdot y_{l+f,m+t}$$

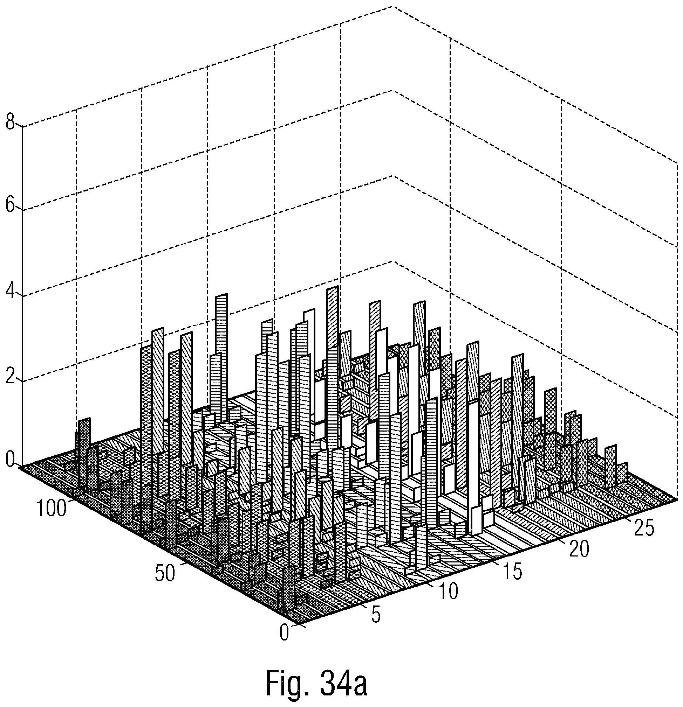

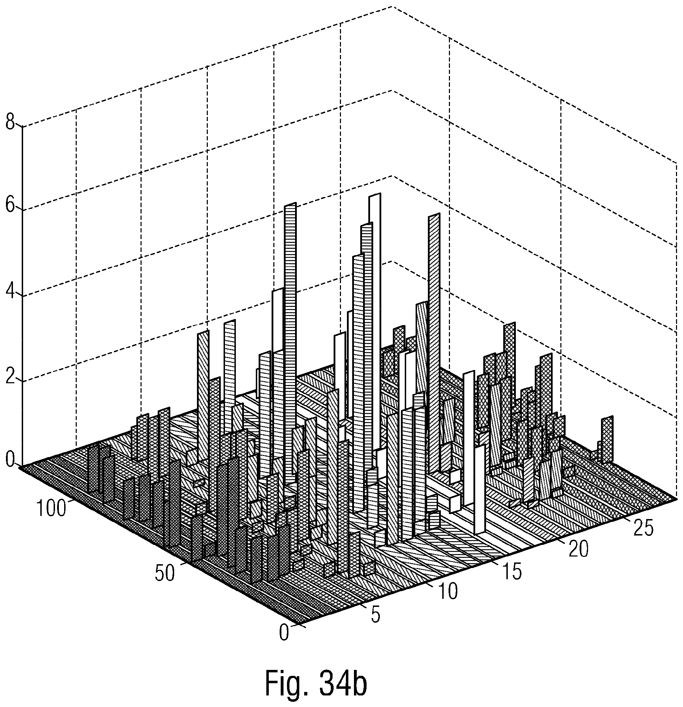

der beiden Sprungmuster mit den Matrizen **X** und **Y** möglichst geringe Maximal-Werte aufweisen, da hohe Maximal-Werte in der Funkübertragung potentiell einer großen Zahl von kollidierenden Bursts in einem einzelnen Frame entsprechen. Der Zeit-Index von $\Theta_{x,y}$ läuft unverändert in Schritten von $T_{Fframe}/T_A$ von - $T_{Frrame}$ bis $T_{Frame}$. Der KKF-Frequenz-Index $f$ erstreckt sich dagegen allgemein von $-(S_x+S_y)$ bis $+(S_x+S_y)$, da die beiden betrachteten Sprungmuster unterschiedliche Abweichungen in ihrem Frequenzfehlerverhalten (Oszillatorfrequenzabweichungen) aufweisen können. Fig. 34a und 34b zeigen wieder zwei 2D-KKF-Beispiele, einen günstigen Fall (Fig. 34a) sowie einen ungünstigen Fall (Fig. 34b).

In einem zweiten Design-Schritt können, ausgehend von den $P_{Optimal}$ vorab ausgewählten Sprungmuster-Kandidaten mit ihren zugehörigen 2D-Autokorrelationsfolgen $\Theta_{x,x}$ , sämtliche ($P_{Optimal}$ -1) x ($P_{Optimal}$) möglichen, i.d.R. unterschiedlichen Kreuzkorrelationsfolgen $\Theta_{x,y}$ berechnet werden. Bei jeder 2D-KKF können dann im Anschluss die Werte von $\Theta_{x,y}$ erneut in aufsteigender Reihenfolge sortiert (analog dem Prozedere bei der 2D-AKF), die Summe der letzten $v_{KKF}$ Elemente berechnet, *also* $SUM_{KKF} = sum(V_{Sort}(end- v_{KKF}+1:end))$ und in einer quadratischen ($P_{Optimal}$ x $P_{Optimal}$) Matrix $O_{vKKF}$ abgespeichert werden.

Wurden im ersten Design-Schritt die 2D-Autokorrelationsfolgen $\Theta_{x,x}$ von verschiedenen Sätzen von Sprungmustern berechnet, so werden die verschiedenen Kandidatensätze ($P1_{Optimal}$ und $P2_{Optimal}$) der Reihe nach abgearbeitet und es entsteht dann ebenfalls eine quadratischen Matrix $O_{vKKF}$ der Dimension (($P1_{Optimal} + P2_{Optimal}$) X ($P1_{Optimal} + P2_{Optimal}$) ), die sämtliche Kreuzkorrelationsfolgen $\Theta_{x,y}$ aller möglicher Kombinationen beinhaltet.

In einem dritten Schritt gilt es die $P_{Auswahl}$ verschiedenen Sprungmuster 140 zu suchen, welche untereinander die günstigsten 2D-KKF-Eigenschaften aufweisen, da diese mit einer vergleichsweise niedrigen maximalen Anzahl kollidierender Bursts in einem Frame korrelieren. Dazu können die Eigenschaften von (($P_{Auswahl}$ -1)· $P_{Auswahl}$)/2 verschiedenen 2D-KKF anhand der abgespeicherten Summen $SUM_{KKF}$ in der Matrix $O_{vKKF}$ ausgewertet werden. Diejenigen $P_{Auswahl}$ verschiedener Sprungmuster, deren Gesamtsumme über die (($P_{Auswahl}$ -1)· $P_{Auswahl}$)/2 verschiedenen Teilsummen $SUM_{KKF}$ aus $O_{vKKF}$ ein Minimum ergibt, ergibt die optimalen $P_{Auswahl}$ Sprungmuster. Da im Zuge einer umfangreichen Monte-Carlo-Simulation $P_{Auswahl} \ll P_{Optimal}$ anzustreben ist, existieren entsprechend dem Binomialkoeffizienten "$P_{Optimall}$ über $P_{Auswahl}$" verschiedene Kombinationsmöglichkeiten, ein Umfang, der in der Regel nicht mehr vollständig abzuarbeiten ist. Insofern können immer $P_{Auswahl}$ Sprungmuster neu und zufällig aus den $P_{Optimal}$ vorhandenen Sprungmuster ausgewählt werden Matlab-Befehle: F=randperm(1:$P_{Optimal}$) und $Pattern_{Auswahl}$ = F(1:$P_{Auswahl}$)) und immer jeweils die Gesamtsumme GS aus den verschiedenen Teilsummen $SUM_{KKF}$ berechnet werden. Bei entsprechend großem Stichprobenumfang ergibt sich ein lokales Minimum der Gesamtsumme, welches dann den gewünschten Satz von $P_{Auswahl}$ Sprungmuster liefert.

Wurden im ersten Design-Schritt die 2D-Autokorrelationsfolgen $\Theta_{x,x}$ von verschiedenen Sätzen von Sprungmustern berechnet, so erfolgt eine zufällige, ständig zu permutierende Auswahl von $P1_{Auswahl}$ aus den $P1_{Optimal}$ vorhandenen Sprungmustern von Satz 1, sowie eine zufällige, ständig permutierte Auswahl von $P2_{Auswahl}$ aus den $P2_{Optimal}$ vorhandenen Sprungmustern von Satz 2. Über diesen Sprungmuster-Satz [$P1_{Auswahl}$ , $P2_{Auswahl}$] wird dann immer die Gesamtsumme GS aus den verschiedenen Teilsummen $SUM_{KKF}$ berechnet und anschließend der Satz mit dem lokalen Minimum ausgewählt.

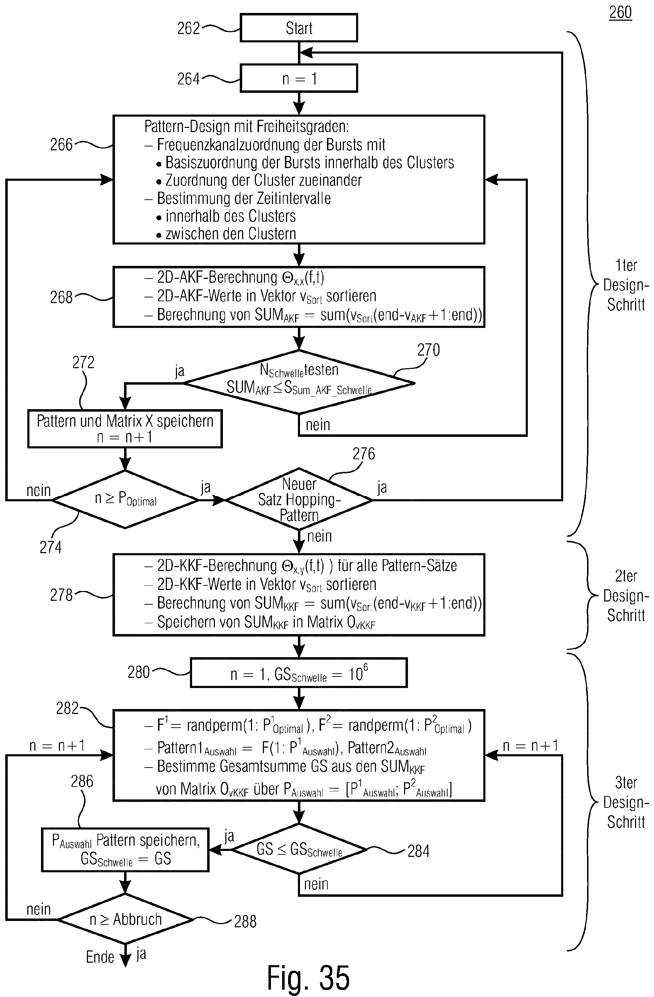

Der vollständige Design-Prozess, wie auch die Freiheitsgrade bei der Festlegung der Sprungmuster ist in Fig. 35 nochmals dargestellt. Die Möglichkeit mehrere Sätze von Sprungmustern gleichzeitig zu optimieren, ist berücksichtigt, aber nur angedeutet.

Im Detail zeigt Fig. 35 ein Flussdiagramm eines Verfahrens 260 zur Erzeugung von Sprungmustern, gemäß einem Ausführungsbeispiel.

In einem ersten Schritt 262 wird das Verfahren 260 gestartet.

In einem zweiten Schritt 264 wird n gleich eins gesetzt, wobei n eine Laufvariable ist.

In einem dritten Schritt 266 kann ein Sprungmuster zufällig erzeugt werden. Hierbei können die oben genannten Freiheitsgrade bezüglich der Frequenzkanalbelegung, wie zum Beispiel eine Frequenzkanalzuordnung der Burts mit Basiszuordnung der Bursts innerhalb des Clusters und eine Zuordnung der Cluster zueinander, berücksichtigt werden. Ferner können die oben genannten Freiheitsgrade bezüglich der Zeitintervalle, wie zum Beispiel eine Bestimmung der Zeitintervalle innerhalb des Clusters und zwischen den Clustern, berücksichtigt werden.

In einem vierten Schritt 268 kann die Autokorrelationsfunktion des zufällig erzeugten Sprungmusters berechnet werden. Beispielsweise kann eine 2D-AKF-Berechnung $\Theta_{x,x}(f,t)$ erfolgen. Ferner können die 2D-AKF-Werte in einem Vektor $v_{Sort}$ sortiert werden. Ferner kann eine Teilsumme über eine vorgegebene Anzahl von größten Amplitudenwerten der Autokorrelationsfunktion gebildet werden, $SUM_{AKF} = sum(v_{Sort}(end-v_{AKF}+1:end))$.

In einem fünften Schritt 270 kann ermittelt werden, ob das zufällig erzeugte Sprungmuster die vorgegebenen Autokorrelationseigenschaften aufweist. Beispielsweise kann ermittelt werden, ob die AKF-Nebenmaxima des Sprungmusters einen vorgegebenen minimalen Amplitudenschwellwert $N_{Schwelle} \geq C$ ($C$ ist die Cluster-Größe) nicht übersteigen, im Detail, kann ermittelt werden, ob die Summe $SUM_{AKF}$ dieser $v_{AKF}$ Elemente (Teilsumme) den Summenschwellwert von $S_{Sum\_AKF\_Schwelle}$ von beispielsweise $(v_{AKF}-1) \cdot C+N$ nicht übersteigt.

Wenn das Sprungmuster die vorgegebenen Autokorrelationseigenschaften nicht aufweist, dann wird der dritte Schritt wiederholt. Wenn das Sprungmuster die vorgegebenen Autokorrelationseigenschaften aufweist, dann wird das Verfahren fortgesetzt.

In einem sechsten Schritt 272 wird kann das Sprungmuster (mit den vorgegebenen Autokorrelationseigenschaften) und die Matrix **X** gespeichert werden. Ferner kann der Index n um eins erhöht werden, n = n+1.

In einem siebten Schritt 274 kann überprüft werden, ob eine optimale Anzahl $P_{Optimal}$ von Sprungmustern zur Verfügung steht.

Wenn keine eine optimale Anzahl $P_{Optimal}$ von Sprungmustern zur Verfügung steht, dann wird der dritte Schritt 266 wiederholt. Wenn eine optimale Anzahl $P_{Optimal}$ von Sprungmustern zur Verfügung steht, dann wird das Verfahren fortgesetzt.

In einem achten Schritt 276 wird ermittelt, ob ein neuer Satz von Sprungmustern erzeugt werden soll. Wenn ja, dann wird der zweite Schritt 264 wiederholt. Wenn nein, dann wird das Verfahren fortgesetzt. Ferner kann ermittelt werden, ob optional ein weiterer Satz von Sprungmustern für einen anderen Parametersatz, wie z.B. einem anderen Oszillatoroffset oder ein anderes Clusteraussehen mit verändertem zeitlichen Abständen bzw. Frequenzsprüngen, erzeugt werden soll.

In einem neunten Schritt 278 werden die Kreuzkorrelationsfunktionen zwischen den Sprungmustern mit vorgegebenen Autokorrelationseigenschaften berechnet. Beispielsweise kann eine 2D-KKF-Berechnung $\Theta_{x,y}(f,t)$ für alle Sprungmuster-Sätze erfolgen, die 2D-KKF-Werte in einem Vektor $v_{Sort}$ sortiert werden, die Teilsummen $SUM_{KKF} = sum(v_{Sort}(end-v_{KKF}+1:end))$ berechnet werden, und die Teilsummen $SUM_{KKF}$ in einer Matrix $O_{vKKF}$ gespeichert werden.

In einem zehnten Schritt 280 kann n gleich eins und $GS_{Schwelle}$ auf eine große Schwelle, wie zum Beispiel $10^6$ gesetzt werden.

In einem elften Schritt 282 werden $P1_{Auswahl}$ Sprungmuster neu und zufällig aus den $P1_{Optimal}$ vorhandenen ersten Sprungmustern und $P2_{Auswahl}$ Sprungmuster neu und zufällig aus den $P2_{Optimal}$ vorhandenen zweiten Sprungmustern ausgewählt. Hierzu werden $P1_{Optimal}$ verschiedene Zahlen in zufälliger Reihenfolge herausgewürfelt, $F^1 = randperm(1: P1_{Optimal})$ und $P2_{Optimal}$ verschiedene Zahlen in zufälliger Reihenfolge herausgewürfelt, $F^2 = randperm(1: P2_{Optimal})$. Hiervon können die ersten $P1_{Auswahl}$ davon ausgewählt werden, $Pattern1_{Auswahl} = F(1: P1_{Auswahl})$, und die ersten $P2_{Auswahl}$ davon ausgewählt werden, $Pattern2_{Auswahl} = F(1: P2_{Auswahl})$. Anhand des *Pattern1$_{Auswahl}$* und *Pattern2$_{Auswahl}$* kann dann die Gesamtsumme GS aus den einzelnen Teilsummen $SUM_{KKF}$, die in der Matrix $O_{vKKF}$ stehen, über $P_{Auswahl} = [P1_{Auswahl}; P2_{Auswahl}]$ berechnet werden.

In einem zwölften Schritt 282 kann ermittelt werden, ob $GS \leq GS_{Schwelle}$ ist. Wenn $GS \leq GS_{Schwelle}$ nicht erfüllt ist, dann wird n um eins erhöht, n = n+1, und der elfte Schritt 282 wiederholt. Wenn $GS \leq GS_{Schwelle}$ ist, dann wird die Schwelle $GS_{Schwelle}$ mit GS überschrieben und das Verfahren fortgesetzt.

In einem dreizehnten Schritt 286 kann das ausgewählte Sprungmuster gespeichert werden.

In einem vierzehnten Schritt 288 kann ermittelt werden ob, $n \geq$ Abbruch ist. Wenn $n \geq$ Abbruch nicht erfüllt ist, dann wird n um eins erhöht, n = n+1, und der elfte Schritt 282 wiederholt. Wenn $n \geq$ Abbruch erfüllt ist, dann ist das Verfahren beendet.

15.2 Erzeugung von Sprungmustern für Low Delay TSMA

In Abschnitt 15.1 wurden verschiedene Gruppen von TSMA (Hopping-) Pattern entworfen, die untereinander günstige 2D-Autokorrelationseigenschaften bzw. 2D-Kreuzkorrelationseigenschaften aufwiesen. Jedes Pattern bestand aus $N$ Bursts mit jeweils einer Zeitdauer $T_{Burst}$. Die N Bursts waren dabei fast willkürlich in Zeit- bzw. Frequenzrichtung angeordnet. Um dem Empfänger die Detektion der Pattern zu vereinfachen, wurden immer C aufeinanderfolgende Bursts zu einem sogenannten Cluster zusammengefasst, die bezüglich ihrer Zeit- und Frequenzabstände relativ zueinander identisch waren. Es galt $N/C \mid N \iff \exists k \in \mathbb{Z} : k \cdot N/C = N$. Die Gesamtzeitdauer eines Hopping-Pattern betrug $T_{Frame}$ was deutlich größer wie die eigentliche Zeitdauer der $N$ Bursts mit $N \cdot T_{Burst}$ war, da immer zwischen zwei benachbarten Bursts jeweils eine zufällige Sendepause mit einem zeitlichen Abstand von $\Delta T$ ($T_{A\_min} \leq \Delta T \leq T_{A\_max}$) eingefügt wurde, damit sich die Batterie erholen konnte. Die Vorgaben für den Mindestabstand $T_{A\_min}$ bzw. den Maximalabstand $T_{A\_max}$ galten sowohl innerhalb der Cluster wie auch für die Zeitabstände zwischen den Clustern.

Da der zeitliche Abstand $\Delta T$ zwischen zwei Bursts deutlich größer war wie die eigentliche Burstdauer $T_{Burst}$, wurden in Abschnitt 15.1 verschachtelte Wiederholungen zugelassen. Dabei werden die Bursts der beiden zu wiederholenden Pattern frameweise zeitlich ineinander verwoben. Damit die für beide Wiederholungen benötigte Sendezeit $T_{Frame} + T_{Rep}$ möglichst gering blieb, bot sich eine alternierende Verschachtelung an, wo sich die Bursts von Erst- und Zweitaussendung abwechselten.

Allen bisherigen Pattern war gemein, dass für die Aussendung der $N$ Bursts eine Zeitdauer von $T_{Frame}$ benötigt wurde.

Es gibt nun jedoch IoT-Anwendungen, wo ein Datenpaket in einer deutlich kürzeren Zeit wie mit der bisherigen Framedauer $T_{Frame}$ übertragen werden soll, dem sogenannten Low Delay Mode. Dafür ist ein einzelnes neues Pattern (erstes Sprungmuster 160), das sogenannte Low Delay Pattern zu entwerfen. Die Clusterstruktur mit den $N/C$ Clustern soll beibehalten werden und es kann eines der Grund-Cluster verwendet werden. Lediglich die Forderung, dass immer C aufeinander folgende Bursts zu einem sogenannten Cluster zusammengefasst werden, wird aufgegeben.

Gelöst wird das Problem dadurch, dass möglichst viele Cluster ineinander verschachtelt werden. Reicht der Abstand $\Delta T \geq T_{A\_min}$ nicht aus, alle $N/C$ Cluster innerhalb eines Grund-Clusters ineinander zu verschachteln, so wird ein neues Grund-Cluster angehängt, wo die restlichen Cluster erneut ineinander verschachtelt werden. Der neue zeitliche Mindestabstand $T_{A\_min\_LOW\_DELAY}$ fällt dadurch deutlich kleiner wie $T_{Frame}$ aus (ungefähr $T_{A\_min\_LOW\_DELAY} = T_{Frame}/4$).

Durch die Beibehaltung der Grundcluster, kann, bei Wahl der gleichen Synchronisationssequenz in den Bursts und der gleichen Datenrate, für beide Modi eine teilweise gemeinsame Detektion erfolgen. Der Empfänger führt die Symbolrückgewinnung, die Burst-Korrelation und die Clusterkorrelation gemeinsam durch. Nur die Telegramm-Korrelation muss durch die Verschachtelung separat durchgeführt werden. Hierdurch ergibt sich eine nicht unerhebliche Ersparnis in der Rechenleistung bei der Detektion von beiden Modi.

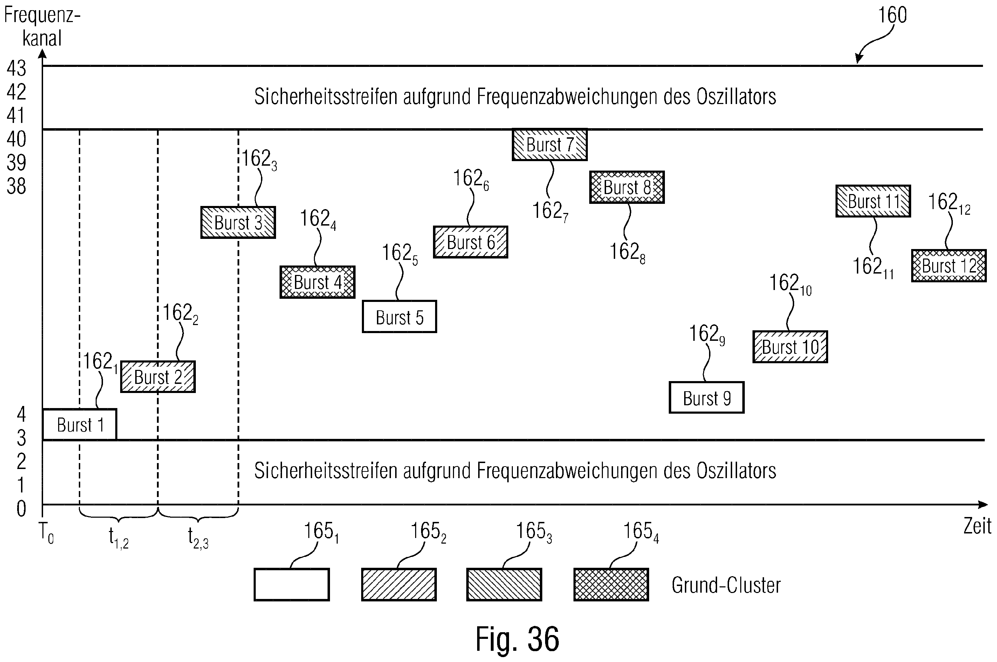

Fig. 36 zeigt in einem Diagramm eine beispielhafte Belegung eines Übertragungskanals bei der Übertragung der ersten Mehrzahl von Sub-Datenpaketen 162 entsprechend des ersten Sprungmusters 160 verteilt in der Frequenz und der Zeit. Mit anderen Worten, Fig. 36 zeigt das Ausführungsbeispiel einer Verschachtelung eines solchen Low-Delay Pattern.

Wie in Fig. 36 zu erkennen ist, kann das erste Sprungmuster 162 eine Mehrzahl von Sub-Sprungmustern (Cluster) $165_1$ bis $165_4$ aufweisen, die in der Zeit und/oder Frequenz verschobene Versionen voneinander sind, wobei die Mehrzahl von Sub-Sprungmustern (Cluster) $165_1$ bis $165_4$ derart ineinander verschachtelt sind, dass Sub-Datenpakete 162, die unterschiedlichen Sub-Sprungmustern (Clustern) $165_1$ bis $165_4$ zugeordnet sind, abwechselnd gesendet werden.

Beispielsweise können die Sub-Datenpakete $162_1$, $162_5$ und $162_9$ entsprechend des ersten Sub-Sprungmusters (Clusters) $165_1$ in der Zeit und Frequenz verteilt gesendet werden, wobei die Sub-Datenpakete $162_2$, $162_6$ und $162_{10}$ entsprechend des zweiten Sub-Sprungmusters (Clusters) $165_2$ in der Zeit und Frequenz verteilt gesendet werden können, wobei die Sub-Datenpakete $162_3$, $162_7$ und $162_{11}$ entsprechend des dritten Sub-Sprungmusters (Clusters) $165_3$ in der Zeit und Frequenz verteilt gesendet werden können, und wobei die Sub-Datenpakete $162_4$, $162_8$ und $162_{12}$ entsprechend des vierten Sub-Sprungmusters (Clusters) $165_4$ in der Zeit und Frequenz verteilt gesendet werden können.

Bei Ausführungsbeispielen können (Datensenderseitig) die Grundcluster ineinander verschachtelt werden.

Bei Ausführungsbeispielen kann Datenempfängerseitig die Detektion des normalen und des Low-Delay Modi bis zur Clusterkorrelation gemeinsam erfolgen.

## 15.3 Sprungmuster für Low Delay TSMA

Im Folgenden wird beispielhaft ein konkretes zweites Sprungmuster 160 (low delay Sprungmuster) definiert, welches beispielsweise zur Übertragung von Daten der ersten Klasse (Daten mit einer höheren Priorität und/oder höheren Anforderungen an eine maximale Übertragungsdauer) verwendet werden kann.

Bei Ausführungsbeispielen kann für die einzelne Übertagung von Daten mittels eines Sprungmusters ein Zeitsprungmuster, ein Frequenzsprungmuster oder eine Kombination aus einem Zeitsprungmuster und dem Frequenzsprungmuster verwendet werden.

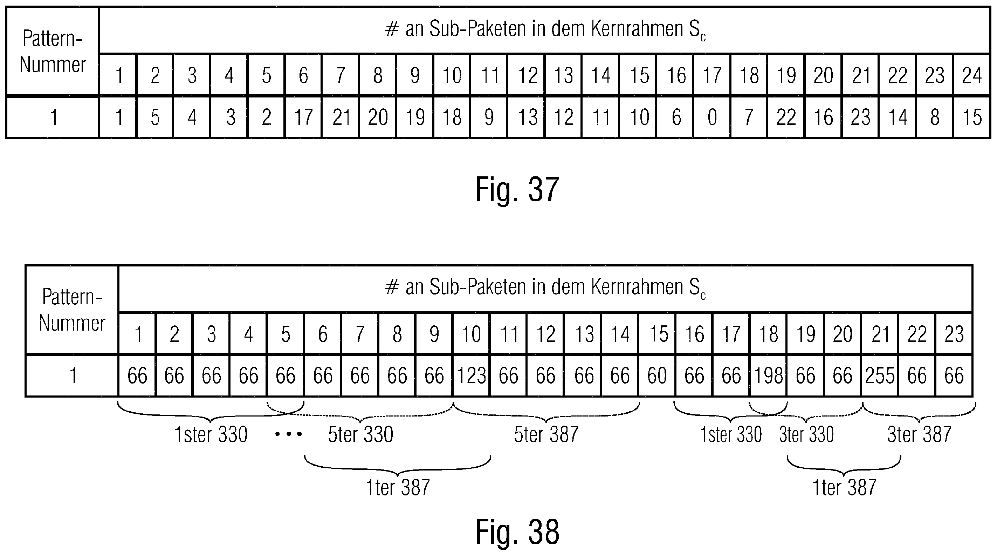

Das Frequenzsprungmuster kann das in der Tabelle der Fig. 37 gezeigte Frequenzsprungmuster mit 24 Sprüngen sein, wobei in der Tabelle die Zeile das Frequenzsprungmuster ist, wobei in der Tabelle jede Spalte ein Sprung des Frequenzsprungmusters ist, wobei in der Tabelle jede Zelle eine Sendefrequenz des jeweiligen Sprungs des Frequenzsprungmusters in Trägern von UCG_C0 bis UCG_C23 angibt.

Mit anderen Worten, Fig. 37 zeigt in einer Tabelle eine Definition eines Low-Delay Frequenzsprungmusters (Werte in Trägern von UCG_C0 bis UCG_C23) für eine Kristalltoleranz (Oszillatortoleranz) von +/- 20 ppm.

Das Zeitsprungmuster kann das in der Tabelle der Fig. 38 gezeigte Zeitsprungmuster mit 24 Sprüngen sein, wobei in der Tabelle der Fig. 38 die Zeile das Zeitsprungmuster ist, wobei in der Tabelle jede Spalte ein Sprung des Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in - vorzugsweise Vielfachen von - Symboldauern angibt.

Mit anderen Worten, Fig. 38 zeigt in einer Tabelle eine Definition eines Low-Delay Zeitsprungmusters (Werte in Mehrfachen von Symboldauern) für eine Kristalltoleranz (Oszillatortoleranz) von +/- 20 ppm. Dadurch, dass die Länge der 24 Sub-Datenpakete variieren kann, wird das Zeitsprungmuster zwischen den Mitten der 24 Sub-Datenpakete definiert.

Bei einer Kombination des Sprungmusters aus einem Zeitsprungmuster und einem Frequenzsprungmuster, kann das jeweilige Zeitsprungmuster und das jeweilige Frequenzsprungmuster in der jeweiligen Tabelle die gleiche Zeilennummer aufweisen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Ein erfindungsgemäß codiertes Signal, wie beispielsweise ein Audiosignal oder ein Videosignal oder ein Transportstromsignal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden

Das erfindungsgemäße kodierte Audiosignal kann auf einem digitalen Speichermedium gespeichert sein, oder kann auf einem Übertragungsmedium, wie beispielsweise einem drahtlosen Übertragungsmedium oder einem drahtgebundenen Übertragungsmedium, wie beispielsweise dem Internet, übertragen werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1.   Datensender (100), der ausgebildet ist, um Daten auf eine Mehrzahl von Sub-Datenpaketen aufgeteilt entsprechend eines Sprungmusters in der Zeit und Frequenz verteilt zu senden;

wobei das Sprungmuster eine Kombination aus einem Zeitsprungmuster und einem Frequenzsprungmuster ist;
wobei das Zeitsprungmuster das in der folgenden Tabelle genannte Zeitsprungmuster mit 24 Sprüngen ist:

| Nr. | # von Sub-Datenpaketen im Kernrahmen SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

wobei in der Tabelle die Zeile das Zeitsprungmuster ist, wobei in der Tabelle jede Spalte ein Sprung des Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in Symboldauern oder Vielfachen von Symboldauern angibt;
wobei das Frequenzsprungmuster das in der folgenden Tabelle genannte Frequenzsprungmuster mit 24 Sprüngen ist:

| | # von Sub-Datenpaketen im Kernrahmen SC | | | | | | | | | | | | | | | | | | | | | | | |
|-----|---|---|---|---|---|----|----|----|----|----|---|----|----|----|----|---|---|----|----|----|----|----|----|----|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 1 | 5 | 4 | 3 | 2 | 17 | 21 | 20 | 19 | 18 | 9 | 13 | 12 | 11 | 10 | 6 | 0 | 7 | 22 | 16 | 23 | 14 | 8 | 15 |

wobei in der Tabelle die Zeile das Frequenzsprungmuster ist, wobei in der Tabelle jede Spalte ein Sprung des Frequenzsprungmusters ist, wobei in der Tabelle jede Zelle eine Sendefrequenz des jeweiligen Sprungs des Frequenzsprungmusters in Trägern von UCG_C0 bis UCG_C23 angibt.

**2.** Datenempfänger (110), der ausgebildet ist, um Daten, die auf eine Mehrzahl von Sub-Datenpaketen aufgeteilt entsprechend eines Sprungmusters in der Zeit und Frequenz verteilt übertragen werden, zu empfangen;

wobei das Sprungmuster eine Kombination aus einem Zeitsprungmuster und einem Frequenzsprungmuster ist;
wobei das Zeitsprungmuster das in der folgenden Tabelle genannte Zeitsprungmuster mit 24 Sprüngen ist:

| | # von Sub-Datenpaketen im Kernrahmen SC | | | | | | | | | | | | | | | | | | | | | | |
|-----|----|----|----|----|----|----|----|----|----|-----|----|----|----|----|----|----|----|-----|----|----|-----|----|----|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

wobei in der Tabelle die Zeile das Zeitsprungmuster ist, wobei in der Tabelle jede Spalte ein Sprung des Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in Symboldauern oder Vielfachen von Symboldauern angibt;
wobei das Frequenzsprungmuster das in der folgenden Tabelle genannte Frequenzsprungmuster mit 24 Sprüngen ist:

| | # von Sub-Datenpaketen im Kernrahmen SC | | | | | | | | | | | | | | | | | | | | | | | |
|-----|---|---|---|---|---|----|----|----|----|----|---|----|----|----|----|---|---|----|----|----|----|----|----|----|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 1 | 5 | 4 | 3 | 2 | 17 | 21 | 20 | 19 | 18 | 9 | 13 | 12 | 11 | 10 | 6 | 0 | 7 | 22 | 16 | 23 | 14 | 8 | 15 |

wobei in der Tabelle die Zeile das Frequenzsprungmuster ist, wobei in der Tabelle jede Spalte ein Sprung des Frequenzsprungmusters ist, wobei in der Tabelle jede Zelle eine Sendefrequenz des jeweiligen Sprungs des Frequenzsprungmusters in Trägern von UCG_C0 bis UCG_C23 angibt.

**3.** Verfahren zum Senden von Daten, wobei das Verfahren aufweist:

Senden von Daten unter Verwendung eines Sprungmusters;
wobei das Sprungmuster eine Kombination aus einem Zeitsprungmuster und einem Frequenzsprungmuster ist;
wobei das Zeitsprungmuster das in der folgenden Tabelle genannte Zeitsprungmuster mit 24 Sprüngen ist:

| | # von Sub-Datenpaketen im Kernrahmen SC | | | | | | | | | | | | | | | | | | | | | | |
|-----|----|----|----|----|----|----|----|----|----|-----|----|----|----|----|----|----|----|-----|----|----|-----|----|----|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

wobei in der Tabelle die Zeile das Zeitsprungmuster ist, wobei in der Tabelle jede Spalte ein Sprung des Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in Symboldauern oder Vielfachen von Symboldauern angibt;
wobei das Frequenzsprungmuster das in der folgenden Tabelle genannte Frequenzsprungmuster mit 24 Sprüngen ist:

| Nr. | # von Sub-Datenpaketen im Kernrahmen SC | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 1 | 5 | 4 | 3 | 2 | 17 | 21 | 20 | 19 | 18 | 9 | 13 | 12 | 11 | 10 | 6 | 0 | 7 | 22 | 16 | 23 | 14 | 8 | 15 |

wobei in der Tabelle die Zeile das Frequenzsprungmuster ist, wobei in der Tabelle jede Spalte ein Sprung des Frequenzsprungmusters ist, wobei in der Tabelle jede Zelle eine Sendefrequenz des jeweiligen Sprungs des Frequenzsprungmusters in Trägern von UCG_C0 bis UCG_C23 angibt.

4. Verfahren zum Empfangen von Daten, wobei das Verfahren aufweist:

Empfangen von Daten unter Verwendung eines Sprungmusters;
wobei das Sprungmuster eine Kombination aus einem Zeitsprungmuster und einem Frequenzsprungmuster ist;
wobei das Zeitsprungmuster das in der folgenden Tabelle genannte Zeitsprungmuster mit 24 Sprüngen ist:

| Nr. | # von Sub-Datenpaketen im Kernrahmen SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

wobei in der Tabelle die Zeile das Zeitsprungmuster ist, wobei in der Tabelle jede Spalte ein Sprung des Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in Symboldauern oder Vielfachen von Symboldauern angibt;
wobei das Frequenzsprungmuster das in der folgenden Tabelle genannte Frequenzsprungmuster mit 24 Sprüngen ist:

| Nr. | # von Sub-Datenpaketen im Kernrahmen SC | | | | | | | | | | | | | | | | | | | | | | | |
|---|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 1 | 5 | 4 | 3 | 2 | 17 | 21 | 20 | 19 | 18 | 9 | 13 | 12 | 11 | 10 | 6 | 0 | 7 | 22 | 16 | 23 | 14 | 8 | 15 |

wobei in der Tabelle die Zeile das Frequenzsprungmuster ist, wobei in der Tabelle jede Spalte ein Sprung des Frequenzsprungmusters ist, wobei in der Tabelle jede Zelle eine Sendefrequenz des jeweiligen Sprungs des Frequenzsprungmusters in Trägern von UCG_C0 bis UCG_C23 angibt.

**Claims**

1. A data transmitter (100) configured to transmit data divided onto a plurality of sub-data packets, distributed in time and/or frequency according to a hopping pattern;

wherein the hopping pattern is a combination of a time hopping pattern and a frequency hopping pattern;
wherein the time hopping pattern is the time hopping pattern with 24 hops indicated in the following table:

| No. | # of sub-data packets in the core frame SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

wherein the line in the table is the time hopping pattern, wherein each column in the table is a hop of the time hopping pattern starting from a second hop so that each time hopping pattern comprises 24 hops, wherein each cell in the table indicates a temporal interval of a reference point of the respective hop to a same reference point of an immediately subsequent hop in symbol durations or multiples of symbol durations;
wherein the frequency hopping pattern is the frequency hopping pattern with 24 hops indicated in the following table:

| # of sub-data packets in the core frame SC | | | | | | | | | | | | | | | | | | | | | | | | |
|---|---|---|---|---|---|---|---|---|---|---|---|---|---|---|---|---|---|---|---|---|---|---|---|---|
| No. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 1 | 5 | 4 | 3 | 2 | 17 | 21 | 20 | 19 | 18 | 9 | 13 | 12 | 11 | 10 | 6 | 0 | 7 | 22 | 16 | 23 | 14 | 8 | 15 |

wherein the line in the table is the frequency hopping pattern, wherein each column in the table is a hop of the frequency hopping pattern, wherein each cell in the table indicates a transmission frequency of the respective hop of the frequency hopping pattern in carriers of UCG_C0 to UCG_C23.

2. A data receiver (110) configured to receive data transferred divided onto a plurality of sub-data packets, distributed in time and/or frequency according to a hopping pattern;

wherein the hopping pattern is a combination of a time hopping pattern and a frequency hopping pattern;
wherein the time hopping pattern is the time hopping pattern with 24 hops indicated in the following table:

| # of sub-data packets in the core frame SC | | | | | | | | | | | | | | | | | | | | | | |
|---|---|---|---|---|---|---|---|---|---|---|---|---|---|---|---|---|---|---|---|---|---|---|---|
| No. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

wherein the line in the table is the time hopping pattern, wherein each column in the table is a hop of the time hopping pattern starting from a second hop so that each time hopping pattern comprises 24 hops, wherein each cell in the table indicates a temporal interval of a reference point of the respective hop to a same reference point of an immediately subsequent hop in symbol durations or multiples of symbol durations;
wherein the frequency hopping pattern is the frequency hopping pattern with 24 hops indicated in the following table:

| # of sub-data packets in the core frame SC | | | | | | | | | | | | | | | | | | | | | | | | |
|---|---|---|---|---|---|---|---|---|---|---|---|---|---|---|---|---|---|---|---|---|---|---|---|---|---|
| No. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 1 | 5 | 4 | 3 | 2 | 17 | 21 | 20 | 19 | 18 | 9 | 13 | 12 | 11 | 10 | 6 | 0 | 7 | 22 | 16 | 23 | 14 | 8 | 15 |

wherein the line in the table is the frequency hopping pattern, wherein each column in the table is a hop of the frequency hopping pattern, wherein each cell in the table indicates a transmission frequency of the respective hop of the frequency hopping pattern in carriers of UCG_C0 to UCG_C23.

3. A method of transmitting data, the method comprising:

transmitting data using a hopping pattern;
wherein the hopping pattern is a combination of a time hopping pattern and a frequency hopping pattern,
wherein the time hopping pattern is the time hopping pattern with 24 hops indicated in the following table:

| # of sub-data packets in the core frame SC | | | | | | | | | | | | | | | | | | | | | | |
|---|---|---|---|---|---|---|---|---|---|---|---|---|---|---|---|---|---|---|---|---|---|---|---|
| No. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

wherein the line in the table is the time hopping pattern, wherein each column in the table is a hop of the time hopping pattern starting from a second hop so that each time hopping pattern comprises 24 hops, wherein each cell in the table indicates a temporal interval of a reference point of the respective hop to a same reference point of an immediately subsequent hop in symbol durations or multiples of symbol durations;
wherein the frequency hopping pattern is the frequency hopping pattern with 24 hops indicated in the following table:

| # of sub-data packets in the core frame SC | | | | | | | | | | | | | | | | | | | | | | | | |
|------|---|---|---|---|---|---|---|---|---|----|----|----|----|----|----|----|----|----|----|----|----|----|----|----|
| No. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 1 | 5 | 4 | 3 | 2 | 17 | 21 | 20 | 19 | 18 | 9 | 13 | 12 | 11 | 10 | 6 | 0 | 7 | 22 | 16 | 23 | 14 | 8 | 15 |

wherein the line in the table is the frequency hopping pattern, wherein each column in the table is a hop of the frequency hopping pattern, wherein each cell in the table indicates a transmission frequency of the respective hop of the frequency hopping pattern in carriers of UCG_C0 to UCG_C23.

4.   A method of receiving data, the method comprising:

receiving data using a hopping pattern;
wherein the hopping pattern is a combination of a time hopping pattern and a frequency hopping pattern, wherein the time hopping pattern is the time hopping pattern with 24 hops indicated in the following table:

| # of sub-data packets in the core frame SC | | | | | | | | | | | | | | | | | | | | | | | |
|------|---|---|---|---|---|---|---|---|---|-----|----|----|----|----|----|----|----|-----|----|----|-----|----|----|
| No. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

wherein the line in the table is the time hopping pattern, wherein each column in the table is a hop of the time hopping pattern starting from a second hop so that each time hopping pattern comprises 24 hops, wherein each cell in the table indicates a temporal interval of a reference point of the respective hop to a same reference point of an immediately subsequent hop in symbol durations or multiples of symbol durations;
wherein the frequency hopping pattern is the frequency hopping pattern with 24 hops indicated in the following table:

| # of sub-data packets in the core frame SC | | | | | | | | | | | | | | | | | | | | | | | | |
|------|---|---|---|---|---|---|---|---|---|----|----|----|----|----|----|----|----|----|----|----|----|----|----|----|
| No. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 1 | 5 | 4 | 3 | 2 | 17 | 21 | 20 | 19 | 18 | 9 | 13 | 12 | 11 | 10 | 6 | 0 | 7 | 22 | 16 | 23 | 14 | 8 | 15 |

wherein the line in the table is the frequency hopping pattern, wherein each column in the table is a hop of the frequency hopping pattern, wherein each cell in the table indicates a transmission frequency of the respective hop of the frequency hopping pattern in carriers of UCG_C0 to UCG_C23.

**Revendications**

1.   Émetteur de données (100), qui est conçu pour émettre de manière divisée des donnés sur une pluralité de sous-paquets de données divisés conformément à un motif de saut en temps et en fréquence ;

dans lequel le motif de saut est une combinaison d'un motif de saut temporel et d'un motif de saut de fréquence ;
dans lequel le motif de saut temporel est le motif de saut temporel désigné dans le tableau suivant avec 24 sauts :

| N° de sous-paquets de données dans la trame centrale SC | | | | | | | | | | | | | | | | | | | | | | | |
|------|---|---|---|---|---|---|---|---|---|-----|----|----|----|----|----|----|----|-----|----|----|-----|----|----|
| No. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

dans lequel dans le tableau la ligne est un motif de saut temporel, dans lequel dans le tableau chaque colonne est un saut du motif de saut temporel commençant à partir d'un deuxième saut de telle sorte que chaque motif de saut temporel présente 24 sauts, dans lequel dans le tableau chaque cellule indique une distance temporelle d'un point de référence du saut respectif par rapport à un point de référence identique d'un saut immédiatement suivant en durées de symbole ou multiples de durées de symbole ;
dans lequel le motif de saut de fréquence est le motif de saut de fréquence désigné dans le tableau suivant avec 24 sauts :

| No. | N° de sous-paquets de données dans la trame centrale SC | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 1 | 5 | 4 | 3 | 2 | 17 | 21 | 20 | 19 | 18 | 9 | 13 | 12 | 11 | 10 | 6 | 0 | 7 | 22 | 16 | 23 | 14 | 8 | 15 |

dans lequel dans le tableau la ligne est le motif de saut de fréquence, dans lequel dans le tableau chaque colonne est un saut du motif de saut de fréquence, dans lequel dans le tableau chaque cellule indique une fréquence d'émission du saut respectif du motif de saut de fréquence dans des porteuses de UCG_C0 à UCG_C23.

2. Récepteur de données (110), qui est conçu pour recevoir des données qui sont transmises de manière divisée sur une pluralité de sous-paquets de données divisés conformément à un motif de saut en temps et en fréquence ;

dans lequel le motif de saut est une combinaison d'un motif de saut temporel et d'un motif de saut de fréquence ;
dans lequel le motif de saut temporel est le motif de saut temporel désigné dans le tableau suivant avec 24 sauts :

| No. | N° de sous-paquets de données dans la trame centrale SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

dans lequel dans le tableau la ligne est un motif de saut temporel, dans lequel dans le tableau chaque colonne est un saut du motif de saut temporel commençant à partir d'un deuxième saut de telle sorte que chaque motif de saut temporel présente 24 sauts, dans lequel dans le tableau chaque cellule indique une distance temporelle d'un point de référence du saut respectif par rapport à un point de référence identique d'un saut immédiatement suivant en durées de symbole ou multiples de durées de symbole ;
dans lequel le motif de saut de fréquence est le motif de saut de fréquence désigné dans le tableau suivant avec 24 sauts :

| No. | N° de sous-paquets de données dans la trame centrale SC | | | | | | | | | | | | | | | | | | | | | | | |
|---|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 1 | 5 | 4 | 3 | 2 | 17 | 21 | 20 | 19 | 18 | 9 | 13 | 12 | 11 | 10 | 6 | 0 | 7 | 22 | 16 | 23 | 14 | 8 | 15 |

dans lequel dans le tableau la ligne est le motif de saut de fréquence, dans lequel dans le tableau chaque colonne est un saut du motif de saut de fréquence, dans lequel dans le tableau chaque cellule indique une fréquence d'émission du saut respectif du motif de saut de fréquence dans des porteuses de UCG_C0 à UCG_C23.

3. Procédé destiné à émettre des données, dans lequel le procédé présente :

émettre des données en utilisant un motif de saut ;
dans lequel le motif de saut est une combinaison d'un motif de saut temporel et d'un motif de saut de fréquence ;
dans lequel le motif de saut temporel est le motif de saut temporel désigné dans le tableau suivant avec 24 sauts :

| No. | N° de sous-paquets de données dans la trame centrale SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

dans lequel dans le tableau la ligne est un motif de saut temporel, dans lequel dans le tableau chaque colonne est un saut du motif de saut temporel commençant à partir d'un deuxième saut de telle sorte que chaque motif de saut temporel présente 24 sauts, dans lequel dans le tableau chaque cellule indique une distance temporelle d'un point de référence du saut respectif par rapport à un point de référence identique d'un saut immédiatement suivant en durées de symbole ou multiples de durées de symbole ;

dans lequel le motif de saut de fréquence est le motif de saut de fréquence désigné dans le tableau suivant avec 24 sauts :

| No. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|
| N° de sous-paquets de données dans la trame centrale SC |
| 1 | 1 | 5 | 4 | 3 | 2 | 17 | 21 | 20 | 19 | 18 | 9 | 13 | 12 | 11 | 10 | 6 | 0 | 7 | 22 | 16 | 23 | 14 | 8 | 15 |

dans lequel dans le tableau la ligne est le motif de saut de fréquence, dans lequel dans le tableau chaque colonne est un saut du motif de saut de fréquence, dans lequel dans le tableau chaque cellule indique une fréquence d'émission du saut respectif du motif de saut de fréquence dans des porteuses de UCG_C0 à UCG_C23.

4. Procédé destiné à recevoir des données, dans lequel le procédé présente :

recevoir des données en utilisant un motif de saut ;
dans lequel le motif de saut est une combinaison d'un motif de saut temporel et d'un motif de saut de fréquence ;
dans lequel le motif de saut temporel est le motif de saut temporel désigné dans le tableau suivant avec 24 sauts :

| No. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|---|---|---|---|---|---|---|---|---|---|---|---|---|
| N° de sous-paquets de données dans la trame centrale SC |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

dans lequel dans le tableau la ligne est le motif de saut temporel, dans lequel dans le tableau chaque colonne est un saut du motif de saut temporel commençant à partir d'un deuxième saut de telle sorte que chaque motif de saut temporel présente 24 sauts, dans lequel dans le tableau chaque cellule indique une distance temporelle d'un point de référence du saut respectif par rapport à un point de référence identique d'un saut immédiatement suivant en durées de symbole ou multiples de durées de symbole ;
dans lequel le motif de saut de fréquence est le motif de saut de fréquence désigné dans le tableau suivant avec 24 sauts :

| No. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|
| N° de sous-paquets de données dans la trame centrale SC |
| 1 | 1 | 5 | 4 | 3 | 2 | 17 | 21 | 20 | 19 | 18 | 9 | 13 | 12 | 11 | 10 | 6 | 0 | 7 | 22 | 16 | 23 | 14 | 8 | 15 |

dans lequel dans le tableau la ligne est le motif de saut de fréquence, dans lequel dans le tableau chaque colonne est un saut du motif de saut de fréquence, dans lequel dans le tableau chaque cellule indique une fréquence d'émission du saut respectif du motif de saut de fréquence dans des porteuses de UCG_C0 à UCG_C23.

Fig. 1

EP 3 707 839 B1

Fig. 2

Fig. 3a

normaler Modus

Fig. 3b

Low-Delay-Modus

EP 3 707 839 B1

Fig. 4a

normaler Modus

Fig. 4b

Low-Delay-Modus

EP 3 707 839 B1

Fig. 5

Fig. 6

162 162 162 162 162 162 162

Sub-Paket

Low Delay Telegramm

160

Standard Telegramm

160

Frequenz

Zeit

**Fig. 7**

160

162 162 162 162

162 162 162 162 162

Sub-Paket

1/2 Low Delay Telegramm

1/2 Low Delay Telegramm

182

180

Frequenz

Zeit

**Fig. 8**

Fig. 9

Fig. 10

Fig. 11

EP 3 707 839 B1

Fig. 12

EP 3 707 839 B1

Fig. 13

160

162

162

162

Sub-Paket

Multi-Carrier-Mode

162

162

162

Frequenz

Telegramm

Zeit

## Fig. 14

160

162

162

162

Sub-Paket

Multi-Carrier-Mode

162

162

162

Frequenz

Telegramm

Zeit

## Fig. 15

160

150

162

162

162

162

Frequenz

Sub-Paket

klassisches
Telegramm

Telegramm-Splitting-Telegramm

Zeit

## Fig. 16

160

150

162

162

162

151

162

Frequenz

Sub-Paket

klassisches
Telegramm

verschachteltes klassisches und Telegramm-Splitting-Telegramm

Zeit

## Fig. 17

160

150

162

162

162

162

Frequenz

Sub-Paket

klassisches
Telegramm

Ack

Telegramm-Splitting-Telegramm

Zeit

## Fig. 18

Fig. 19a

Fig. 19b

Fig. 20

160

162                    162    162

162

162

Frequenz

Polynom 0        Polynom 1        Polynom 2

163_1            163_2            163_3

Zeit

## Fig. 21

160

162      162    162    162

162

162

162

162

Frequenz

Polynom 0        Polynom 1 + 2

163_1            163_2

Zeit

## Fig. 22

162

162

160

162

162

162

162

Frequenz

Sub-Paket

Alarm + ID

weitere Informationen an den Alarm

163_1

163_2

Zeit

## Fig. 23

160

162

162

162

162

162

162

162

162

Frequenz

Sub-Paket

normale Nachricht

Prioritätsnachricht

163_2

163_1

Zeit

Die normale Nachricht
enthält einen Identifier
für das Sprungmuster
in der Prioritätsnachricht

Prioritätsnachricht mit
Sprungmuster, das von dem
Identifier in der normalen
Nachricht abgeleitet ist

## Fig. 24

Fig. 25

Fig. 26

Fig. 27

Fig. 28

200

Zufälliges Erzeugen einer Mehrzahl von Sprungmustern, wobei die Sprungmuster zumindest zwei Sprünge aufweisen, die in der Frequenz und Zeit verteilt sind ~202

Auswählen der Sprungmuster aus der Mehrzahl von Sprungmustern, dessen Autokorrelationsfunktionen vorgegebene Autokorrelationseigenschaften aufweisen ~204

Sprungmuster mit vorgegebenen Autokorrelationseigenschaften

Berechnen von Kreuzkorrelationsfunktionen zwischen den Sprungmustern mit vorgegebenen Autokorrelationseigenschaften ~206 (optional)

Auswählen der Sprungmuster aus den Sprungmustern mit vorgegebenen Autokorrelationseigenschaften, dessen Kreuzkorrelationsfunktionen vorgegebene Kreuzkorrelationseigenschaften aufweisen ~208 (optional)

Sprungmuster mit vorgegebenen Autokorrelationseigenschaften und vorgegebenen Kreuzkorrelationseigenschaften

Fig. 29

210

Zufälliges Erzeugen einer Mehrzahl von Sprungmustern
für den ersten Satz von Sprungmustern und einer Mehrzahl
von Sprungmustern für den zweiten Satz von Sprungmustern,
wobei die Sprungmuster zumindest zwei Sprünge aufweisen,
die in der Frequenz und Zeit verteilt sind

212

Auswählen der Sprungmuster aus der Mehrzahl von
Sprungmustern für den ersten Satz von Sprungmustern, dessen
Autokorrelationsfunktionen vorgegebene Autokorrelationseigenschaften aufweisen, und Auswählen der Sprungmuster aus
der Mehrzahl von Sprungmustern für den zweiten Satz von
Sprungmustern, dessen Autokorrelationsfunktionen vorgegebene
Autokorrelationseigenschaften aufweisen

214

Sprungmuster mit vorgegebenen
Autokorrelationseigenschaften
für den ersten und zweiten Satz
von Sprungmustern

Berechnen von Kreuzkorrelationsfunktionen zwischen den
Sprungmustern mit vorgegebenen Autokorrelationseigenschaften
des ersten Satzes von Sprungmustern und des zweiten Satzes
von Sprungmustern; und

216
(optional)

Auswählen der Sprungmuster aus den Sprungmustern mit
vorgegebenen Autokorrelationseigenschaften für den ersten Satz
von Sprungmustern und den zweiten Satz von Sprungmustern,
dessen Kreuzkorrelationsfunktionen vorgegebene
Kreuzkorrelationseigenschaften aufweisen

218
(optional)

Sprungmuster mit vorgegebenen
Autokorrelationseigenschaften und
Kreuzkorrelationseigenschaften für
den ersten und zweiten Satz
von Sprungmustern

Fig. 30

Fig. 31a

Fig. 31b

100 kHz

100 kHz

Kanal A

Kanal B

iFRAME n − 1

iFRAME 0

iFRAME 0

140_1

140_2

150_1

150_2

$f_{KanalA}$

$f_{KanalB}$

Zeit

Frequenz

Fig. 32

Fig. 33a

Fig. 33b

Fig. 34a

Fig. 34b

<u>260</u>

262 — Start

264 — n = 1

266 — Pattern-Design mit Freiheitsgraden:
– Frequenzkanalzuordnung der Bursts mit
  • Basiszuordnung der Bursts innerhalb des Clusters
  • Zuordnung der Cluster zueinander
– Bestimmung der Zeitintervalle
  • innerhalb des Clusters
  • zwischen den Clustern

268 — – 2D-AKF-Berechnung $\Theta_{x,x}(f,t)$
– 2D-AKF-Werte in Vektor $v_{Sort}$ sortieren
– Berechnung von $SUM_{AKF} = sum(v_{Sort}(end-v_{AKF}+1:end))$

272

270 — $N_{Schwelle}$testen
$SUM_{AKF} \leq S_{Sum\_AKF\_Schwelle}$

ja

nein

Pattern und Matrix X speichern
n = n+1

276

nein ← 274 — $n \geq P_{Optimal}$ ja → Neuer Satz Hopping-Pattern — ja

nein

278 — – 2D-KKF-Berechnung $\Theta_{x,y}(f,t)$ ) für alle Pattern-Sätze
– 2D-KKF-Werte in Vektor $v_{Sort}$ sortieren
– Berechnung von $SUM_{KKF} = sum(v_{Sort}(end-v_{KKF}+1:end))$
– Speichern von $SUM_{KKF}$ in Matrix $O_{vKKF}$

280 — $n = 1, GS_{Schwelle} = 10^6$

282 —
n = n+1 → – $F^1 = randperm(1: P^1_{Optimal})$, $F^2 = randperm(1: P^2_{Optimal})$
– $Pattern1_{Auswahl} = F(1: P^1_{Auswahl})$, $Pattern2_{Auswahl}$
– Bestimme Gesamtsumme GS aus den $SUM_{KKF}$
  von Matrix $O_{vKKF}$ über $P_{Auswahl} = [P^1_{Auswahl}; P^2_{Auswahl}]$ ← n = n+1

286 —
$P_{Auswahl}$ Pattern speichern,
$GS_{Schwelle} = GS$ ← ja — $GS \leq GS_{Schwelle}$ — 284

nein

nein ← $n \geq Abbruch$ — 288

Ende ↓ ja

1ter Design-Schritt

2ter Design-Schritt

3ter Design-Schritt

Fig. 35

Fig. 36

**Fig. 37**

| Pattern-Nummer | # an Sub-Paketen in dem Kernrahmen $S_c$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 1 | 5 | 4 | 3 | 2 | 17 | 21 | 20 | 19 | 18 | 9 | 11 | 12 | 13 | 10 | 6 | 0 | 7 | 22 | 16 | 23 | 14 | 8 | 15 |

**Fig. 38**

| Pattern-Nummer | # an Sub-Paketen in dem Kernrahmen $S_c$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 66 | 66 | 66 | 66 | 66 | 66 | 66 | 66 | 66 | 123 | 66 | 66 | 66 | 66 | 60 | 66 | 66 | 198 | 66 | 66 | 255 | 66 | 66 |

1ster 330 · · · 5ter 330 · 1ster 387 · 5ter 387 · 1ster 330 · 3ter 330 · 3ter 387 · 1ter 387

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2751526 B1
- WO 2015128385 A1
- WO 2017017257 A1
- WO 2017167366 A1
- DE 10164665 A1
- WO 2017167366 A

**In der Beschreibung aufgeführte Nicht-Patentliteratur**

- **G. KILIAN** ; **H. PETKOV** ; **R. PSIUK** ; **H. LIESKE** ; **F. BEER** ; **J. ROBERT** ; **A. HEUBERGER**. Improved coverage for low-power telemetry systems using telegram splitting. *Proceedings of 2013 European Conference on Smart Objects, Systems and Technologies (SmartSysTech)*, 2013

- **G. KILIAN** ; **M. BREILING** ; **H. H. PETKOV** ; **H. LIESKE** ; **F. BEER** ; **J. ROBERT** ; **A. HEUBERGER**. Increasing Transmission Reliability for Telemetry Systems Using Telegram Splitting. *IEEE Transactions on Communications*, March 2015, vol. 63 (3), 949-961